# EUROPEAN PATENT APPLICATION

(11) **EP 4 822 546 A1**
(43) Date of publication of application: **14.10.2026**
(21) Application number: 25226556.6
(22) Date of filing: 22.12.2025
(51) Int. Cl.: G06F 11/3668, G06F 11/3698

(54) **AI-DRIVEN SYSTEM AND METHODS FOR AUTONOMOUS AND SEMI-AUTONOMOUS GENERATION AND EXECUTION OF AUTOMATED TEST SCRIPTS FROM USER STORIES**

(30) Priority: 11.04.2025 US 202519177315
(71) Applicant: UiPath, Inc., New York NY 10017 (US)
(72) Inventor: STOCKER, Thomas, New York, 10017 (US); PHILIPP, Ingo, New York, 10017 (US); STANESCU, Alexandru Alvin, New York, 10017 (US)
(74) Representative: Ungria López, Javier

(57) **Abstract**

Systems and methods are provided for autonomously and semi-autonomously generating and executing automated test scripts from user stories using an Al-driven architecture. An AI agent receives user stories and associated acceptance criteria from one or more data sources. A reasoning engine processes the user stories to extract test scenarios and generates structured representations of the scenarios. An actuator module translates the scenarios into executable automated test scripts and autonomously integrates the scripts into continuous integration and delivery (CI/CD) pipelines. The actuator may further provision test environments, execute the automated test scripts, and collect telemetry, including execution results and system metrics. Optional embodiments include multi-agent configurations, replay mechanisms, escalation modules, and sandbox environments for semi-autonomous operation. The system supports deployment across cloud-native, on-premises, and hybrid infrastructures, providing a scalable solution for Al-driven continuous testing in enterprise software development environments.

## Description

### FIELD

The present invention relates generally to the field of software automation and artificial intelligence (Al). More particularly, the invention pertains to systems and methods for autonomously and semi-autonomously generating and executing automated test scripts from user stories using Al agents. The invention further relates to the application of natural language processing (NLP), machine learning models, and distributed computing architectures to automate the testing and validation of software systems within continuous integration and delivery (CI/CD) pipelines and enterprise DevOps environments.

### BACKGROUND

Al agents, also known as intelligent agents, are advanced digital tools designed to function autonomously by following high-level goals rather than specific step-by-step instructions. These agents leverage technologies, such as generative Al and large language models (LLMs), to interpret natural language, make real-time decisions, and take immediate actions. Their ability to adapt to changing circumstances makes them particularly valuable in dynamic environments where flexibility is essential.

A key aspect of Al agents is their capability to process and analyze vast amounts of data through various components. The first of these components is the sensor, which serves as the agent's means of perceiving the world. Sensors collect both structured data, such as numerical values and dates, and unstructured data, including text and images. These inputs may come from multiple sources, such as knowledge bases, APIs, or real-time monitoring systems, ensuring that the Al agent has access to comprehensive information.

Once the data is gathered, the reasoning engine acts as the core intelligence of the Al agent. This component employs machine learning algorithms to process the collected information, recognize patterns, generate actionable insights, and make predictions. The reasoning engine functions much like the human brain, enabling the agent to make informed decisions based on the data it receives, improving its ability to respond intelligently to various tasks and challenges.

After processing the information and determining an appropriate course of action, the Al agent utilizes actuators to execute its decisions. Actuators function as the "hands" of the Al agent, carrying out tasks that range from sending personalized messages and updating dashboards to processing transactions across multiple platforms. In many cases, robotic process automation (RPA) tools serve as actuators, allowing Al agents to interact seamlessly with existing digital systems and perform their assigned functions efficiently.

Al agents operate within an agentic ecosystem where they collaborate with both human employees and robotic systems. Al agents are particularly well-suited for complex, goal-oriented tasks that require adaptability and decision-making, while software robots excel at handling repetitive, structured processes. This division of labor enables businesses to optimize productivity by allowing Al agents to focus on high-level cognitive tasks while delegating routine work to automated systems.

The implementation of Al agents provides numerous advantages for businesses seeking to enhance efficiency and productivity. By autonomously managing complex and decision-intensive tasks, these agents free up human employees to concentrate on strategic planning, creative problem-solving, and fostering customer relationships. The automation of labor-intensive processes ensures that employees can dedicate their time to activities that require human ingenuity and critical thinking.

Beyond improving operational efficiency, Al agents also enhance customer experiences by enabling highly personalized and responsive interactions. These agents can infer customer intent, anticipate needs, and deliver tailored solutions in real time. Their ability to operate continuously ensures that customers receive consistent and high-quality support, regardless of the time or volume of inquiries. As a result, businesses can strengthen customer satisfaction and engagement through intelligent automation.

In modern software development, agile methodologies and DevOps practices have introduced the need for rapid and continuous delivery of software products. A critical aspect of these practices is the automation of software testing to ensure that new features, updates, and bug fixes do not introduce defects or regressions into production systems. Conventional test automation workflows typically rely on manual processes to translate user stories and acceptance criteria into executable test cases. Quality assurance engineers or developers are often required to manually review project documentation, extract test scenarios, and write test scripts using frameworks such as Selenium, Cypress, or REST Assured.

These manual processes introduce several challenges. First, they are time-consuming and error-prone, leading to inconsistent coverage of business requirements and slowing down development cycles. Second, manual test case generation does not scale efficiently in large enterprise environments where hundreds or thousands of user stories may be created in a short period. Additionally, traditional test automation systems are fragmented and lack end-to-end intelligence. They require human intervention at multiple stages of the workflow, such as test case design, script writing, and validation.

Moreover, conventional systems often lack intelligent mechanisms for prioritizing test scenarios, autonomously escalating issues, or replaying historical tests in response to system changes. The absence of Al-driven automation further limits the system's ability to adapt to evolving requirements, leading to gaps in test coverage and operational inefficiencies.

Accordingly, there is a need for an Al-based system that can autonomously or semi-autonomously generate and execute automated test scripts directly from user stories and acceptance criteria, reduce manual effort, and integrate seamlessly with enterprise-grade CI/CD pipelines.

### SUMMARY

Conventional software testing workflows rely heavily on manual processes to convert user stories and acceptance criteria into executable automated test scripts. These workflows are time-consuming, prone to human error, and difficult to scale in agile and DevOps environments where speed and consistency are critical. To overcome these limitations, the present invention provides an intelligent, Al-driven system and methods for autonomously and semi-autonomously generating and executing automated test scripts directly from user stories.

In one embodiment, the invention comprises a modular Al agent architecture that includes a sensor module, a reasoning engine, and an actuator module. The sensor module is configured to receive user stories and related project data from one or more external systems, such as project management platforms or requirement documentation repositories. The reasoning engine applies advanced natural language processing (NLP) techniques, including large language models (LLMs), to extract system actors, user intents, acceptance criteria, and structured test scenarios from the received input. The reasoning engine may further apply risk classification logic to prioritize and enrich the extracted scenarios.

The actuator module autonomously translates the structured test scenarios into executable automated test scripts compatible with one or more testing frameworks (e.g., Selenium, Playwright, REST Assured) and integrates the scripts into continuous integration and delivery (CI/CD) pipelines. The actuator may also provision and manage test environments, execute the generated tests, and collect telemetry data for analysis.

In certain embodiments, the invention further provides an escalation module configured to autonomously detect critical test anomalies and initiate incident response workflows, as well as a replay module that enables the autonomous re-execution of historical test cases in response to detected system changes or project updates.

The system may be flexibly deployed in fully autonomous mode, semi-autonomous mode within a sandbox environment requiring human validation, or in an attended mode wherein Al agents interact directly with human users for collaborative test refinement. Additionally, the invention may be implemented as a distributed multi-agent system, allowing for the parallelization of test generation and execution tasks across cloud-based, on-premises, or hybrid infrastructures.

The invention addresses the technical problem of inefficient and manual test script generation by providing a scalable, intelligent, and adaptive solution that enhances automation workflows, reduces human intervention, and accelerates the validation of software systems in enterprise development environments.

### BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:
FIG. 1 is an architectural diagram illustrating a hyper-automation system configured to perform agentic automation and orchestration according to one or more embodiments.
FIG. 2 illustrates some of the combined capabilities of an artificial intelligence (AI) agent and a robotic process automation (RPA) robot according to one or more embodiments.
FIG. 3 illustrates pools of Al agents, RPA robots, agentic orchestration processes (AOPs), and applications according to one or more embodiments.
FIG. 4 illustrates an example AI agent service interface according to one or more embodiments.
FIG. 5 illustrates an example AOP development interface according to one or more embodiments.
FIG. 6 illustrates an example RPA development interface according to one or more embodiments.
FIG. 7 illustrates an end-to-end Al agent, RPA robot, and AOP development and deployment system according to one or more embodiments.
FIG. 8 is an architectural diagram illustrating an agentic automation and RPA system according to one or more embodiments.
FIG. 9 is an architectural diagram illustrating a deployed RPA system according to one or more embodiments.
FIG. 10 is an architectural diagram illustrating the relationship between a designer, activities, and drivers according to one or more embodiments.
FIG. 11 is an architectural diagram illustrating a computing system according to one or more embodiments.
FIG. 12A illustrates an example of a neural network according to one or more embodiments.
FIG. 12B illustrates an example of a neuron according to one or more embodiments.
FIG. 13 is an architectural diagram illustrating a reference architecture for a generative Al model according to one or more embodiments.
FIG. 14 is a flowchart illustrating a process for training Al/ML model(s) according to one or more embodiments.
FIG. 15 is a flowchart illustrating a method performed by a single Al agent for autonomously generating and executing automated test scripts derived from user stories.
FIG. 16 is a flowchart illustrating a method performed by a distributed multi-agent system in which multiple Al agents collaboratively process user stories and generate automated test scripts.
FIG. 17 is a flowchart illustrating a method for autonomously escalating detected test anomalies based on predefined escalation criteria.
FIG. 18 is a flowchart illustrating a method for autonomously replaying previously generated automated test scripts in response to system changes or trigger events.
FIG. 19 is a flowchart illustrating a method for operating a semi-autonomous Al agent within a sandbox environment, wherein human review is incorporated prior to promoting generated test scripts to production.
FIG. 20 is a flowchart illustrating a method for operating an attended AI agent, wherein human interaction is used to review and refine Al-generated test scripts prior to deployment into a testing pipeline.
FIG. 21 is a flowchart illustrating a method for autonomously generating, committing, executing, and collecting telemetry from automated test scripts using an Al agent integrated with a continuous integration and delivery (CI/CD) pipeline.
FIG. 22 is a flowchart illustrating a method performed by an Al agent integrated within an integrated development environment (IDE) for generating, inserting, and executing automated test scripts derived from user stories, including human-in-the-loop interaction within the IDE interface.
FIG. 23 illustrates a method for autonomously detecting and handling discrepancies between user stories and actual system implementations by an Al agent.
FIG. 24 is a flowchart illustrating a method performed by an Al agent that utilizes a memory module to enhance test scenario generation and test script execution based on historical data and continuous learning from prior validated test cases.
FIG. 25 is a flowchart illustrating a method performed by an Al agent that utilizes an integrated web search capability to autonomously retrieve external test data and testing methodologies for generating and executing automated test scripts based on user stories.

Unless otherwise indicated, similar reference characters denote corresponding features consistently throughout the attached drawings.

### DETAILED DESCRIPTION OF THE EMBODIMENTS

The disclosure herein pertains to agentic automation, and more specifically, to guardrails for AI models and agentic automation.

Conventional software testing workflows rely heavily on manual processes to convert user stories and acceptance criteria into executable automated test scripts. These workflows are time-consuming, prone to human error, and difficult to scale in agile and DevOps environments where speed and consistency are critical. To overcome these limitations, the present invention provides an intelligent, Al-driven system and methods for autonomously and semi-autonomously generating and executing automated test scripts directly from user stories.

In one embodiment, the invention comprises a modular Al agent architecture that includes a sensor module, a reasoning engine, and an actuator module. The sensor module is configured to receive user stories and related project data from one or more external systems, such as project management platforms or requirement documentation repositories. The reasoning engine applies advanced natural language processing (NLP) techniques, including large language models (LLMs), to extract system actors, user intents, acceptance criteria, and structured test scenarios from the received input. The reasoning engine may further apply risk classification logic to prioritize and enrich the extracted scenarios.

The actuator module autonomously translates the structured test scenarios into executable automated test scripts compatible with one or more testing frameworks (e.g., Selenium, Playwright, REST Assured) and integrates the scripts into continuous integration and delivery (CI/CD) pipelines. The actuator may also provision and manage test environments, execute the generated tests, and collect telemetry data for analysis.

In certain embodiments, the invention further provides an escalation module configured to autonomously detect critical test anomalies and initiate incident response workflows, as well as a replay module that enables the autonomous re-execution of historical test cases in response to detected system changes or project updates.

The system may be flexibly deployed in fully autonomous mode, semi-autonomous mode within a sandbox environment requiring human validation, or in an attended mode wherein Al agents interact directly with human users for collaborative test refinement. Additionally, the invention may be implemented as a distributed multi-agent system, allowing for the parallelization of test generation and execution tasks across cloud-based, on-premises, or hybrid infrastructures.

The invention addresses the technical problem of inefficient and manual test script generation by providing a scalable, intelligent, and adaptive solution that enhances automation workflows, reduces human intervention, and accelerates the validation of software systems in enterprise development environments.

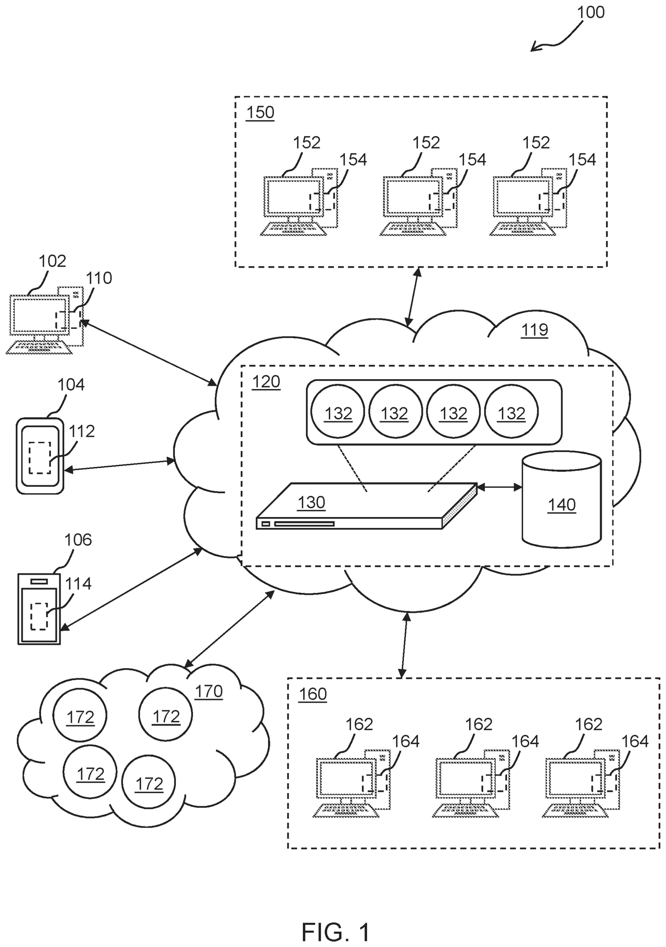

FIG. 1 is an architectural diagram illustrating a hyper-automation system 100 configured to perform agentic automation and orchestration, according to one or more embodiments. "Hyper-automation," as used herein, refers to automation systems that bring together components of process automation, agentic automation, integration tools, and technologies that amplify the ability to automate work. Examples of the components include, but are not limited to, artificial intelligence (AI) agents, agentic orchestration processes (AOPs), and robotic process automation (RPA) robots.

Generally, as used herein, "Al agents" are Al-enhanced probabilistic automations that act independently, act dynamically, make decisions, execute actions, and act adaptively. In some instances, the Al agents operate accordingly due to their use of large language models (LLMs) or other Al models, which are typically probabilistic in nature themselves. According to one or more embodiments, and as described herein, the one or more Al agents can implement context grounding techniques (e.g., retrieval-augmented generation (RAG), extraction, and semantic storage), advanced agentic searching (semantic search and retrieval, hybrid search, and broad search with re-ranking), tethering (including automatic tethering) and query decomposition.

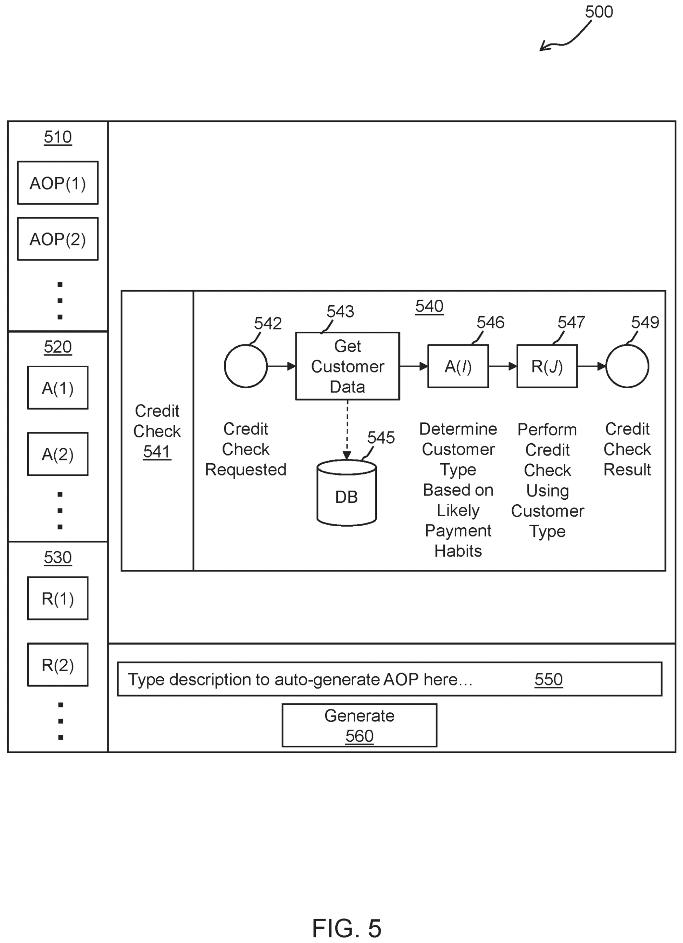

Generally, as used herein, "AOPs" are automations that combine probabilistic and deterministic methods to be both dynamic and predictable. In some instances, AOPs are automations that allow users to describe overall business processes. A user is, but not limited to, any person accessing a system executing an automation (e.g., a developer, an engineer, a customer, etc.). AOPs may be created using an interface that allows the creation of business flowcharts that are described in Business Process Model and Notation (BPMN), which is an Extensible Markup Language (XML) description of the business process (see FIG. 5 for example).

Generally, as used herein, "RPA robots" are rules-based deterministic automations that act predictably and make deterministic decisions.

For instance, one or more RPAs may be used at the core of a hyper-automation system in some embodiments, and in certain embodiments, automation capabilities may be expanded with Al / machine learning (ML), process mining, analytics, agentic automation, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

In such embodiments, AI agents "coexist" in tandem with RPA robots that execute RPAs and AOPs. As noted herein, Al agents are automations, enhanced with Al skills, that can act independently and dynamically make decisions, execute actions, and adapt their performance. The Al agents can dynamically leverage the tools available via these RPA robots to perform document processing (see, for example, U.S. Patent Application Publication No. 2021/0097274), user interface (UI) automation (see, for example, U.S. Patent Nos. 10,654,166, 10,990,876, 11,080,548, 11,507,259, 11,733,668, and 11,748,069), semantic copy-and-paste between a source and a target (see, for example, U.S. Patent No. 12,124,806 and U.S. Patent Application Publication Nos. 2023/0107316, 2023/0415338, and 2024/0220581), etc. Al agents can dynamically select these tools and execute them in the form of a pipeline.

Generally, agentic automation is a probabilistic automation performed by one or more Al agents. Agentic automation expands the automation potential of organizations by placing focus not just on individual tasks, but on entire end-to-end processes. Teams of RPA robots and/or AOPs, directed by Al agents, may enable a single employee to achieve the work of many. Agentic automation, via Al agents and/or AOPs, gives managers the space to mentor, doctors more time to care for patients, developers the ability to fine-tune their work, engineers the freedom to innovate, and customers seamless and personalized experiences.

Various technical effects, benefits, and advantages may be achieved via agentic automation. Agentic automation improves memory usage by requiring less storage for data and increases processor efficiency by reducing the number of calls and actions. Agentic automation also potentially provides the ability to process gigabytes, terabytes, petabytes, or more, of data that would not be possible by human-implemented processes, whether mental or by hand. Agentic automation also potentially enables fewer triggers and models to be used via dynamic decision making. Whereas conventional software automations alone may require one hundred (100) actions in an example scenario, agentic automation in the same example scenario may be reduced the required actions substantially (e.g., to fifteen (15) actions). Agentic automation may also employ context grounding to tether the Al agent to a desired context that "constrains" the LLM or AI Model to a pertinent context, thereby improving the efficiency of the LLM or AI Model.

Al agents may have agentic memory that evolves and remembers user interactions, feedback, corrections, and solutions (e.g., dynamic and/or direct user inputs from human-in-the-loop operations). As used herein, human-in-the-loop operations or "human-in-the-loop" can include Al agents and RPA robots working cooperatively with users to receive the dynamic and/or direct user inputs. As the agentic memory grows, the Al agent can become increasingly autonomous, reducing the need for dynamic and/or direct user inputs and improving efficiency. Al agents may also learn to be more efficient based on the agentic memory if more efficient solutions are contained therein or derived therefrom. For instance, Al agents may periodically process the agentic memory to analyze patterns to achieve greater autonomy.

As used herein, "agentic memory" is a dynamic caching (i.e., storing) system for managing escalations and tool calls. By way of example operation, when the Al agent encounters a problem while running, the Al agent can prompt or otherwise request from a user interaction(s) or feedback about overcoming the problem, store/cache the interaction(s) or feedback, and learn from this interaction or feedback to reduce the need for repeated user input. According to one or more technical effects, benefits, and advantages, agentic memory provides enhanced efficiency by storing solutions to common problems and minimizing potentially costly tool calls. The cooperative operations of the Al agents and the agentic memory potentially "bend the curve" so user interaction is required less and less as the Al agent continually learns via the agentic memory.

Generally, agentic orchestration is implemented by a conductor application to implement one or more AOPs and/or Al agents to orchestrate Al agents (e.g., UiPath Agents^{™}), third-party agents, RPA robots (e.g., UiPath Robots^{™}), AOPs, and users (e.g., if user interaction is required or requested) executing a workflow. Agentic orchestration enables the agentic automation, modeling, and monitoring of complex business processes from start to finish. Agentic orchestration also provides the unique ability to orchestrate RPA robots, Al agents, AOPs, third party agents, and users across end-to-end workflows. Agentic orchestration is beneficial for the successful scaling of agentic automations.

Al agents for agentic automation are Al model-based, as discussed here, enabling the Al agents to work independently of users and implement these agentic automations. Al agents are also goal-oriented, using context to make probabilistic decisions. Further, Al agents are well-suited for ad hoc tasks that require high adaptability. AI agents learn how work is done and improve over time. Al agents can use and choose various tools for accomplishing tasks, gathering context, and taking actions (often through RPA robots used by the Al agents as tools). In some embodiments, Al agents can build workflows and generate automations for RPA robots and/or other Al agents to execute, such as by leveraging UiPath Autopilot^{™} for developers or another application that helps developers expedite the creation and testing of agentic automations. For instance, Al agents may utilize the designer application via an application programming interfaces (API) to generate another Al agent or an RPA robot to execute a portion of a workflow, as well as trigger human-in-the-loop operations to escalate issues with the workflow. If correct, the workflow may then the Al agents can be deployed. Al agents may also have varying degrees of autonomy, which is governed by the agentic orchestration.

The Al agent, by executing an "agentic loop," generates a dynamic plan to achieve goals per instructions using the provided tools and context. Once the dynamic plan is generated, the Al agent utilizes an efficient execution path for the dynamic plan. If the dynamic plan has two or more steps that can be executed in parallel, the Al agent executes the two or more steps in parallel based on the available resources. After each step is completed, the Al agent retrieves the output from the step and regenerates the next step or steps. Thus, the agentic loop continues until the goals are achieved. Executing the steps of the dynamic plan in parallel and using the ecosystem tools and context grounding are advanced capabilities for the agentic orchestration.

As noted herein, RPA robots are rules-based automations that act predictably and make deterministic decisions. RPA robots are highly reliable, efficient, and well-suited for routine tasks. RPA robots, along with Al agents, may use human-in-the-loop operations for exception management. According to one or more embodiments, Al agents are more flexible, more abstract, and more self-willed than RPA robots and AOPs. Further, RPA robots are more stable, more concrete, and more governable than Al agents and AOPs. Furthermore, AOPs processes range between the respective flexibility/stability, abstract/concrete, and self-willed/governable qualities of Al agents and RPA robots.

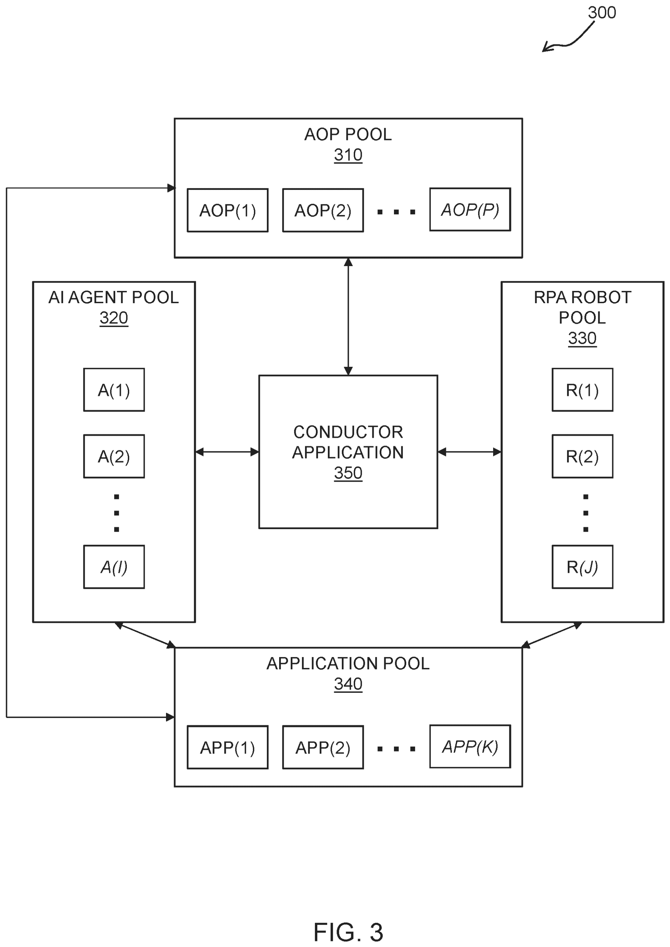

As described further herein with respect to FIG. 3, Al agents, AOPs, and RPA robots can potentially find and use one another as tools to accomplish a task. Al agents, AOPs, and RPA robots may also be able to access and use various applications (e.g., via application programming interfaces (APIs)). Tools may be manually configured for an automation by a developer and/or the Al agents and RPA robots may discover and use tools at runtime.

According to some embodiments, Al agents, AOPs, and RPA robots may work cooperatively with users (e.g., human-in-the-loop), enabling Al agents, AOPs, and RPA robots to make faster, more consistent, and more informed decisions. Further the use of Al agents, AOPs, and RPA robots enables users to accomplish more, as Al agents, AOPs, and RPA robots may take on additional repetitive, mundane, and ad hoc tasks at a scale that is not possible for humans to operate. Users may make the decisions when Al agents, AOPs, or RPA robots encounter an exception. Users may thus be elevated to, and focused on, being supervisors, decision makers, and organizational leaders.

Al models provide Al agents with the ability to reason, plan, create, and make autonomous decisions. Al models can also be used by RPA robots for task-specific activities, such as processing a document or analyzing data. Al models may be enhanced with business-specific content and context (e.g., from a collection of context repositories for an enterprise), improving accuracy and results of the Al models. Al models can be applied individually or concurrently, depending on the complexity of the task. AI model selection can come from the RPA vendor's model library, third-party models, and bring-your-own-model (BYOM) options (see, for example, U.S. Patent Nos. 11,738,453 and 11,748,479).

Hyper-automation system 100 includes user computing systems, such as desktop computer 102, tablet 104, and smart phone 106. However, any desired user computing system may be used without deviating from the scope of the disclosure including, but not limited to, smart watches, laptop computers, servers, Internet-of-Things (IoT) devices, etc. Also, while three user computing systems are shown in FIG. 1, any suitable number of user computing systems may be used without deviating from the scope of the disclosure. For instance, in some embodiments, dozens, hundreds, thousands, or millions of user computing systems may be used. The user computing systems may be actively used by a user or run automatically, by Al agents, AOPs, and/or RPA robots, without much or any user input.

As disclosed herein, there are three types of automations in some embodiments: (1) agentic automations that are implemented by respective Al agents; (2) RPAs that are implemented by respective RPA robots; and (3) composite automations that are achieved by a combination of Al agent(s) and RPA robot(s) to accomplish a more complex overall task. Automations 110, 112, 114 may include, but are not limited to, those executed by RPA robots and/or Al agents, whether individually or to achieve a larger composite automation. Other processes may also be implemented, such as listeners. These processes may be standalone applications, subprocesses of another application, part of an operating system, any other suitable software and/or hardware, or any combination of these without deviating from the scope of the disclosure. Indeed, in some embodiments, the logic of the process(es) is implemented partially or completely via physical hardware.

Each user computing system 102, 104, 106 has respective automations 110, 112, 114 running thereon, such as those implemented by RPA robots, Al agents, AOPs, etc. In some embodiments, automations 110, 112, 114 can be stored remotely (e.g., within a core hyper-automation system 120 including a server 130 alongside one or more Al/ML models 132, or within a database 140 of the core hyper-automation system 120, and accessed via a network 119) and loaded by RPA robots and/or Al agents to implement automations 110, 112, 114.

Database 140 may store structured and/or unstructured data, although the former is typically required for RPAs. RPA automations may exist as a script (e.g., Extensible Markup Language (XML), Extensible Application Markup Language (XAML), etc.) or be compiled into machine readable code (e.g., as a digital link library). In the case of Al agents, agentic automations may be generated based on plain text descriptions of a desired goal, for example.

Listeners monitor and record data pertaining to user interactions with respective computing systems and/or operations of unattended computing systems and send the data to the core hyper-automation system 120 via the network 119 (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to the core hyper-automation system 120 once a predetermined amount of data has been collected, after a predetermined time period has elapsed, or both. One or more servers, such as server 130, receive and store data from the listeners in a database, such as database 140.

In the case of automations 110, 112, 114 being RPAs, automations 110, 112, 114 may execute the logic developed in workflows during design time. The workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human-in-the-loop, and long-running transactions in unattended environments. See, for example, U.S. Patent No. 10,860,905, which is hereby incorporated by reference in its entirety. Human-in-the-loop comes into play when certain processes require user inputs (e.g., dynamic and/or direct user inputs) to handle exceptions, approvals, or validation before proceeding to the next step in the activity. In this situation, the process execution is suspended, freeing up the RPA robots until the human-in-the-loop portion of the task is completed.

A long-running workflow may support workflow fragmentation via persistence activities and may be combined with invoke process and non-user interaction activities, orchestrating human-in-the-loop operations with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

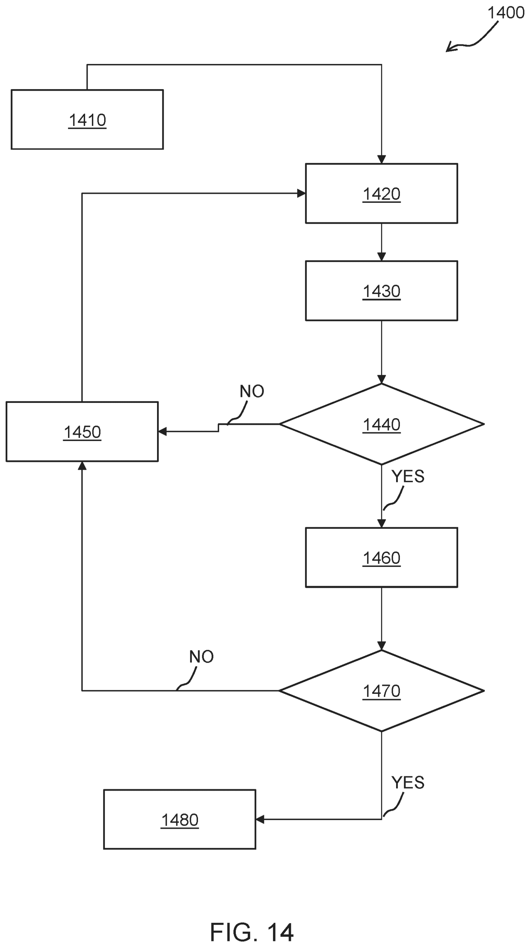

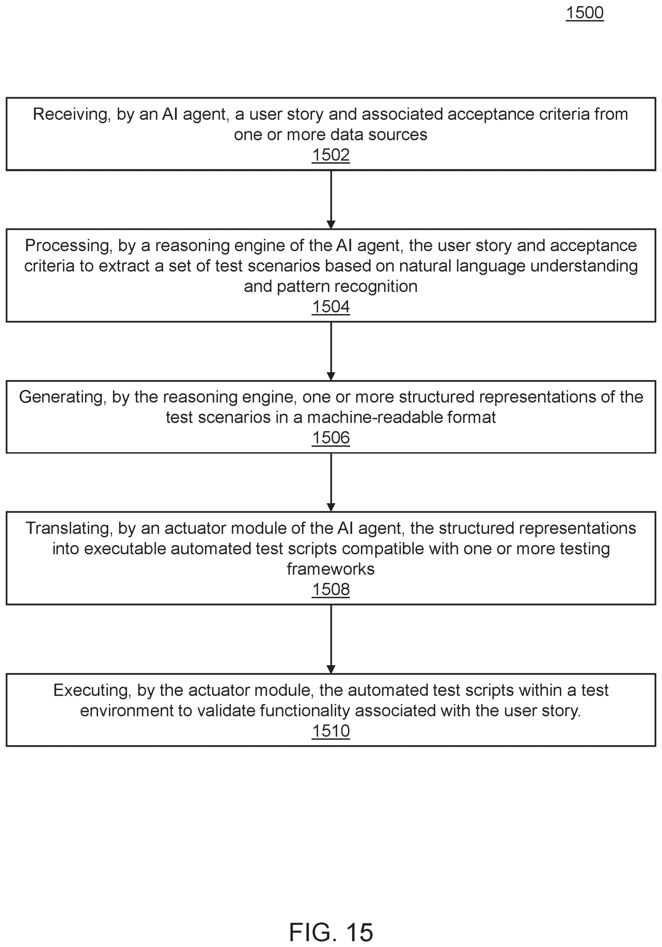

One or more of the automations 110, 112, 114 are in communication with the core hyper-automation system 120. In some embodiments, the core hyper-automation system 120 can run an AI trust layer on one or more servers, such as the server 130, for governance of automations 110, 112, 114. The AI trust layer, as described and shown in FIGS. 14 and 15, is configured to provide trust, transparency, and control of the operations of the one or more agentic automations, according to one or more embodiments.

In some embodiments, the core hyper-automation system 120 may run a conductor application on one or more servers, such as server 130. While one server 130 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and or any other suitable functionality without deviating from the scope of the invention. In some embodiments, the core hyper-automation system 120 may incorporate or be part of a public cloud architecture, a private cloud architecture, a hybrid cloud architecture, etc. In certain embodiments, the core hyper-automation system 120 may host multiple software-based servers on one or more computing systems, such as server 130. In some embodiments, one or more servers of the core hyper-automation system 120, such as server 130, may be implemented via one or more virtual machines (VMs).

In some embodiments, one or more of the automations 110, 112, 114 may call the one or more Al/ML models 132 deployed on or accessible by the core hyper-automation system 120 and trained to accomplish various tasks. For instance, Al/ML models 132 may include models trained to look for various application versions, perform computer vision (CV), perform optical character recognition (OCR), generate user interface (UI) descriptors, offer suggestions for next activities or sequences of activities in workflows, perform semantic matching, perform natural language processing (NLP), generate or modify code and/or workflows, etc. AI/ML models may be trained using labeled data that includes, but is not limited to, elements from data sources (e.g., web pages, forms, scanned documents, application interfaces, screens, etc.), previously created workflows, screenshots of various application screens for various versions with their corresponding UI elements, libraries of UI objects, etc. Al/ML models 132 may be trained to achieve a desired confidence threshold while not being overfit to a given set of training data. Generally, UI elements, UI descriptors, applications, and application screens can be considered to be UI objects.

AI/ML models 132 may be trained for any suitable purpose without deviating from the scope of the invention, as will be discussed in more detail later herein. Two or more of Al/ML models 132 may be chained in some embodiments (e.g., in series, in parallel, or a combination thereof) such that they collectively provide collaborative output(s). AI/ML models 132 may perform or assist with CV, OCR, document processing and/or understanding, semantic learning and/or analysis, analytical predictions, process discovery, task mining, testing, automatic workflow generation, sequence extraction, clustering detection, audio-to-text translation, NLP, semantic matching, any combination thereof, etc. However, any desired number and/or type(s) of AI/ML models may be used without deviating from the scope of the invention. Using multiple AI/ML models may allow the system to develop a global picture of what is happening on a given computing system, for example. For instance, one AI/ML model could perform OCR, another could detect buttons, another could compare sequences, etc. Patterns may be determined individually by an Al/ML model or collectively by multiple Al/ML models. In certain embodiments, one or more Al/ML models are deployed locally on at least one of the computing systems 102, 104, 106.

In some embodiments, multiple AI/ML models 132 may be used. Each AI/ML model 132 is an algorithm (or model) that runs on the data, and the Al/ML model itself may be a deep learning neural network (DLNN) of trained artificial "neurons" that are trained on training data, for example. In some embodiments, Al/ML models 132 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by RPA robots, AOPs, or Al agents, for example, in some embodiments, and may provide any of the functionality described herein. By way of example, RPA robots can include attended robots, unattended robots, and/or test robots. Attended robots work with users to assist with tasks (e.g., via UiPath Assistant^{™}). Unattended robots work independently of users and may run in the background, potentially without user knowledge. Test robots run test cases against applications or workflows. Test robots may be run on multiple computing systems in parallel in some embodiments.

The discovery functionality may discover and provide automatic recommendations for different opportunities for automation of business processes. Such functionality may be implemented by one or more servers, such as server 130. The discovery functionality may include providing an automation hub, process mining, task mining, and/or task capture in some embodiments. The automation hub (e.g., UiPath Automation Hub^{™}) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud^{™} and/or UiPath Al Center^{™}) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 102, 104, 106 by listeners, for example, and processed by servers, such as server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud^{™} and/or UiPath Al Center^{™}) identifies and aggregates workflows (e.g., employee workflows), and then applies AI to expose patterns and variations in day-to-day tasks, scoring such tasks for ease of automation and potential savings (e.g., time and/or cost savings). One or more Al/ML models 132 may be employed to uncover recurring task patterns in the data. Repetitive tasks that are ripe for automation may then be identified. This information may initially be provided by listeners and analyzed on servers of the core hyper-automation system 120, such as server 130, in some embodiments. The findings from task mining (e.g., XAML process data) may be exported to process documents or to a designer application such as UiPath Studio^{™} to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud^{™} and/or UiPath Al Center^{™}) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word^{®} documents, XAML files, and the like. Build-ready workflows may be exported directly to a designer application in some embodiments, such as UiPath Studio^{™}. Task capture may simplify the requirements gathering process for both subject matter experts explaining a process and Center of Excellence (CoE) members providing production-grade automations.

Building automations may be accomplished via a designer application (e.g., UiPath Studio^{™}, UiPath StudioX^{™}, or UiPath Studio Web^{™}). For instance, developers of an RPA development facility 150 may use designer applications 154 of computing systems 152 to build and test agentic automations, RPAs, AOPs, and/or composite automations for various applications and environments, such as web, mobile, SAP^{®}, and virtualized desktops. Developers may also build AOPs. For instance, developers may create automations to be executed by RPA robots, Al agents, AOPs, a combination thereof, etc. API integration may be provided for various applications, technologies, and platforms. Predefined activities, drag-and-drop modeling, and a workflow recorder, may make automation easier with minimal coding. Document understanding functionality may be provided via drag-and-drop Al skills for data extraction and interpretation that call one or more AI/ML models 132. Such automations may process virtually any document type and format, including tables, checkboxes, signatures, and handwriting. When data is validated or exceptions are handled, this information may be used to retrain the respective Al/ML models, improving their accuracy over time.

Designer application 152 may be designed to call one or more of trained Al/ML models 132 on server 130 and/or generative Al models 172 in a cloud environment via network 170 (e.g., a local area network (LAN), a mobile communications network, a satellite communications network, the Internet, any combination thereof, etc.) to assist with the automation development process. In some embodiments, one or more of the Al/ML models may be packaged with designer application 152 or otherwise stored locally on computing system 150.

In some embodiments, the designer application 152 and one or more of Al/ML models 132 may be configured to use an object repository stored in database 140. See, for example, U.S. Patent No. 11,748,069, which is hereby incorporated by reference in its entirety. Generally, the object repository is a storage mechanism used by automations for images, text, semantic data, taxonomical associations, ontological associations, UI objects, etc. For example, the object repository may include libraries of UI objects that can be used to develop workflows via the designer application 152. The object repository may be used to add UI descriptors to activities in the workflows of the designer application 152 for UI automations. In some embodiments, one or more of the AI/ML models 132 may generate new UI descriptors and add them to the object repository in database 140.

Once automations are completed in the designer application 152, they may be published on the server 130, pushed out to the computing systems 102, 104, 106, etc. For example, as new UI descriptors are created and/or existing UI descriptors are modified, a global repository of UI object libraries may be built that is sharable and collaborative for all automations. Regarding object repositories, taxonomies and ontologies may be used. A taxonomy is a hierarchical structure of subcategories. An ontology is a formal representation of a domain of knowledge, including concepts, properties, and relationships therebetween. In an ontology, the relationships between categories are not necessarily hierarchical, and the ontological relationship may span multiple screens of an application.

An integration service may allow developers to seamlessly combine UI automation with API automation, for example. Automations, such as any of the types described herein, may be built that require APIs or traverse both API and non-API applications and systems. A repository (e.g., UiPath Object Repository^{™}) or marketplace (e.g., UiPath Marketplace^{™}) for pre-built automation templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced Al capabilities. Hyper-automation system 100 enables development, deployment, management, configuration, monitoring, debugging, and maintenance of RPA robots, AOPs, and Al agents in some embodiments, which may provide automations for hyper-automation system 100.

In some embodiments, components of hyper-automation system 100, such as designer application(s) and/or an external rules engine, provide support for managing and enforcing governance policies for controlling various functionality provided by hyper-automation system 100. Governance is the ability for organizations to put policies in place to prevent users from developing automations (e.g., RPA robots, AOPs, and/or Al agents) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent No. 11,733,668, which is hereby incorporated by reference in its entirety.

The management functionality may provide management, deployment, and optimization of automations across an organization. The management functionality may include orchestration, test management, Al functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots, AOPs, and/or Al agents, among other things.

A conductor application, such as UiPath Orchestrator^{™} (which may be provided as part of the UiPath Automation Cloud^{™} in some embodiments, or on premises, in VMs, in a private or public cloud, in a Linux^{™} VM, or as a cloud native single container suite via UiPath Automation Suite^{™}), provides orchestration capabilities to deploy, monitor, optimize, scale, and ensure security of RPA robots, AOPs, and/or Al agent deployments. A test suite (e.g., UiPath Test Suite^{™}) may provide test management to monitor the quality of deployed automations. The test suite may facilitate test planning and execution, meeting of requirements, and defect traceability. The test suite may include comprehensive test reporting.

Analytics software (e.g., UiPath Insights^{™}) may track, measure, and manage the performance of deployed automations. The analytics software may align automation operations with specific key performance indicators (KPIs) and strategic outcomes for an organization. The analytics software may present results in a dashboard format for better understanding by users.

A data service (e.g., UiPath Data Service^{™}) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an AI center (e.g., UiPath Al Center^{™}), which facilitates incorporation of Al/ML models into automations. Pre-built AI/ML models, model templates, and various deployment options may make such functionality accessible even to those who are not data scientists. Deployed automations (e.g., RPA robots, AOPs, and Al agents) may call AI/ML models from the Al center, such as AI/ML models 132. Performance of the AI/ML models may be monitored and be trained and improved using user-validated data, such as that provided by data review center 160. Users, as reviewers, may provide labeled data to the core hyper-automation system 120 via a review application 152 on computing systems 154. For instance, reviewers may validate that predictions by Al/ML models 132 and/or generative Al models 172 are accurate or provide corrections otherwise. Users, as reviewers, may also provide dynamic and/or direct user inputs (e.g., within the scope of human-in-the-loop operations) to Al agents, and the dynamic and/or direct user inputs (e.g., responses and corrections provided by the reviewers) may be used to train LLM(s) used by Al agents to be more accurate. In other words, the dynamic and/or direct user inputs may be saved as training data for retraining AI/ML models 132 and/or generative Al models 172 and may be stored in a database such as database 140, for example. The AI center may then schedule and execute training jobs to train the new versions of the Al/ML models using the training data. Both positive and negative examples may be stored and used for retraining of AI/ML models 132 and/or generative Al models 172.

The engagement functionality engages automations and users as one team for seamless collaboration on desired processes. Low-code applications may be built (e.g., via UiPath Apps^{™}) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center^{™}) provides a straightforward and efficient mechanism to hand off processes from automations to users, and vice versa. Users may provide approvals or escalations, make exceptions, etc. The automation may then perform the automatic functionality of a given workflow.

A local assistant may be provided as a launchpad for users to launch automations (e.g., UiPath Autopilot^{™}). Such an assistant may also provide semantic cut-and-paste functionality (e.g., UiPath Clipboard AI^{™}). See, for example, U.S. Patent No. 12,124,806 and U.S. Patent Application Publication Nos. 2023/0107316, 2023/0415338, and 2024/0220581. This functionality may be provided in a tray provided by an operating system, for example, and may allow users to interact with RPA robots, AOPs, and Al agents and automation-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

End-to-end measurement and government of an automation program at any scale may be provided by hyper-automation system 100 in some embodiments. Per the above, analytics may be employed to understand the performance of automations (e.g., via UiPath Insights^{™}). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops^{™}) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

In some embodiments, per the above, generative Al models 172 are used. For instance, Al agents make use of generative Al models. Generative Al models 172 can generate various types of content, such as text, imagery, audio, and synthetic data. Various types of generative Al models may be used, including, but not limited to, LLMs, generative adversarial networks (GANs), diffusion models, flow-based models, variational autoencoders (VAEs), transformers, etc. In the case of LLMs, for example, NLP models such as word2vec, BERT, GPT-3, ChatGPT, etc. may be used in some embodiments to facilitate semantic understanding and provide more accurate and human-like answers. These models may be part of AI/ML models 132 hosted on server 130. For instance, the generative Al models 172 may be trained on a large corpus of textual information to perform semantic understanding, to understand the nature of what is present on a screen from text, to automatically generate code, and the like. Al agents may use such generative Al models 172. In certain embodiments, generative Al models 172 provided by an existing cloud ML service provider, such as OpenAI^{®}, Google^{®}, Amazon^{®}, Microsoft^{®}, IBM^{®}, Nvidia^{®}, Meta^{®}, etc., may be employed and trained to provide such functionality. In generative Al embodiments where generative Al model(s) 172 are remotely hosted, server 130 can be configured to integrate with third-party APIs, which allow server 130 to send a request to generative Al model(s) 172 including the requisite input information and receive a response in return (e.g., the semantic matches of fields between application versions, a classification of the type of the application on the screen, responses to natural language queries from users, etc.). Such embodiments may provide a more advanced and sophisticated user experience, as well as provide access to state-of-the-art NLP and other ML capabilities that these companies offer.

One aspect of generative Al models 172 in some embodiments is the use of transfer learning. In transfer learning, a pretrained generative Al mode, such as an LLM, is fine-tuned on a specific task or domain. This allows the LLM to leverage the knowledge already learned during its initial training and adapt it to a specific application. In the case of LLMs, the pretraining phase involves training an LLM on a large corpus of text, typically consisting of billions of words. During this phase, the LLM learns the relationships between words and phrases, which enables the LLM to generate coherent and human-like responses to text-based inputs. The output of this pretraining phase is an LLM that has a high level of understanding of the underlying patterns in natural language.

In the fine-tuning phase, the pretrained LLM is adapted to a specific task or domain by training the LLM on a smaller dataset that is specific to the task. For instance, in some embodiments, the LLM may be trained to analyze a certain type or multiple types of data sources to improve its accuracy with respect to their content. This data may include, but is not limited to, prompt tuning or instruction tuning, where the model is specifically trained to better understand and follow certain types of instructions or prompts, improving its ability to perform specific tasks when given appropriate instructions. Such information may be provided as part of the training data, and the LLM may learn to focus on these areas and more accurately identify data elements therein. Fine-tuning allows the LLM to learn the nuances of the task or domain, such as the specific vocabulary and syntax used in that domain, without requiring as much data as would be necessary to train an LLM from scratch. By leveraging the knowledge learned in the pretraining phase, the fine-tuned LLM can achieve state-of-the-art performance on specific tasks with a relatively small amount of training data.

LLMs may use a vector database. Vector databases index, store, and provide access to structured or unstructured data (e.g., text, images, time series data, etc.) alongside the vector embeddings thereof. Data such as text may be tokenized, where single letters, words, or sequences of words are parsed from the text into tokens. These tokens are then "embedded" into vector embeddings, which are the numerical representations of this data. Vector databases enable LLMs to find and retrieve similar objects quickly and at scale in production environments, which is not possible via manual processes.

Al and ML allow unstructured data to be numerically represented without losing the semantic meaning thereof in vector embeddings. A vector embedding is a long list of numbers, each describing a feature of the data object that the vector embedding represents. Similar objects are grouped together in the vector space. In other words, the more similar the objects are, the closer that the vector embeddings representing the objects will be to one another. Similar objects may be found using a vector search, similarity search, or semantic search and retrieval. The distance between the vector embeddings may be calculated using various techniques including, but not limited to, squared Euclidean or L2-squared distance, Manhattan or L1 distance, cosine similarity, dot product, Hamming distance, etc. It may be beneficial to select the same metric that is used to train the AI/ML model.

Vector indexing may be used to organize vector embeddings so data can be retrieved efficiently. Calculating the distance between a vector embedding and all other vector embeddings in the vector database using the k-Nearest Neighbors (kNN) algorithm can be computationally expensive if there are a large number of data points since the required calculations increase linearly (O(n)) with the dimensionality and the number of data points. It is more efficient to find similar objects using an approximate nearest neighbor (ANN) approach. The distances between the vector embeddings are pre-calculated, and similar vectors are organized and stored close to one another (e.g., in clusters or a graph) similar objects can be found faster. This process is called "vector indexing." ANN algorithms that may be used in some embodiments include, but are not limited to, clustering-based indexing, proximity graph-based indexing, tree-based indexing, hash-based indexing, compression-based indexing, etc.

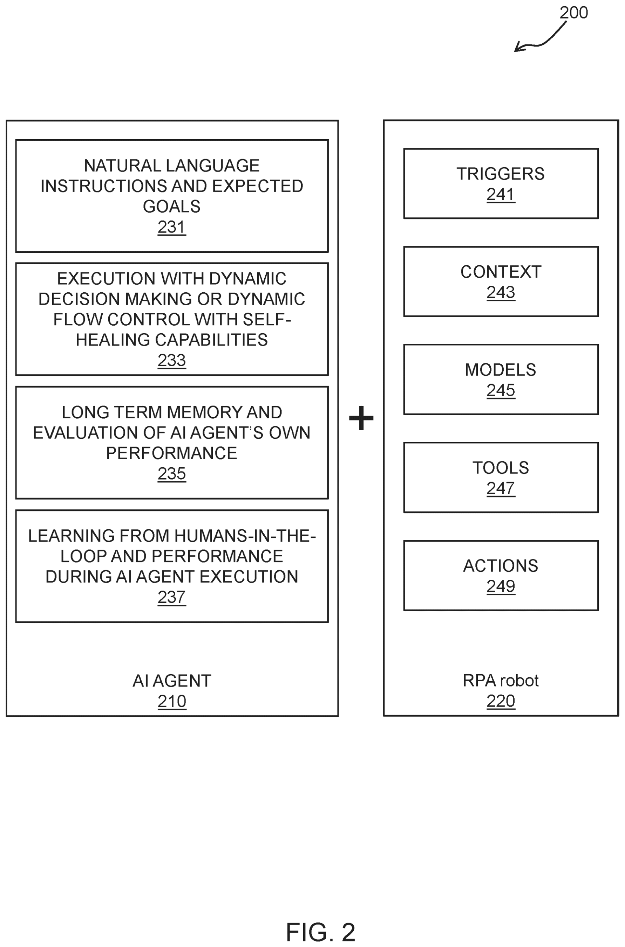

FIG. 2 illustrates some of the combined capabilities 200 of an Al agent 210 and an RPA robot 220, according to one or more embodiments. Al agent 210 is configured to process natural language instructions and achieve expected goals 231 therefrom, execute with dynamic decision making or dynamic flow control with self-healing capabilities 233, store information in long term memory and evaluate its own execution performance 235, and learn from humans-in-the-loop and self-performance during execution 237. RPA robot 220 can be leveraged by Al agent 210 to respond to triggers 241 (e.g., from a conductor application such as UiPath Orchestrator^{™}), to respond based on context 243 (i.e., RPA robot 220 can retrieve information from the context to execute deterministic steps, such as updating a document based on the retrieved information from the context; alternatively, agent 210 can use the retrieved context to update a dynamic plan and execute the next steps complete the goals as per the instructions), to leverage models 245 (e.g., CV models, document processing models, speech-to-text models, OCR models, Al models, etc.), leverage tools 247 (e.g., utilize tools available in the RPA ecosystem, such as complete automations, workflows within automations, integration service connector calls for 3^{rd} party and 1^{st} party services, RPA designer application activities, LLM calls, automations, etc.), and perform actions 249 that an RPA robot 220 can take (i.e., use the RPA robot 220 as a tool) based on input from the Al agent 210. Al agent 210 can also take actions 249 to update its memory, update the plan to accomplish its goals per instructions, self-evaluate and learn from the actions, self-heal when it encounters roadblocks, and escalate to users when it needs help.

As discussed above, agentic automation achieves various technical effects, benefits, and advantages. Agentic automation improves memory usage by requiring less storage for data and increases processor efficiency by reducing the number of calls and actions. Agentic automation provides the ability to process gigabytes, terabytes, petabytes, or more, of data that would not be possible by human-implemented processes, whether mental or by hand. Agentic automation enables fewer triggers and models to be used via dynamic decision making. For instance, and as discussed herein, whereas conventional software automations alone may require one hundred (100) actions in an example scenario, agentic automation in the same example scenario may reduce the required actions substantially (e.g., to fifteen (15) actions). Agentic automation may also employ context grounding to tether the Al agent 210 to a desired context that "constrains" the LLM to a pertinent context, thereby improving the efficiency of the LLM.

As used herein, "context grounding" refers to a methodology to improve models, such as LLMs, by integrating enterprise-specific information with pretrained knowledge, enabling accurate responses to specialized or recent queries. In some embodiments, context grounding uses external data to augment the LLM response and get a response that the LLM does not know about innately and answer queries on top of the context provided. By way of example, because unique industry terminology and complex document structures can pose challenges in ensuring effective retrieval and semantic matching, context grounding solves challenges by providing precise chunking of documents to ensure relevant information (e.g., from the unique industry terminology and complex document structures) can be passed to an LLM without noise. By way of an additional example, context grounding provides enhanced extraction and search techniques tailored to diverse industries and applications (e.g., tailored to the unique industry terminology and complex document structures) that improves the LLM response.

FIG. 3 depicts a diagraph 300 of AOPs, Al agents, RPA robots, and applications, according to one or more embodiments.

AOP pool 310 includes AOPs *1, 2,* ... , *P* that implement business processes. Per the above, the AOPs may be implemented as BPMN, which is executed by an AOP execution engine, such as Temporal^{®}. AOPs can utilize Al agents and/or RPA robots to execute parts of the business process.

Al agent pool 320 includes Al agents *1, 2*, ... , *I* that have been trained to perform various tasks, such as investigating claims, seeking resolution with employees, summarizing policies and technical specifications, etc. RPA robot pool 330 includes RPA robots *1, 2,* ... , *J* that execute various automations, such as UI automations, semantic matching automations, form filling automations, etc.

Application pool 340 includes applications *1, 2, ... , K* that the Al agents and/or RPA robots can interact with. For instance, the applications may include CRM applications, invoicing applications, payroll applications, banking applications, web applications, legacy system applications, word processing applications, spreadsheet applications, email applications, etc. The Al agents, RPA robots, and applications may be on a single computing system or on multiple or many computing systems. AOPs are typically in the cloud or otherwise server side, and may be on the same computing system(s) as conductor application 350 in some embodiments.

The AOPs can trigger or call the Al agents and RPA robots via conductor application 350. The Al agents and RPA robots can also trigger or call one another via conductor application. For instance, to call an RPA robot, the Al agent may make a "Start Job" call in conductor application 350. It should be noted that the RPA robots are deployed as automations that are controlled by conductor application 350. The Al agents, AOPs and RPA robots can also trigger or call certain applications. For instance, via information gleaned from human-in-the-loop operations, the Al agents may dynamically learn which RPA robots, other Al agents, and/or applications to trigger or call to achieve a task. For instance, an Al agent may learn to trigger an RPA robot via conductor application 350 to fill out and submit a web form. The Al agent may also learn to open Microsoft Excel^{®} and enter the form information into appropriate tabs, open and update a payroll application, etc. The Al agent may further learn to call or trigger an email resolution Al agent via conductor application 350 that reaches out to a customer service representative of a bank if an issue occurs. The technical effects, benefits, and advantages may be similar to those discussed above with respect to FIGS. 1 and 2 in some embodiments.

In order for Al agents, AOPs, and RPA robots to find one another, the Al agents may belong to a tenant. The designer application may call the conductor to get the list of available RPAs. There are three ways for getting the capabilities of automations in some embodiments: (1) the user provides a description of what the automation does while creating the workflow in the designer application; (2) Al agents and ML techniques are used to generate a summary of what a given workflow does; or (3) the developer can describe what the automation does in the designer application. The conductor application may also have lists of what applications are available to given Al agents and RPA robots. In other words, descriptions of available Al agents, RPA robots, and/or applications are derived from or assigned by Al agents, ML techniques, or users.

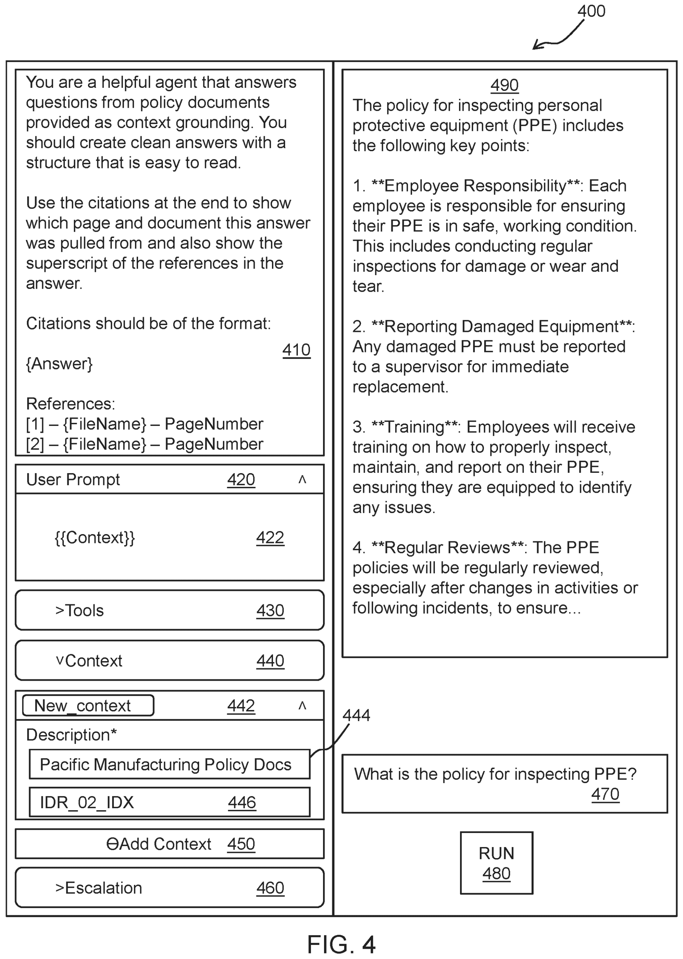

FIG. 4 illustrates an example agent service interface 400, according to one or more embodiments. As shown in FIG. 4, the agent answers questions regarding policy documents that are provided within context grounding. An agent instructions pane 410 includes a natural language description entered by a user of what the Al agent is intended to do. A user prompt 420 allows the developer to enter content for a user prompt in a content field 422, if desired. A tools dropdown 430 allows the developer to select tools that the Al agent will utilize, such as using APIs for applications, calling RPA robots to execute RPAs, etc.

A context dropdown 440 allows the developer to configure the context grounding for the Al agent. A context configuration pane 442 allows the developer to provide a description via description field 444 and an Elastic Common Schema (ECS) index via ECS index field 446 for specific policy documents that have information regarding contracts, stipulation and what to do, etc. in this example. The developer can also add context 450 to further supplement the context grounding. User escalation options can be configured via an escalation dropdown 460. A query field 470 allows the user to provide a query that the Al agent will respond to. The Al agent runs the query when the user clicks run button 480. The results during Al agent execution are then shown in execution pane 490 as the Al agent retrieves and outputs them.

FIG. 5 illustrates an example AOP development interface 500, according to one or more embodiments. AOP development interface 500 includes AOPs 510, Al agents 520, and RPA robots 530 that the user can select when developing a business process. These can be selected and dragged to a canvas 540 by an Al agent, an AOP, or a developer to develop the AOP. In this example, a credit check 541 is implemented upon a credit check request 542 by getting customer data 543 from a database 545. Next, an Al agent 546 is called to determine a customer type (e.g., highly likely to pay, likely to miss payments, frequently between jobs, etc.) by analyzing the customer data of the database 545. The type is then provided to an RPA robot 547 that takes this information into account when performing a credit check and producing the credit check result 549. Alternatively, the Al agent, the AOP, or the developer can provide a description of a business process into a field 550 and select a generate button 560. This description is provided to an LLM, which attempts to understand the business process and automatically create the AOP. The Al agent, the AOP, or the developer can then edit the AOP.

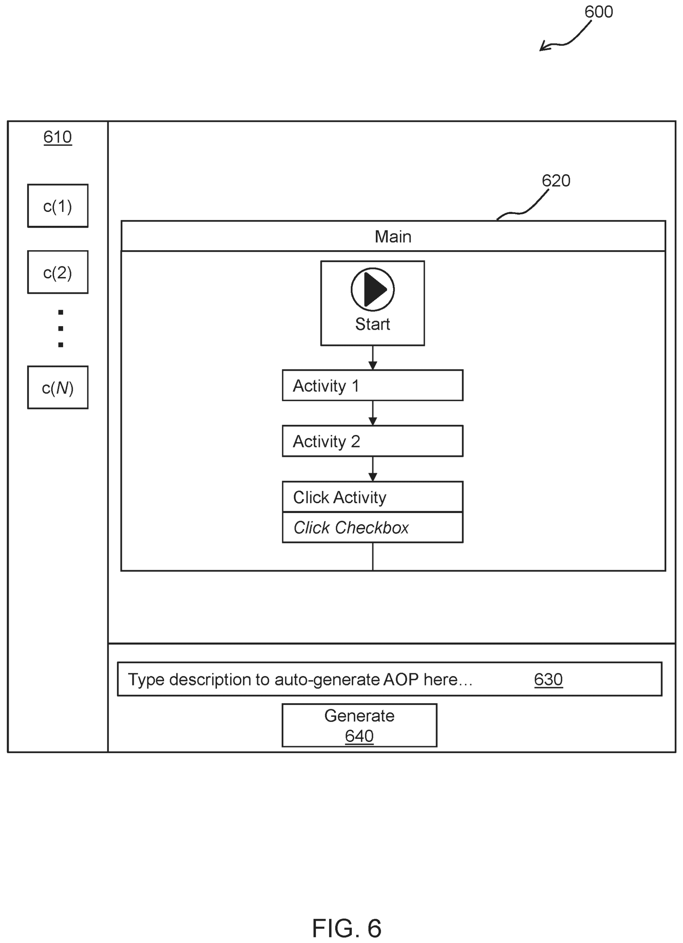

FIG. 6 illustrates an example RPA development interface 600, according to one or more embodiments. RPA development interface 600 includes component 610 that an Al agent, a AOP, or a developer can select when developing a workflow for an RPA robot. The Al agent, the AOP, or the developer can be selected and dragged to a canvas 620. Alternatively, the Al agent, the AOP, or the developer can provide a description of a workflow into a field 630 and select a generate button 640. This description is provided to an LLM, which attempts to understand the workflow and automatically create the RPA robot. The Al agent, the AOP, or the developer can then edit the workflow for the RPA robot. It should be noted that the functionality shown and described with respect to FIGS. 4, 5, and 6 may be provided in a single designer application in some embodiments.

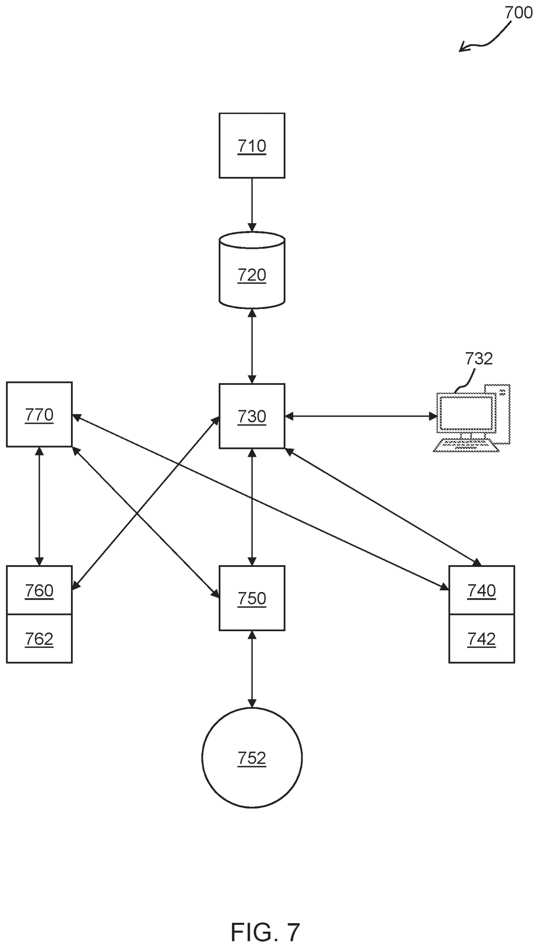

FIG. 7 illustrates an end-to-end Al agent, RPA robot, and AOP development and deployment system 700, according to one or more embodiments. A designer application 710 allows Al agents, AOPs, and developers to design workflows for subsequent automations (e.g., AOPs, Al agents, and/or RPA robots). Once these subsequent AOPs, Al agents, and/or RPA robots have been tested and validated, the validated and tested AOPs, Al agents, and/or RPA robots are packaged and published to an automation database 720.

A conductor application 730 manages deployments of these packaged and published automations. When software process 732 requests that an automation be run, conductor application 730 sends a start job command to AOP engine 740, which selects and starts the automation from AOPs 742. When executing AOPs 742, steps may be encountered that are implemented by Al agents 750 and/or RPA robots 760. In some cases, AOP engine 740 suspends the executing AOPs 742 and sends a request to conductor application 730 to send a start job request to an appropriate Al agent 750 or RPA robot 760 to execute the step.

In the case of an Al agent being requested, conductor application 730 sends the start job request to the appropriate Al agent 750. This request may include natural language text or other information provided by AOP engine 740 to conductor application 730. Al agent 750 then performs the step by executing an LLM 752 to assist in carrying out the task. Al agent 750 then sends information pertinent to the task (e.g., requested information, an indication that the step was completed, an indication that the step failed, etc.) to conductor 730, which provides this information to AOP engine 740. AOP engine 740 then resumes its operation.

In the case of an RPA robot being requested, conductor application 730 sends the start job request to the appropriate RPA robot 760. RPA robot 760 then executes a requested RPA 762. RPA robot 760 then sends information pertinent to the task (e.g., requested information, an indication that the step was completed, an indication that the step failed, etc.) to conductor application 730, which provides this information to AOP engine 740. The AOP engine 740 then resumes operation.

According to one or more embodiments, user action may be required by an AOP 742, an Al agent 750, or an RPA 762. In this case, the AOP engine 740, the Al agent 750, or the RPA robot 760 contacts a user 770 for a human-in-the-loop operation that contributes to the automation. After the user 770 provides the user action, the AOP engine 740, the Al agent 750, or the RPA robot 760 resumes the automation.

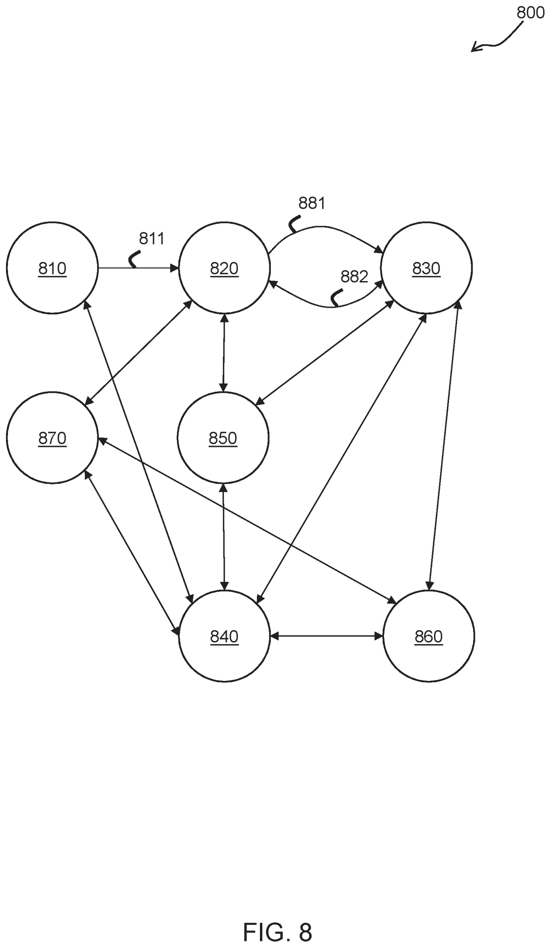

FIG. 8 is an architectural diagram illustrating an agentic automation and RPA system 800, according to one or more embodiments. In some embodiments, agentic automation and RPA system 800 is part of hyper-automation system 100 of FIG. 1. Agentic automation and RPA system 800 includes a designer 810 that allows an Al agent, a AOP, or a developer to design automations (e.g., workflows, natural language instructions for Al agents and AOPs, context grounding, tool configurations, RPA robots, AOPs, Al agents etc.). The designer 810 may provide a solution for application integration, as well as automating third-party applications, administrative Information Technology (IT) tasks, and business IT processes. The designer 810 may facilitate development of an automation project, which is a graphical representation of a business process. The designer 810 facilitates the development and deployment (as represented by arrow 811) of automations. The designer 810 may be an application that runs on a user's desktop, an application that runs remotely in a VM, a web application, etc.

The automation project enables automation of rule-based processes by giving an Al agent, a AOP, or a developer control of am execution order and a relationship between a custom set of steps developed in a workflow, i.e., "activities," as described herein. One commercial example of an embodiment of designer 810 is UiPath Studio^{™}. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable for more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once automation is developed in the designer 810, execution of business processes is orchestrated by the conductor 820, which orchestrates one or more robots 830, one or more Al agents 850, and/or one or more AOPs 870 that execute the workflows developed in the designer 810. One commercial example of an embodiment of the conductor 820 is UiPath Orchestrator^{™}. The conductor 820 facilitates management of the creation, monitoring, and deployment of resources in an environment. Conductor 820 may act as an integration point with third-party solutions and applications. Per the above, in some embodiments, the conductor 820 may be part of the core hyper-automation system 120 of FIG. 1.

It should be noted that RPA robots 830 may operate independently for deterministic processes. Al agents 850 and AOPs 870 can also operate independently (e.g., for non-deterministic processes), or utilize RPA robot(s) 830 or other Al agents 850 as tools to accomplish part of their agentic automations. Al agents 850 can drive composite automations that utilize both RPA robots 830 and Al agents 850, or vice versa, and AOPs 870 may include such composite automations.

The conductor 820 may manage a fleet of RPA robots 830 and Al agents 850, connecting and executing (as represented by arrow 881) RPA robots 830 and Al agents 850 from a centralized point (e.g., as requested by an AOP engine that is implementing an AOP). Types of RPA robots 830 that may be managed include, but are not limited to, attended robots, unattended robots, development robots (similar to unattended robots, but used for development and testing purposes), and nonproduction robots (similar to attended robots, but used for development and testing purposes). Attended robots are triggered by user events and operate alongside a user on the same computing system. Attended robots may be used with conductor 820 for a centralized process deployment and logging medium. Attended robots may help the user accomplish various tasks and may be triggered by user events. In some embodiments, processes cannot be started from conductor 820 on this type of robot and/or they cannot run under a locked screen. In certain embodiments, attended robots can only be started from a robot tray or from a command prompt. Attended robots should run under user supervision in some embodiments.

Unattended robots run unattended in virtual environments and can automate many processes. Unattended robots may be responsible for remote execution, monitoring, scheduling, and providing support for work queues. Debugging for all robot types may be run in the designer 810 in some embodiments. Both attended and unattended robots may automate various systems and applications including, but not limited to, mainframes, web applications, VMs, enterprise applications (e.g., those produced by SAP^{®}, Salesforce^{®}, Oracle^{®}, etc.), and computing system applications (e.g., desktop and laptop applications, mobile device applications, wearable computer applications, etc.).

The conductor 820 may have various capabilities (as represented by arrow 882) including, but not limited to, provisioning, deployment, configuration, queueing, monitoring, logging, and/or providing interconnectivity. Provisioning may include creating and maintenance of connections between RPA robots 830, Al agents 850, and/or AOPs 870 and conductor 820 (e.g., a web application). Deployment may include assuring the correct delivery of package versions to assigned RPA robots 830, Al agents 850, and/or AOPs 870 for execution. Configuration may include maintenance and delivery of RPA robot and Al agent environments and process configurations. Queueing may include providing management of queues and queue items. Monitoring may include keeping track of robot and Al agent identification data and maintaining user permissions. Logging may include storing and indexing logs to a database (e.g., a structured query language (SQL) database or a "not only" SQL (NoSQL) database) and/or another storage mechanism (e.g., ElasticSearch^{®}, which provides the ability to store and quickly query large datasets). Conductor 820 may provide interconnectivity by acting as the centralized point of communication for third-party solutions and/or applications.

The RPA robots 830 are execution agents that implement workflows built in the designer 810. One commercial example of some embodiments of RPA robots 830 is UiPath Robots^{™}. In some embodiments, the RPA robots 830 install the Microsoft Windows^{®} Service Control Manager (SCM)-managed service by default. As a result, such RPA robots 830 can open interactive Windows^{®} sessions under the local system account, and have the rights of a Windows^{®} service.

In some embodiments, the RPA robots 830 can be installed in a user mode. For such RPA robots 830, this means they have the same rights as the user under which a given RPA robot 830 has been installed. This feature may also be available for high density (HD) robots, which ensure full utilization of each machine at its maximum potential. In some embodiments, any type of the RPA robot 830 may be configured in an HD environment.

The RPA robots 830 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows^{®} sessions and act as a proxy between the conductor 820 and the execution hosts (i.e., the computing systems on which the RPA robots 830 are executed). These services are trusted with and manage the credentials for RPA robots 830. A console application is launched by the SCM under the local system.

User mode robot services in some embodiments manage and monitor Windows^{®} sessions and act as a proxy between conductor 820 and the execution hosts. User mode robot services may be trusted with and manage the credentials for RPA robots 830. A Windows^{®} application may automatically be launched if the SCM-managed robot service is not installed.

Executors may run given jobs under a Windows^{®} session (i.e., they may execute workflows. Executors may be aware of per-monitor dots per inch (DPI) settings. The Al agents 850 may be Windows^{®} Presentation Foundation (WPF) applications that display the available jobs in the system tray window. Note that these agents differ from the Al agents 850. The Al agents 850 may be a client of the service and may request to start or stop jobs and change settings. The command line is a client of the service. The command line is a console application that can request to start jobs and wait for their output.

Having components of the RPA robots 830 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from the designer 810 may also be independent of browser zoom level in some embodiments. For applications that are DPI-unaware or intentionally marked as unaware, DPI may be disabled in some embodiments.

The agentic automation and RPA system 800 in this embodiment is part of a hyper-automation system, such as hyper-automation system 100 of FIG. 1. Developers may use the designer 810 to build and test RPAs, AOPs, and Al agents that utilize Al/ML models deployed in core hyper-automation system 840 (e.g., as part of an Al center thereof). Such RPA robots may send input for execution of the AI/ML model(s) and receive output therefrom via core hyper-automation system 840.

One or more of the RPA robots 830 may be listeners, as described above. These listeners may provide information to core hyper-automation system 840 regarding what users are doing when they use their computing systems. This information may then be used by core hyper-automation system for process mining, task mining, task capture, etc.

An assistant/chatbot (of the conductor 820) may be provided on user computing systems to allow users to launch local RPA robots. The assistant/chatbot may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which an RPA robot or Al agent is executing or on another computing system that the robot or Al agent provides information to. For instance, if a robot calls an Al/ML model that performs CV on images for VM users, but the Al/ML model does not correctly identify a button on the screen, the user may draw a rectangle around the misidentified or non-identified component and potentially provide text with a correct identification. This information may be provided to core hyper-automation system 540 and then used later for training a new version of the AI/ML model.

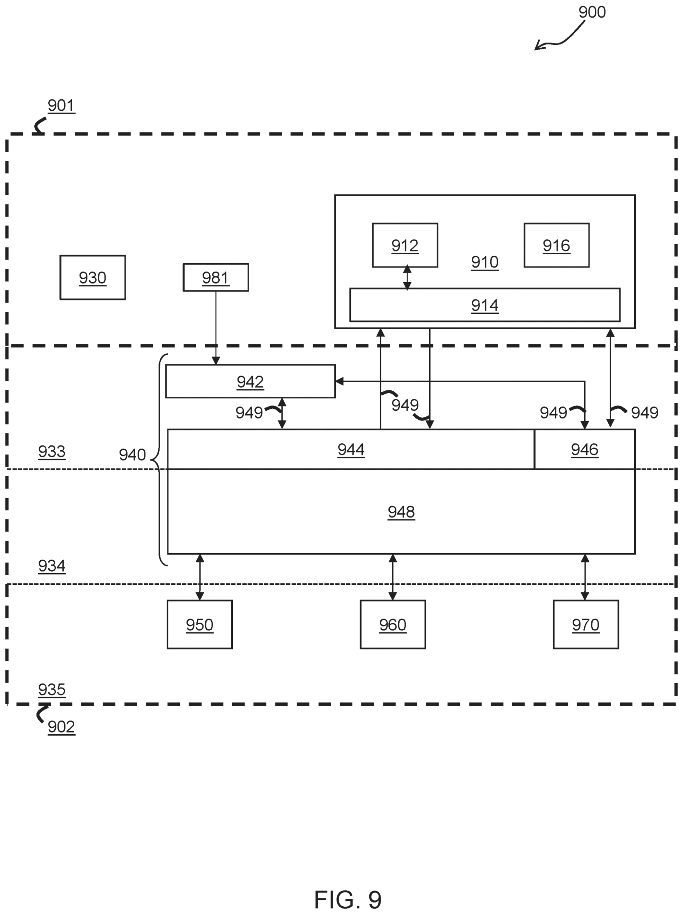

FIG. 9 is an architectural diagram illustrating a deployed RPA system 900, according to one or more embodiments. In some embodiments, RPA system 900 may be a part of agentic automation and RPA system 800 of FIG. 8 and/or hyper-automation system 100 of FIG. 1. It should be noted that the architecture of deployed RPA system 900 may not be used in some embodiments. Deployed RPA system 900 may be a cloud-based system, an on-premises system, a desktop-based system that offers enterprise level, user level, or device level automation solutions for automation of different computing processes, etc.

It should be noted that a client side 901, a server side 902, or both, may include any desired number of computing systems without deviating from the scope of the invention. On the client side 901, a robot application 910 includes executors 912, an execution agent 914, and a designer 916. However, in some embodiments, the designer 916 may not be running on the same computing system as executors 912 and execution agent 914. Executors 912 are running processes. Several business projects may run simultaneously. Execution agent 914 (e.g., a Windows^{®} service) is the single point of contact for all executors 912 in this embodiment. Execution agent 914 is also responsible for sending the status of the robot (e.g., periodically sending a "heartbeat" message indicating that the robot is still functioning) and downloading the required version of the package to be executed.

A listener 930 monitors and records data pertaining to user interactions with an attended computing system and/or operations of an unattended computing system on which listener 930 resides. The listener 930 may be an RPA robot, a AOP, an Al agent, part of an operating system, a downloadable application for the respective computing system, or any other software and/or hardware without deviating from the scope of the invention. Indeed, in some embodiments, the logic of the listener is implemented partially or completely via physical hardware.

On the server side 902, a presentation layer 933, a service layer 934, and a persistence layer 935 are provide, as well as a conductor 940. Further, the presentation layer 933 includes a web application 942, Open Data Protocol (oData) Representative State Transfer (REST) Application Programming Interface (API) endpoints 944, and notification and monitoring 946 and the service layer 934 includes an API implementation / business logic 948). Thus, as shown in FIG. 9, the conductor 940 includes the web application 942, the oData REST API endpoints 944, the notification and monitoring 946, and the API implementation / business logic 948. The persistence layer 935 includes a database server 950, a AI/ML server 960, and an indexer server 970.

The communication between execution agent 914 and conductor 940 is always initiated by execution agent 914 in some embodiments. In the notification scenario, execution agent 914 may open a WebSocket channel that is later used by conductor 940 to send commands to the RPA robot (e.g., start, stop, etc.). It should be noted that, while not shown here in order to reduce clutter in FIG. 9, Al agents can also interact with the conductor 940, as discussed above with respect to FIGS. 1 and 8, for example. The conductor 940 may orchestrate the operations of the Al agents, AOPs, and RPA robots.

All messages in this embodiment are logged into the conductor 940, which processes them further via the database server 950, the Al/ML server 960, the indexer server 970, or any combination thereof. As discussed herein, and with respect to FIG. 8, executors 912 may be robot components.

In some embodiments, an RPA robot represents an association between a machine name and a username. The robot may manage multiple executors at the same time. On computing systems that support multiple interactive sessions running simultaneously (e.g., Windows^{®} Server 2012), multiple RPA robots may be running at the same time, each in a separate Windows^{®} session using a unique username.

The conductor 940 may also facilitate interaction between the Al agents and AI/ML models via AI/ML server 960, which may store and/or facilitate access to generative Al models (e.g., the generative Al models 172 of FIG. 1).

In some embodiments, most actions that a user performs in the interface of conductor 940 (e.g., via a browser 981) are performed by calling various APIs. Such actions may include, but are not limited to, starting jobs on robots, adding/removing data in queues, scheduling jobs to run unattended, etc. without deviating from the scope of the invention. The web application 942 is the visual layer of the server platform. In this embodiment, the web application 942 uses Hypertext Markup Language (HTML) and JavaScript (JS). However, any desired markup languages, script languages, or any other formats may be used without deviating from the scope of the invention. The user interacts with web pages from web application 942 via the browser 941 in this embodiment in order to perform various actions to control the conductor 940. For instance, the user may create RPA robot groups, assign packages to the RPA robots, analyze logs per RPA robot and/or per process, start and stop RPA robots, etc.

In addition to web application 942, the conductor 940 also includes service layer that exposes the oData REST API endpoints 944. However, other endpoints may be included without deviating from the scope of the invention. The REST API is consumed by both the web application 942 and the execution agent 914. Execution agent 914 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 940. Queueing REST endpoints may be responsible for queues and queue item management, such as adding data to a queue, obtaining a transaction from the queue, setting the status of a transaction, etc.

Monitoring REST endpoints may monitor web application 942 and execution agent 914. Notification and monitoring API 946 may be REST endpoints that are used for registering execution agent 914, delivering configuration settings to execution agent 914, and for sending/receiving notifications from the server and execution agent 914. Notification and monitoring API 946 may also use WebSocket communication in some embodiments. As shown in FIG. 9, one or more activities/actions described herein are represented by arrows 949.

The APIs in the service layer 934 may be accessed through configuration of an appropriate API access path in some embodiments, e.g., based on whether conductor 940 and an overall hyper-automation system have an on-premises deployment type or a cloud-based deployment type. APIs for conductor 940 may provide custom methods for querying stats about various entities registered in conductor 940. Each logical resource may be an oData entity in some embodiments. In such an entity, components such as the robot, process, queue, etc., may have properties, relationships, and operations. APIs of conductor 940 may be consumed by web application 942 and/or execution agents 914 in two ways in some embodiments: (1) by getting the API access information from conductor 940; or (2) by registering an external application to use the oAuth flow.

The persistence layer 935 includes a trio of servers in this embodiment - database server 950 (e.g., a SQL server), Al/ML server 960 (e.g., a server providing Al/ML model serving services, such as Al center functionality) and the indexer server 970. Database server 950 in this embodiment stores the configurations of the robots and Al agents, robot and Al agent groups, AOPs, associated processes, users, roles, schedules, etc. This information is managed through the web application 942 in some embodiments. Database server 950 may manage queues and queue items. In some embodiments, database server 950 may store messages logged by the robots and Al agents (in addition to or in lieu of indexer server 970). Database server 950 may also store process mining, task mining, and/or task capture-related data, received from the listener 930 installed on the client side, for example. While no arrow is shown between the listener 930 and the database 950, it should be understood that the listener 930 is able to communicate with the database 950, and vice versa in some embodiments. This data may be stored in the form of PDDs, images, XAML files, etc. It should be noted that structured and/or unstructured data may be stored. Listener 930 may be configured to intercept user actions, processes, tasks, and performance metrics on the respective computing system on which the listener 930 resides. For example, the listener 930 may record user actions (e.g., clicks, typed characters, locations, applications, active elements, times, etc.) on its respective computing system and then convert these into a suitable format to be provided to and stored in database server 950.

AI/ML server 960 facilitates incorporation of Al/ML models into automations. Pre-built AI/ML models, model templates, and various deployment options may make such functionality accessible even to those who are not data scientists. Deployed automations (e.g., RPA robots and/or Al agents) may call AI/ML models from the AI/ML server 960. Performance of the AI/ML models may be monitored and be trained and improved using user-validated data. The Al/ML server 960 may schedule and execute training jobs to train new versions of the AI/ML models. AI/ML model server may also store and/or access generative Al models.

The AI/ML server 960 may store data pertaining to Al/ML models and ML packages for configuring various ML skills for a user at development time. An ML skill, as used herein, is a pre-built and trained ML model for a process, which may be used by an automation, for example. The Al/ML server 960 may also store data pertaining to document understanding technologies and frameworks, algorithms and software packages for various AI/ML capabilities including, but not limited to, intent analysis, NLP, speech analysis, different types of AI/ML models, etc.

The indexer server 970, which is optional in some embodiments, stores and indexes the information logged by the robots. In certain embodiments, the indexer server 970 may be disabled through configuration settings. In some embodiments, the indexer server 970 uses ElasticSearch^{®}, which is an open source project full-text search engine. Messages logged by robots (e.g., using activities like log message or write line) may be sent through the logging REST endpoint(s) to the indexer server 970, where they are indexed for future utilization.

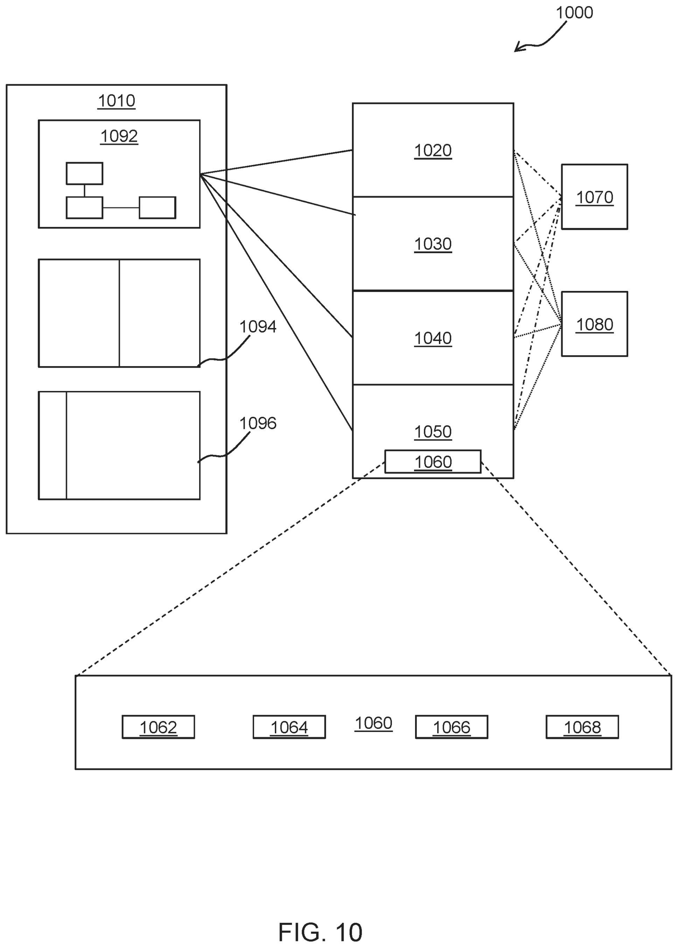

FIG. 10 is an architectural diagram illustrating the relationship 1000 between a designer 1010, activities 1020, 1030, 1040, 1050, drivers 1060, APIs 1070, and Al/ML models 1080, according to one or more embodiments. Per the above, an Al agent, an AOP, or a developer uses the designer 1010 to develop workflows for automations (e.g., workflows executed by RPA robots, Al agents, and AOPs).

The Al agent, the AOP, or the developer can design and configure workflows 1092, design and configure agentic automations 1094 for Al agents (e.g., providing natural language descriptions, context grounding, tools, etc. for Al agents), and design and configure AOPs 1096 (see also FIGS. 4B, 5, and 6). The various types of activities may be displayed to the developer in some embodiments. The designer 1010 may be local to the user's computing system or remote thereto (e.g., accessed via VM or a local web browser interacting with a remote web server). Workflows for RPA robots may include user-defined activities 1020, API-driven activities 1030, Al/ML activities 1040, and/or UI automation activities 1050. User-defined activities 1020 and API-driven activities 1040 interact with applications via their APIs. User-defined activities 1020 and/or Al/ML activities 1040 may call one or more AI/ML models 1080 in some embodiments, which may be located locally to the computing system on which the robot is operating and/or remotely thereto.

Some embodiments are able to identify non-textual visual components in an image, which is called CV herein. However, it should be noted that in some embodiments, CV incorporates OCR. CV may be performed at least in part by Al/ML model(s) 1080. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 1020. However, any number and/or type of activities may be used without deviating from the scope of the invention.

UI automation activities 1050 are a subset of special, lower-level activities that are written in lower-level code and facilitate interactions with the screen. UI automation activities 1050 facilitate these interactions via drivers 1060 that allow the robot to interact with the desired software. For instance, drivers 1060 may include operating system (OS) drivers 1062, browser drivers 1064, VM drivers 1066, enterprise application drivers 1068, etc. One or more of Al/ML models 1080 may be used by UI automation activities 1050 in order to perform interactions with the computing system in some embodiments. In certain embodiments, AI/ML models 1080 may augment drivers 1060 or replace them completely. Indeed, in certain embodiments, drivers 1060 are not included.

Drivers 1060 may interact with the OS at a low level looking for hooks, monitoring for keys, etc. via OS drivers 1062. Drivers 1060 may facilitate integration with Chrome^{®}, IE^{®}, Citrix^{®}, SAP^{®}, etc. For instance, the "click" activity performs the same role in these different applications via drivers 1060.

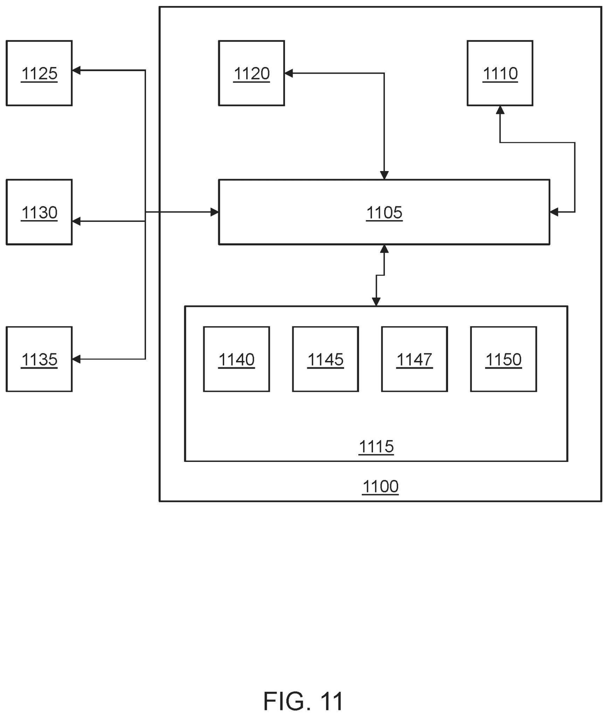

FIG. 11 is an architectural diagram illustrating a computing system 1100, according to one or more embodiments. In some embodiments, computing system 1100 may be one or more of the computing systems depicted and/or described herein. In some embodiments, computing system 1100 may be one or more of the computing systems depicted and/or described herein. In certain embodiments, computing system 1100 may be part of a hyper-automation system, such as that shown in FIGS. 1 and 8. Computing system 1100 includes a bus 1105 or other communication mechanism for communicating information, and processor(s) 1110 coupled to bus 1105 for processing information. Processor(s) 1110 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 1110 may also have multiple processing cores, and at least some of the cores may be configured to perform specific functions. Multi-parallel processing may be used in some embodiments. In certain embodiments, at least one of processor(s) 1110 may be a neuromorphic circuit that includes processing elements that mimic biological neurons. In some embodiments, neuromorphic circuits may not require the typical components of a Von Neumann computing architecture.

Computing system 1100 further includes a memory 1115 for storing information and instructions to be executed by processor(s) 1110. Memory 1115 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 1110 and may include volatile media, non-volatile media, or both. The media may also be removable, non-removable, or both. Computing system 1100 includes a communication device 1120, such as a transceiver, to provide access to a communications network via a wireless and/or wired connection. In some embodiments, communication device 1120 may include one or more antennas that are singular, arrayed, phased, switched, beamforming, beamsteering, a combination thereof, and or any other antenna configuration without deviating from the scope of the invention.

Processor(s) 1110 are further coupled via bus 1105 to a display 1125. Any suitable display device and haptic I/O may be used without deviating from the scope of the invention. A keyboard 1130 and a cursor control device 1135, such as a computer mouse, a touchpad, etc., are further coupled to bus 1105 to enable a user to interface with computing system 1100. However, in certain embodiments, a physical keyboard and mouse may not be present, and the user may interact with the device solely through display 1125 and/or a touchpad (not shown). Any type and combination of input devices may be used as a matter of design choice. In certain embodiments, no physical input device and/or display is present. For instance, the user may interact with computing system 1100 remotely via another computing system in communication therewith, or computing system 1100 may operate autonomously.

Memory 1115 stores software modules that provide functionality when executed by processor(s) 1110. The modules include an operating system 1140 for computing system 1100.

The modules further include a testing module 1145 that is configured to perform all or part of the processes described herein or derivatives thereof.

The modules further include an agentic memory module 1147 that is configured to perform all or part of the processes described herein or derivatives thereof including, but not limited, to execute agentic memory storing context grounding and other results for automations. By way of example, the agentic memory module 1147 is configured to dynamic cache (i.e., storing) escalations, tool calls, user interaction(s) or feedback, context grounding, etc. to provide enhanced efficiency and minimizing calls.

Computing system 1100 may include one or more additional functional modules 1150 that include additional functionality. By way of example, the one or more additional functional modules 1150 can include an extraction and searching module configured to execute advanced agentic extraction and searching for context grounding within automations.

One skilled in the art will appreciate that a "computing system" could be embodied as a server, an embedded computing system, a personal computer, a console, a personal digital assistant (PDA), a mobile phone, a tablet computing device, a smart watch, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a LAN, a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit including custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

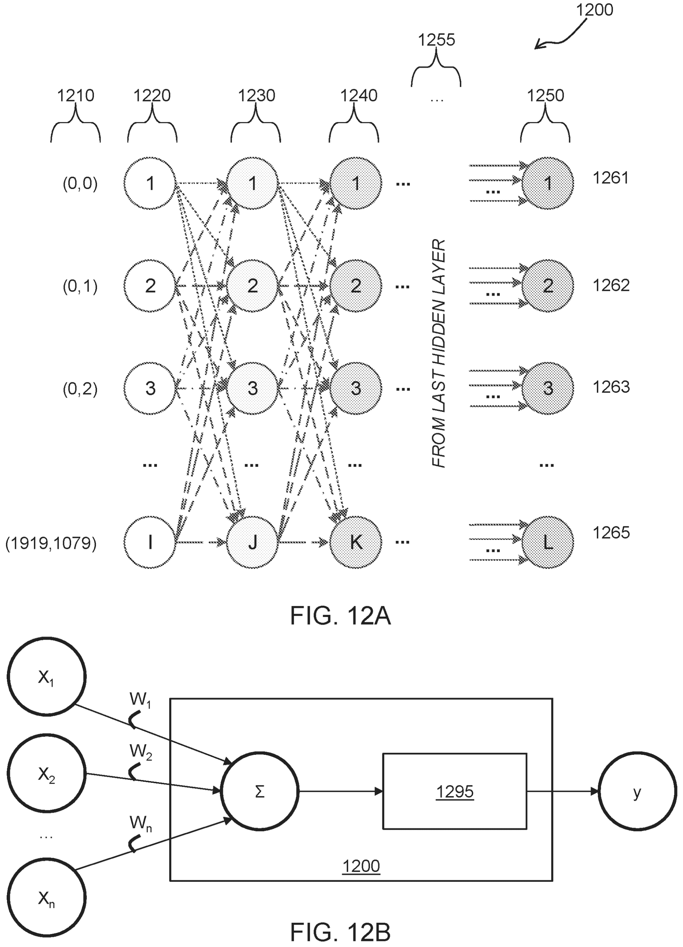

Various types of AI/ML models may be trained and deployed without deviating from the scope of the invention. For instance, FIG. 12A illustrates an example of a neural network 1200 that has been trained to receive inputs (as represented by column 1210) for input "neurons" 1 to I of an input layer (as represented by column 1220), according to one or more embodiments. The neural network 1200 includes a number of hidden layers (as represented by column 1230 and 1240). Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers (e.g., the hidden layers), and an output layer (as represented by column 1250), as is the case in neural network 1200.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 12A, diverse industries and applications, unique industry terminology, complex document structures, and enterprise-specific information with pretrained knowledge, etc. are provided as the input layer and fed as inputs to the J neurons of hidden layer 1. Various other inputs are possible, including, but not limited to, computing system state information, published automations, business rules, information regarding what workflows and/or tasks pertain to, initial definitions of automations, process automation documents, etc. While all of these inputs are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 (1240) receives inputs from hidden layer 1 (1230), hidden layer 3 receives inputs from hidden layer 2 (1240), and so on for all hidden layers until the last hidden layer (as represented by the ellipses 1255) provides its outputs as inputs for the output layer. While multiple suggestions are shown here as output, in some embodiments, only a single output suggestion is provided. In certain embodiments, the suggestions are ranked based on confidence scores. In this embodiment, the outputs can include accurate responses to specialized or recent queries.

It should be noted that numbers of neurons I, J, K, and L are not necessarily equal. Thus, any desired number of layers may be used for a given layer of neural network 1200 without deviating from the scope of the invention. Indeed, in certain embodiments, the types of neurons in a given layer may not all be the same.

Neural network 1200 is trained to assign confidence score(s) to appropriate outputs. In order to reduce predictions that are inaccurate, only those results with a confidence score that meets or exceeds a confidence threshold may be provided in some embodiments. For instance, if the confidence threshold is 80%, outputs with confidence scores exceeding this amount may be used and the rest may be ignored. According to one or more embodiments, the output layer 1250 indicates that two text fields (as represented by outputs 1261 and 1262), a text label (as represented by output 1263), and a submit button (as represented by output 1265) were found. Neural network 1200 may provide the locations, dimensions, images, and/or confidence scores for these elements without deviating from the scope of the one or more embodiments herein, which can be used subsequently by an RPA robot or another automation that uses this output for a given purpose.

Neural networks are probabilistic constructs that typically have confidence score(s). This may be a score learned by the AI/ML model based on how often a similar input was correctly identified during training. Some common types of confidence scores include a decimal number between 0 and 1 (which can be interpreted as a confidence percentage as well), a number between negative ∞ and positive ∞, a set of expressions (e.g., "low," "medium," and "high"), etc. Various post-processing calibration techniques may also be employed in an attempt to obtain a more accurate confidence score, such as temperature scaling, batch normalization, weight decay, negative log likelihood (NLL), etc.

"Neurons" in a neural network are implemented algorithmically as mathematical functions that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

An example of a neuron 1295 is shown in FIG. 12B. Inputs *x₁, x₂,* ... , *xₙ* from a preceding layer are assigned respective weights *w₁, w₂,* ... , *wₙ.* Thus, the collective input from preceding neuron 1 is *w₁x₁.* These weighted inputs are used for the neuron's summation function modified by a bias, such as: ${\sum }_{i = 1}^{m} \left({w}_{i}{x}_{i}\right) + bias$ (1)

This summation is compared against an activation function *f(x)* to determine whether the neuron "fires". For instance, *f(x)* may be given by: $f \left(x\right) = \left\{\begin{matrix}1 if \sum wx + bias \geq 0 \\ 0 if \sum wx + bias < 0\end{matrix}\right.$ (2)

The output *y* of neuron 1295 may thus be given by: $y = f \left(x\right) {\sum }_{i = 1}^{m} \left({w}_{i}{x}_{i}\right) + bias$ (3)

In this case, neuron 1295 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

A goal, or "reward function," is often employed. A reward function explores intermediate transitions and steps with both short-term and long-term rewards to guide the search of a state space and attempt to achieve a goal (e.g., finding the most accurate answers to user inquiries based on associated metrics). During training, various labeled data is fed through neural network 1200. Successful identifications strengthen weights for inputs to neurons, whereas unsuccessful identifications weaken them. A cost function, such as mean square error (MSE) or gradient descent may be used to punish predictions that are slightly wrong much less than predictions that are very wrong. If the performance of the Al/ML model is not improving after a certain number of training iterations, a data scientist may modify the reward function, provide corrections of incorrect predictions, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to repeatedly adjust the weights so as to minimize the difference between actual output and desired output.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input x is processed through a series of N nonlinear activity functions *fᵢ* between each layer *i = 1,* ... *, N* of the network, with the output at a given layer first multiplied by a synaptic matrix *Wᵢ*, and with a bias vector *bᵢ* added. The network output *o*, given by $o = {f}_{N} \left({W}_{N}{f}_{N - 1}\left({W}_{N - 1}{f}_{N - 2}\left(…{f}_{1}\left({W}_{1}x+{b}_{1}\right)…\right)+{b}_{N - 1}\right)+{b}_{N}\right)$ (4)

In some embodiments, o is compared with a target output *t*, resulting in an error $E = \frac{1}{2} {\left‖o-t\right‖}^{2}$, which is desired to be minimized.

Optimization in the form of a gradient descent procedure may be used to minimize the error by modifying the synaptic weights *Wᵢ* for each layer. The gradient descent procedure requires the computation of the output o given an input x corresponding to a known target output *t,* and producing an error *o*-- *t.* This global error is then propagated backwards giving local errors for weight updates with computations similar to, but not exactly the same as, those used for forward propagation. In particular, the backpropagation step typically requires an activity function of the form ${p}_{j} \left({n}_{j}\right) = {f}_{j}^{′} \left({n}_{j}\right)$, where *nⱼ* is the network activity at layer j (i.e., *nⱼ = Wⱼo*_{*j*-}*₁ + bⱼ*) where *oⱼ = fⱼ*(*nⱼ*) and the apostrophe ' denotes the derivative of the activity function f.

The weight updates may be computed via the formulae: ${d}_{j} = \left\{\begin{matrix}\left(o-t\right) ∘ {p}_{j} \left({n}_{j}\right) , & j = N \\ {W}_{j + 1}^{⊤} {d}_{j + 1} ∘ {p}_{j} \left({n}_{j}\right) , & j < N\end{matrix}\right.$ (5) $\frac{\partial E}{\partial {W}_{j + 1}} = {d}_{j + 1} {\left({o}_{j}\right)}^{⊤}$ (6) $\frac{\partial E}{\partial {b}_{j + 1}} = {d}_{j + 1}$ (7) ${W}_{j}^{new} = {W}_{j}^{old} - η \frac{\partial E}{\partial {W}_{j}}$ (8) ${b}_{j}^{new} = {b}_{j}^{old} - η \frac{\partial E}{\partial {b}_{j}}$ (9)
where ∘ denotes a Hadamard product (i.e., the element-wise product of two vectors), ^{T} denotes the matrix transpose, and *oⱼ* denotes *fⱼ*(*Wⱼoⱼ₋₁* + *bⱼ*), with *o₀ = x.* Here, the learning rate *η* is chosen with respect to machine learning considerations. Below, *η* is related to the neural Hebbian learning mechanism used in the neural implementation. Note that the synapses *W* and b can be combined into one large synaptic matrix, where it is assumed that the input vector has appended ones, and extra columns representing the b synapses are subsumed to W.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the AI/ML model is not "over fit" such that it performs well on the training data but does not perform well on other data.

In some embodiments, it may not be known what accuracy level is possible for the AI/ML model to achieve. Accordingly, if the accuracy of the Al/ML model is starting to drop when analyzing the evaluation data (i.e., the model is performing well on the training data, but is starting to perform less well on the evaluation data), the Al/ML model may go through more epochs of training on the training data (and/or new training data). In some embodiments, the AI/ML model is only deployed if the accuracy reaches a certain level or if the accuracy of the trained AI/ML model is superior to an existing deployed Al/ML model. In certain embodiments, a collection of trained Al/ML models may be used to accomplish a task. For example, one Al/ML model may be trained to recognize images, another may recognize text, yet another may recognize semantic and/or ontological associations, etc.

It should be noted that in addition to or in lieu of neural networks, some embodiments may use transformer networks such as SentenceTransformers^{™}, which is a Python^{™} framework for state-of-the-art sentence, text, and image embeddings. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

NLP models such as word2vec, BERT, GPT-3, ChatGPT, other LLMs, etc. may be used in some embodiments to facilitate semantic understanding and provide more accurate and human-like answers, per the above. Other techniques, such as clustering algorithms, may be used to find similarities between groups of elements. Clustering algorithms may include, but are not limited to, density-based algorithms, distribution-based algorithms, centroid-based algorithms, hierarchy-based algorithms. K-means clustering algorithms, the DBSCAN clustering algorithm, the Gaussian mixture model (GMM) algorithms, the balance iterative reducing and clustering using hierarchies (BIRCH) algorithm, etc. Such techniques may also assist with categorization.

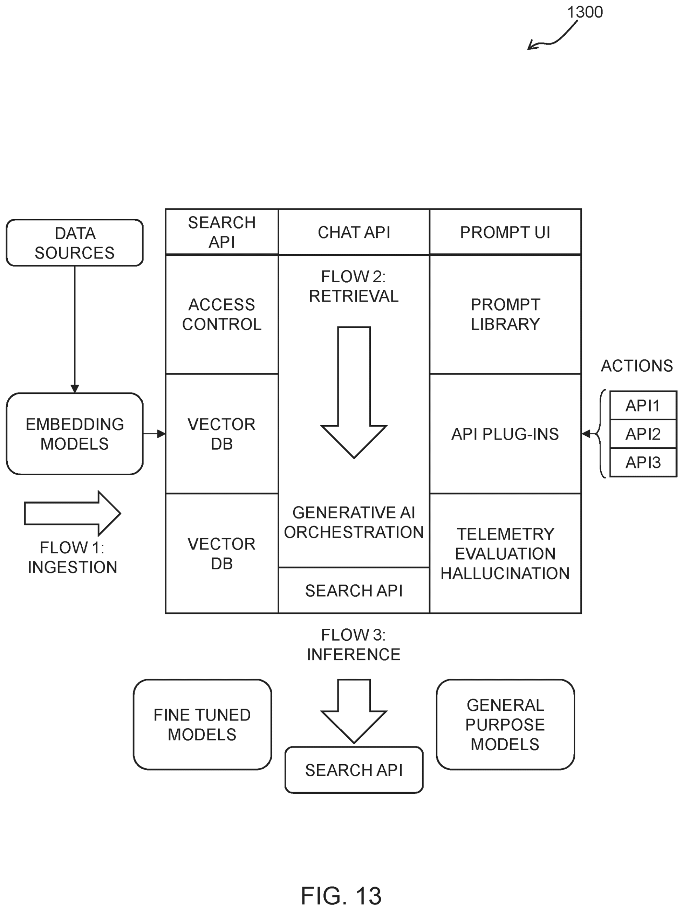

FIG. 13 is an architectural diagram illustrating a reference architecture 1300 for a generative Al model, according to one or more embodiments. The architecture consists of several layers: API plug-ins, a prompt library, vector data source ingestion, access processing control, a model-training pipeline, an assessment layer to assess hallucination/telemetry/evaluations, a BYOM embedding layer, and an LLM orchestration layer. There are also retrieval plug-ins, access control plug-ins, and API plug-ins that integrate into enterprise systems.

There are three main flows in the reference architecture 1300.

Flow 1: Ingestion can include a data ingestion and training flow. For example, data is read from multiple data stores, preprocessed, chunked, and trained through an embedding model (e.g., RAG and a training pipeline (i.e., fine-tuning). The vector database stores the chunked document embeddings (e.g., vector embeddings) that allow for better semantic, similarity-based data retrievals.

Flow 2: Retrieval can include prompt augmentation using data retrieval flow. For example, once a user query arrives at the API layer, the prompt is selected, followed by data retrievals through the vector database or API plug-ins to get the right contextual data before the prompt is passed to the LLM layer.

Flow 3: Inference can include LLM inference flow. For example, this is where there is a choice to use general purpose foundation models from or a self-hosted foundation model. Fine-tuned models may be used when tuned for a specific task or use case. The response is evaluated for accuracy and other metrics, including hallucinations.

It should be noted that in some embodiments, a generative Al model with multiple "heads" may be used. Heads refer to output layers of the generative Al model. Generative Al models, such as generative AI models 172 in FIG. 1, typically have a sequence of layers, and each head will often share the first few layers of the model before diverging into their own distinct layers.

FIG. 14 is a flowchart illustrating a process 1400 for training Al/ML model(s), according to one or more embodiments. In some embodiments, the Al/ML model(s) may be generative Al models, per the above. In the case of neural networks, the architecture typically includes multiple layers of neurons, including input, output, and hidden layers. See FIGS. 12A and 12B, for example. The hidden layers in between process the input data and generate intermediate representations of the input that are used to generate the output. These hidden layers can include various types of neurons, such as convolutional neurons, recurrent neurons, and/or transformer neurons. Generative Al models may also have various layers.

The process 1400 performed in FIG. 14 may be performed by an automation as described herein implemented in a computer program in accordance with one or more embodiments. The computer program may be embodied on a non-transitory computer-readable medium. The computer-readable medium may be, but is not limited to, a hard disk drive, a flash device, RAM, a tape, and/or any other such medium or combination of media used to store data. The computer program may include encoded instructions for controlling processor(s) of a computing system (e.g., see FIG. 11) to implement all or part of the process 1400 described in FIG. 14, which may also be stored on the computer-readable medium.

The training process in some embodiments begins with providing data of diverse industries and applications, unique industry terminology, complex document structures, and enterprise-specific information with pretrained knowledge, etc., whether labeled or unlabeled, at block 1410. In the case of generative AI models, which are often generally trained, the training process may be skipped unless fine-tuned models are desired, as discussed in more detail below. The AI/ML model is then trained over multiple epochs at block 1420 and results are reviewed at block 1430. While various types of Al/ML models may be used, LLMs and other generative AI models are typically trained (fine-tuned) using a process called "supervised learning", which is also discussed above. Supervised learning involves providing the model with a large dataset, which the model uses to learn the relationships between the inputs and outputs. During the training process, the model adjusts the weights and biases of the neurons in the neural network to minimize the difference between the predicted outputs and the actual outputs in the training dataset.

One aspect of the models in some embodiments is the use of transfer learning. For instance, transfer learning may take advantage of a pretrained model, such as ChatGPT, which is fine-tuned on a specific task or domain at block 1420. This allows the model to leverage the knowledge already learned from the pretraining phase and adapt it to a specific application via the training phase of block 1420.

The pretraining phase involves training the model on an initial set of training data that may be more general. During this phase, the model learns relationships in the data. In the fine-tuning phase (e.g., performed during block 1420 in addition to or in lieu of the initial training phase in some embodiments if a pretrained model is used as the initial basis for the final model), the pretrained model is adapted to a specific task or domain by training the model on a smaller dataset that is specific to the task. For instance, in some embodiments, the model may be focused on certain types(s) of data sources. This may help the model to more accurately identify data elements therein than a generative Al model that is pretrained alone. Fine-tuning allows the model to learn the nuances of the source, such as the specific vocabulary and syntax, certain graphical characteristics, certain data formats, etc., without requiring as much data as would be necessary to train the model from scratch. By leveraging the knowledge learned in the pretraining phase, the fine-tuned model can achieve state-of-the-art performance on specific tasks with relatively little additional training data.

If the AI/ML model fails to meet a desired confidence threshold at decision block 1440 in some embodiments, the process 1400 proceeds to block 1450 (as shown by the NO arrow). The training data is supplemented and/or the reward function is modified to help the AI/ML model achieve its objectives better at block 1450 and the process 1400 returns to block 1420.

If the AI/ML model meets the confidence threshold at decision block 1440, the process 1400 proceeds to block 1460 (as shown by the YES arrow). The AI/ML model is tested on evaluation data at block 1460 to ensure that the Al/ML model generalizes well and that the AI/ML model is not over fit with respect to the training data. The evaluation data includes information that the AI/ML model has not processed before.

If the confidence threshold is met at decision block 1470 for the evaluation data, the process 1400 proceeds to block 1480 (as shown by the YES arrow). The Al/ML model is deployed at 1480. If not, the process 1400 returns to block 1450 (as shown by the NO arrow) and the AI/ML model is trained further.

User stories are a fundamental component of software development and play a critical role in shaping the software testing process. At their core, user stories are brief narratives that capture specific system requirements from the end user's perspective. They describe not only what the user expects the system to do but also why that functionality matters to them. A typical user story is written in a concise and straightforward format, such as: "As a [user type], I want [a goal] so that [a reason or benefit]." This format serves as a powerful tool to help development and testing teams focus on the underlying purpose of a feature, steering attention beyond technical details and toward the user's real-world needs. By framing requirements in terms of user behavior, user stories enable testers to design test cases that mirror how actual users will interact with the system.

The primary function of user stories in testing is to keep the focus on validating the system through the lens of the user experience. Since each story reflects how a feature should work from the user's standpoint, it naturally encourages testers to think in practical, scenario-driven terms. Accompanying each story is a set of acceptance criteria-clear, measurable conditions that define when the story is considered complete. These criteria help testers create objective and targeted test cases while minimizing ambiguity. They also serve as a checklist to ensure each functionality behaves as intended, helping teams confirm that business requirements have been met without misinterpretation.

Beyond guiding test creation, user stories are also valuable for fostering collaboration across the entire project team. Written in plain language, they are easily understood by both technical and non-technical stakeholders. This shared clarity brings together developers, testers, business analysts, designers, and product owners, aligning everyone around a common understanding of the feature's purpose and expected behavior. Testers often engage in conversations about user stories to refine requirements, suggest additional edge cases, or flag potential risks that may not be immediately obvious during early discussions.

In addition to supporting the creation of formal, structured test cases, user stories also serve as a springboard for exploratory testing. This type of testing involves interacting with the software without predefined scripts, simulating how real users might behave in unpredictable ways. Since user stories already describe how users are likely to engage with the system, they provide a strong foundation for testers to explore less conventional or boundary-pushing scenarios. Testers might ask themselves: What if the user enters incorrect data multiple times? Does the system handle invalid inputs gracefully? Does the feature still provide value under less-than-ideal conditions?

User stories also help teams prioritize their testing efforts. Features described in higher-priority user stories-typically those that provide the greatest value to users or are essential to the system's core functionality-are tested first. This ensures that critical functionality is validated early in the process, reducing the likelihood of serious issues surfacing late in the development cycle.

For example, consider the user story: "As a registered customer, I want to reset my password using a 'Forgot Password' link so that I can regain access to my account if I forget my login credentials." This scenario highlights a common and essential function for user account recovery. From this story, a set of acceptance criteria can be derived: the "Forgot Password" link should be clearly visible on the login page; clicking the link should take users to a password reset form; users should be required to input a valid, registered email address to receive reset instructions; and the system should present an error message if the email is unrecognized. Once a valid email is submitted, the system must send a password reset email containing a secure, time-sensitive link to a reset page, where users can create a new password.

These acceptance criteria lead directly to a series of practical test cases. For instance, one test would verify the visibility and functionality of the "Forgot Password" link on the login page. Another would check that clicking the link redirects to the reset form. Additional tests would validate both successful and unsuccessful email submissions, ensuring that appropriate feedback is provided in each case. Further cases would confirm that the reset email contains the correct information, that the reset link enforces proper security constraints like expiration timing, and that the user can successfully reset and confirm their new password. A final test might ensure that expired links are handled securely and inform the user to request a new reset link.

Each of these tests directly traces back to the original user story, ensuring that the password recovery feature operates as expected and serves its intended purpose. By mapping each part of the user experience to corresponding test activities, testers can confidently verify that the system delivers a smooth, secure, and reliable process for users who need to regain access to their accounts. In this way, user stories function not only as development guides but also as the foundation for a thorough and user-centered testing strategy.

User stories play a vital role in guiding automated testing efforts by providing a clear blueprint for what needs to be tested and validated through automation. Each user story defines a specific functionality from the user's perspective and includes acceptance criteria that serve as the basis for creating automated test scripts. These criteria specify the expected behavior of the system, allowing testers and developers to write automated tests that directly verify whether the software meets the outlined requirements. For instance, if a user story describes a password reset feature, automated tests can be written to ensure that every step of the process-from clicking the "Forgot Password" link to receiving a reset email-is functioning as expected.

Automated tests derived from user stories are often integrated into continuous testing workflows, running each time new code is deployed or committed to the system. This ensures that functionality described in user stories is consistently validated, reducing the risk of defects and helping teams catch regressions early. In many cases, user stories are also used as the starting point for behavior-driven development (BDD), where acceptance criteria are written in a "Given-When-Then" format. These human-readable scenarios are then automated using tools like Cucumber or SpecFlow, creating a bridge between business requirements and executable automated tests.

Additionally, user stories help teams prioritize their automation efforts. Higher-priority user stories often correspond to critical features that need to be automated first to ensure the stability of the most important parts of the system. Automated tests are also linked back to user stories, providing traceability and making it easier for teams to demonstrate test coverage during reviews or audits. Overall, user stories and automated testing work hand-in-hand to ensure that software not only meets user expectations but is also consistently verified through reliable and maintainable automation.

Converting user stories into automated tests comes with several challenges that teams often encounter. One major challenge is that user stories are typically written in plain, high-level language, focusing on what the user wants rather than specifying technical details. While this abstraction is valuable for communication, it often leaves gaps when trying to translate the story directly into an automated test. The acceptance criteria may be too general, lacking edge cases or specific conditions that an automated test requires to be precise and repeatable.

Conventional automated test generation systems typically rely on static user stories and acceptance criteria as the sole source of truth when creating test cases. However, in agile and fast-evolving development environments, user stories frequently become outdated, incomplete, or divergent from the actual application implementation due to scope changes, incomplete documentation, or rapid codebase modifications. As a result, automated tests generated solely from user stories often fail to align with the true behavior of the system under test (SUT), leading to brittle tests, false positives, missed defects, and poor test coverage.

Manual resolution of such discrepancies traditionally requires significant human intervention, such as labor-intensive manual code reviews, UI walkthroughs, API contract inspections, and ad-hoc debugging efforts by developers or quality assurance (QA) engineers. This results in delays in test creation, inconsistent quality, and an increased risk of deploying untested or incorrectly tested functionality into production environments.

Another common issue is the incompleteness or ambiguity in acceptance criteria. If acceptance criteria are vague or open to interpretation, automation engineers might struggle to determine the exact behavior they should validate. This can lead to inconsistencies in the tests or missed scenarios, particularly for edge cases or negative testing. Teams may need to spend additional time clarifying user stories with stakeholders before they are ready for automation.

There is also the challenge of technical feasibility and tooling. Some user stories involve complex workflows, third-party integrations, or elements like CAPTCHAs or email delivery that are harder to automate reliably. In such cases, testers may need to rely on manual testing or invest in specialized tools or workarounds, which can increase project complexity and costs.

Maintaining test stability is another concern. Automated tests derived from user stories often need to interact with evolving user interfaces or APIs. As the software changes, these tests may frequently break, leading to a high maintenance burden and potential delays in the development pipeline. This is particularly true when tests are tightly coupled to UI elements, which tend to change more often than underlying business logic.

Additionally, there is often a mismatch between user-centric language and system-level implementation. User stories focus on the user's perspective, while automated tests must interact with the underlying system architecture, APIs, or UI components. Bridging that gap requires careful design to ensure that automated tests not only validate functionality but also stay aligned with the user intent described in the story.

Lastly, prioritization can be a challenge. Not all user stories may be ideal for immediate automation, especially if they involve volatile features or areas of the system that are likely to undergo frequent changes. Teams using conventional tools must strike a balance between automating critical, stable functionality and deferring automation for less predictable or lower-priority features.

In one embodiment, the Al agent described herein may be configured to autonomously translate user stories into executable automated test cases. The AI agent operates through three primary components-sensors, a reasoning engine, and actuators-which work together to process user stories, derive test scenarios, and generate corresponding automated tests. The process begins with the sensors, which serve as the Al agent's mechanism for perceiving relevant inputs. The sensors ingest user stories written in natural language, along with associated acceptance criteria and related artifacts, such as business rules, historical test data, or supplementary documentation sourced from project management tools, knowledge bases, or APIs.

Once the data is collected, the AI agent's reasoning engine analyzes the user story to extract critical information, such as user roles, system actions, intended outcomes, and edge conditions. Leveraging natural language processing (NLP) techniques, including large language models (LLMs), the reasoning engine identifies key entities, behaviors, and acceptance conditions articulated in the story. Additionally, the reasoning engine resolves ambiguities by applying machine learning algorithms trained on historical data to infer missing acceptance criteria or flag potential gaps. For example, when processing a user story such as "As a registered customer, I want to reset my password using a 'Forgot Password' link so that I can regain access to my account if I forget my login credentials," the reasoning engine may extract the relevant steps: navigating to the login page, locating and interacting with the "Forgot Password" link, entering a registered email address, receiving a reset email, and successfully resetting the password via a secure link.

The reasoning engine may further translate this information into a structured scenario, such as a behavior-driven development (BDD) format using a "Given-When-Then" structure. For instance, the reasoning engine could automatically generate the following scenario: "Given the user is on the login page, when the user clicks on the 'Forgot Password' link and submits a valid registered email, then the system sends a password reset email containing a secure link." The AI agent's actuators then process this structured scenario to generate executable automated test scripts using tools such as Selenium, Cypress, or other testing frameworks. The actuators may also integrate the generated test scripts into a continuous integration and continuous delivery (CI/CD) pipeline, ensuring that the derived tests are automatically executed and validated as part of the development workflow.

Additionally, the Al agent may autonomously tag or link the generated tests back to the originating user story to maintain traceability and support audit requirements. As user stories evolve over time or acceptance criteria are updated, the Al agent may monitor these changes and automatically modify the associated test cases to ensure alignment with the latest specifications. The combination of autonomous data ingestion, intelligent reasoning, and automated actuation enables the Al agent to significantly reduce the manual effort typically associated with translating user stories into robust and reliable automated tests, while simultaneously improving the accuracy, efficiency, and maintainability of the software testing process.

In one embodiment, the AI agent may be configured to autonomously translate user stories into executable automated test cases by leveraging its sensor, reasoning engine, and actuator components. The AI agent first gathers unstructured and structured inputs via its sensors, including user stories, acceptance criteria, business rules, and contextual project data from various sources, such as APIs, knowledge bases, and issue tracking platforms. These inputs may include natural language text describing user needs, system functionality, and expected outcomes.

In an alternative embodiment, the Al agent's sensors may also capture contextual signals such as historical test execution results, user feedback, or system telemetry to enhance its interpretation of the user story. For example, by considering prior defect reports linked to similar user stories, the Al agent may proactively identify scenarios that warrant additional testing coverage.

The reasoning engine, serving as the core intelligence of the Al agent, applies natural language processing techniques and machine learning models to analyze the collected data. In certain embodiments, the reasoning engine utilizes large language models (LLMs) fine-tuned on domain-specific data to extract relevant user roles, actions, conditions, and expected outcomes from the user story. The reasoning engine may also infer implicit or omitted acceptance criteria based on patterns learned from historical user stories and corresponding test cases. For instance, if acceptance criteria fail to specify behavior under invalid input conditions, the reasoning engine may autonomously suggest or generate additional edge case scenarios, such as handling unregistered email addresses, expired reset links, or email server outages.

In another embodiment, the reasoning engine may convert user stories into machine-readable representations following industry-standard testing frameworks, including but not limited to Gherkin syntax for behavior-driven development (BDD), structured JSON or XML formats, or custom-defined domain-specific languages (DSLs). This structured output may include "Given-When-Then" scenarios or low-level test steps directly compatible with downstream automation tools.

The Al agent's actuators may then autonomously generate executable test scripts based on the structured scenarios. In some embodiments, the actuators interface with external testing frameworks, such as Selenium, Cypress, Playwright, or REST API testing tools like Postman or Newman, to produce test cases in executable formats, such as Python, JavaScript, or Java. The actuators may also programmatically insert the generated test scripts into version-controlled repositories and configure them for execution in continuous integration and continuous delivery (CI/CD) pipelines, such as Jenkins, GitHub Actions, or GitLab CI.

In a further embodiment, the AI agent may include a feedback loop mechanism. After executing the automated tests, the Al agent may collect execution results, such as test pass/fail status, execution logs, and system behavior during test runs. The reasoning engine may analyze these results to identify failure patterns or recurring issues, refining its model parameters and improving future translations of user stories into automated tests. For example, if tests related to email delivery consistently fail due to system latency, the AI agent may automatically adjust timing parameters in future test scripts to improve robustness.

In yet another embodiment, the Al agent may provide an interactive interface that enables human users to review, approve, or override the automatically generated test cases prior to execution. This interface may include suggested improvements, flagged ambiguities, or alternative test scenarios generated by the reasoning engine, thereby facilitating collaborative human-in-the-loop validation.

Additionally, in some embodiments, the Al agent may support integrations with external project management tools, enabling bi-directional communication. For example, after generating and linking test cases to a particular user story, the Al agent may automatically update the associated story or ticket within a project management system, such as Jira, with a status update, test coverage report, or detected risks.

In still another embodiment, the AI agent may utilize reinforcement learning techniques to improve its ability to translate user stories into high-quality automated tests over time. By receiving feedback from developers, testers, or system performance metrics, the agent may dynamically update its training data and optimize its behavior for specific project environments or organizational workflows.

The AI agent may also include a prioritization module that assigns weights to user stories and corresponding automated tests based on business value, system risk, or historical defect rates. Higher-priority test cases may be executed more frequently or earlier in the development cycle, ensuring that critical functionality receives thorough and timely validation.

In one embodiment, the sensors of the Al agent are implemented as a combination of software modules configured to interface with various data sources to perceive and collect relevant information for processing. The sensors may include one or more natural language ingestion modules capable of extracting user stories, acceptance criteria, and related documentation from project management systems, such as Jira, Azure DevOps, or Trello, via APIs, webhooks, or direct database queries. These ingestion modules may include API connectors or web scrapers that regularly poll or listen for updates in ticketing systems, knowledge bases, version control repositories, or requirement management tools.

In another embodiment, the sensors may incorporate file parsing engines that enable the AI agent to read documents and data from local or cloud-based storage. The parsing engines may be configured to process various file formats, including but not limited to plain text files, PDF documents, Word documents, spreadsheets, JSON files, and XML configurations. The file parsing engine may apply optical character recognition (OCR) techniques when encountering scanned or image-based documents.

The sensors may also include a natural language pre-processing pipeline responsible for tokenizing, stemming, and normalizing the ingested text prior to further analysis by the reasoning engine. This pipeline may also incorporate a named entity recognition (NER) system trained to identify and label key entities, such as user roles (e.g., "registered customer"), system elements (e.g., "Forgot Password link"), and actions (e.g., "reset password," "submit email"). In certain embodiments, the NER system may be based on transformer-based models (e.g., BERT or custom fine-tuned LLMs) configured to recognize domain-specific terminology and syntax patterns relevant to software testing workflows.

In a further embodiment, the sensors may be equipped with contextual awareness modules that allow the Al agent to correlate information from multiple sources. For example, the contextual awareness module may link a user story to associated acceptance criteria stored in a separate document, cross-reference related design documentation, or retrieve historical defect data linked to similar user stories. This contextual data enhances the AI agent's ability to interpret the user story with greater accuracy and completeness.

The sensors may also include real-time monitoring components capable of detecting changes or updates to relevant input data. For instance, when a user story is edited or a new acceptance criterion is added to a ticket, the sensors may immediately capture and forward this updated information to the reasoning engine for reprocessing. In some embodiments, the sensors may include configurable rules or machine learning models to prioritize or filter incoming data, ensuring that only relevant inputs are processed based on project-specific criteria.

In yet another embodiment, the sensors may include feedback ingestion modules that collect execution data, such as test pass/fail outcomes, user feedback, or performance metrics, after the automated tests have been executed. This data may be used to refine future test generation processes via the AI agent's feedback loop mechanism.

The modular and extensible nature of the sensors enables the Al agent to seamlessly integrate with various enterprise environments, capturing a broad range of structured and unstructured data necessary for the autonomous generation of automated test cases.

In one embodiment, the sensors of the Al agent may be implemented as a distributed system composed of both software modules and hardware components that work together to collect, process, and forward relevant data. The sensors may be deployed either on-premises within enterprise infrastructure or as part of a cloud-based solution, depending on system requirements and organizational preferences.

In an on-premises configuration, the sensors may be deployed on dedicated computing hardware located within a corporate data center or local network. This hardware may include one or more application servers or edge computing devices configured to host the sensor modules. The hardware may be equipped with multi-core processors, high-capacity RAM, and solid-state drives (SSDs) to support real-time data ingestion and pre-processing of large datasets. The servers may also include network interface controllers (NICs) for high-bandwidth connectivity to internal enterprise systems, such as project management databases, file servers, or version control repositories.

In certain embodiments, specialized hardware accelerators, such as GPUs or TPUs, may be integrated into the on-premises hardware to enable faster execution of computationally intensive tasks, such as running deep learning-based named entity recognition (NER) models or performing optical character recognition (OCR) on scanned documents. The sensors may run as containerized services (e.g., Docker containers) on the hardware infrastructure, allowing for flexible deployment and scaling across multiple machines within a local cluster.

In a cloud-based embodiment, the sensors may be deployed as microservices within a cloud computing environment, such as Amazon Web Services (AWS), Microsoft Azure, or Google Cloud Platform (GCP). In this configuration, the sensors may leverage cloud-native services, such as AWS Lambda, Azure Functions, or Google Cloud Functions, to perform serverless ingestion and preprocessing tasks. The sensors may utilize API gateways to securely communicate with external systems, such as SaaS-based project management tools (e.g., Jira Cloud, Confluence, or GitHub Issues).

Cloud storage services, such as Amazon S3, Azure Blob Storage, or Google Cloud Storage, may be used to store ingested documents, metadata, and pre-processed user stories in scalable object storage. In this cloud-based model, the natural language preprocessing pipeline, OCR modules, and NER systems may be deployed using managed machine learning services, such as AWS SageMaker, Azure Machine Learning, or Google Al Platform, to process large volumes of unstructured text and extract key data elements.

In some embodiments, the cloud-hosted sensors may interface with message queuing services, such as Amazon SQS or Google Pub/Sub, to manage asynchronous data ingestion from disparate sources, ensuring high throughput and resilience to input spikes. The cloud deployment may also support auto-scaling capabilities, dynamically provisioning compute resources based on workload demand to maintain efficient processing without manual intervention.

In an alternative embodiment, the sensors may be implemented as part of a hybrid architecture, combining both on-premises hardware and cloud services. For instance, the ingestion and pre-processing modules may run locally within an enterprise network to comply with data security policies, while computationally intensive tasks (e.g., deep learning inference or large-scale document parsing) may be offloaded to cloud-based services via secure connections. The hybrid approach allows organizations to balance data privacy concerns with the scalability and flexibility of cloud resources.

Regardless of the deployment model, the sensors may integrate with existing DevOps toolchains and enterprise systems. For example, the sensors may pull user stories directly from project management tools (e.g., Jira, Azure Boards) via secure RESTful APIs, or monitor source control systems (e.g., GitLab, GitHub, Bitbucket) for pull requests or code comments containing testable requirements. The sensor modules may also be configured to automatically trigger the downstream AI pipeline upon detecting the creation or update of a new user story, acceptance criteria, or related documentation.

In some embodiments, the sensors may comply with enterprise security protocols, such as secure authentication (e.g., OAuth 2.0, SAML), data encryption at rest and in transit, and role-based access controls (RBAC) to ensure that all data ingestion and processing activities meet regulatory and organizational standards.

The reasoning engine may be implemented as an Al-driven software module designed to autonomously process sensor-collected data and translate user stories into machine-readable test scenarios. It operates as a multi-stage pipeline, with each component handling a specific aspect of data analysis and decision-making.

At the core of the engine is a natural language understanding (NLU) module responsible for parsing and interpreting user stories and their acceptance criteria. This module leverages pre-trained or fine-tuned transformer-based models, such as BERT, RoBERTa, GPT, or proprietary large language models optimized for software development. The NLU module tokenizes the input text, performs syntactic parsing (including part-of-speech tagging and dependency parsing), and applies named entity recognition to extract key elements, such as user roles, actions, system components, constraints, and expected outcomes. In certain configurations, the NLU module includes a coreference resolution submodule capable of resolving references across sentences or documents, such as recognizing that "the user" mentioned later refers to "the registered customer" introduced earlier.

Once the text is understood, an intent and scenario extraction module determines the core objective of the user story and derives the sequence of actions necessary to achieve it. This component may combine rule-based logic with machine learning models trained on datasets of user stories and corresponding test scenarios. For instance, given a user story like "As a registered customer, I want to reset my password using a 'Forgot Password' link," the module identifies the intent as "reset password" and extracts the scenario steps: navigating to the login page, clicking the "Forgot Password" link, entering an email address, and completing the reset process. Additionally, this module may classify the story into functional categories-such as authentication, account management, or transaction processing-to inform downstream test generation.

In one embodiment, the Al agent may be configured to include an application interface matching module and a human-in-the-loop deferral mechanism for situations where generated test actions do not fully align with the system under test (SUT). This embodiment extends prior embodiments by requiring that, after test scenarios and corresponding automated test scripts are generated-whether enhanced with external data or methodologies retrieved via a web search or derived solely from the user story-the AI agent performs a validation process to confirm that the generated actions correspond to actual functionality implemented in the SUT.

The validation process may be implemented by the actuator and reasoning engine in collaboration. Once test scenarios have been finalized, the actuator may query the SUT via one or more validation techniques, including dynamic exploration of a user interface, interrogation of API endpoints, or static analysis of source code or API documentation. For instance, in Ul-driven applications, the actuator may employ browser automation frameworks, such as Selenium or Playwright, to inspect the application's Document Object Model (DOM) and detect the presence of UI components (e.g., buttons, links, input fields) referenced in the generated test scenarios. Similarly, for API-driven applications, the actuator may parse OpenAPI or Swagger specifications or issue exploratory API calls to verify the availability and structure of the required endpoints.

During the matching process, the AI agent compares each action specified in the generated test scenarios-such as clicking a button, submitting a form, or calling a specific API endpoint-against the detected features and components of the SUT. If all referenced actions and expected system responses are fully aligned with the discovered application elements and behavior, the actuator proceeds to generate and execute the executable automated test scripts without human intervention.

However, if one or more actions cannot be fully matched to the SUT, or if the application lacks functionality necessary to achieve the intended scenario outcomes (e.g., a user story requires generation of a confirmation email, but no email service is implemented), the AI agent defers to the user. In this deferral mode, the system generates one or more follow-up questions or prompts for human review. These follow-up prompts may be displayed in the integrated development environment (IDE) interface or delivered via project management or collaboration tools (e.g., Jira tickets, Slack notifications).

For example, if the AI agent detects that a referenced "Forgot Password" button does not exist within the login page of the SUT, the agent may prompt the user with a clarification question such as: "No matching UI element was found for 'Forgot Password'. Would you like to skip this step, suggest an alternative, or escalate as a potential defect?" Likewise, if an API endpoint referenced in the generated scenario cannot be resolved, the agent may offer the user options to adjust the scenario, provide a substitute endpoint, or mark the discrepancy for further investigation.

This user deferral mechanism ensures that the Al agent maintains a human-in-the-loop approach, enabling human users to intervene and resolve ambiguities or mismatches that the AI agent cannot autonomously reconcile. In certain embodiments, user responses to deferral prompts may be logged into the AI agent's memory module for future reference, allowing the system to improve its handling of similar discrepancies in subsequent test generation cycles.

This embodiment provides a critical safeguard to ensure that generated tests are aligned with both the user story requirements and the practical implementation details of the SUT, thereby reducing false positives, improving test accuracy, and preserving developer oversight in cases where autonomous reconciliation is not possible.

In some configurations, an acceptance criteria normalization module transforms natural language acceptance criteria into structured formats like tables, JSON, or domain-specific languages. This module applies semantic similarity models, such as sentence transformers, to infer implicit criteria and may recommend additional acceptance conditions to enhance test coverage. For example, when given a simple acceptance criterion like "The user should be able to reset their password," the module might infer related conditions, such as ensuring the reset link expires after a set period, validating that the provided email is registered, and rejecting expired or reused links.

The engine also includes a scenario-to-test translation module, which converts the extracted scenarios and normalized criteria into formal test specifications. In one version, this module generates human-readable test steps in formats like Gherkin, using behavior-driven development conventions. For example: "Given the user is on the login page, When the user clicks on the 'Forgot Password' link and enters a registered email address, Then the system sends a password reset email with a secure link." Alternatively, the module can produce lower-level test descriptions in structured formats such as JSON, YAML, or XML for automated test frameworks.

To account for non-standard conditions, the engine may incorporate an edge case and negative scenario generator. This component automatically generates failure conditions and edge cases tied to the identified user intent. Examples include submitting an unregistered email address and checking for error messages, leaving the email field empty to verify input validation, or testing expired or reused password reset links. These scenarios may be produced using rule-based systems, heuristics, or classifiers trained to identify high-risk conditions within specific functional domains.

A continuous learning loop may also be integrated into the reasoning engine to enable self-improvement. By collecting feedback such as test pass/fail results, human review comments, or incident data from production, the engine refines its ability to accurately map user stories to test scenarios. Machine learning models may be periodically retrained based on this feedback, improving scenario coverage and reducing errors. Reinforcement learning techniques may also be applied to optimize scenario generation policies, rewarding outcomes that reduce escaped defects or improve testing efficiency.

Finally, the reasoning engine is designed for scalable deployment as a microservice in cloud environments such as AWS ECS, Azure Kubernetes Service, or GCP GKE, or as a containerized module operating alongside sensors and actuators. To enhance processing efficiency, it may use hardware accelerators like GPUs or TPUs, particularly for deep learning tasks related to NLU and scenario extraction. The engine exposes its capabilities through secure RESTful or GraphQL APIs, ensuring seamless integration with internal enterprise systems and third-party DevOps tools.

In one embodiment, the actuator serves as the Al agent's execution module, responsible for autonomously transforming the output generated by the reasoning engine into executable automated tests and performing related operational tasks. The actuator may be implemented as a suite of software services configured to interact with various automation frameworks, CI/CD pipelines, and enterprise applications.

The actuator may include a test script generation module that processes the structured scenarios provided by the reasoning engine-such as Gherkin-formatted scripts, JSON specifications, or XML data-and converts them into executable test scripts. These scripts may be developed in multiple languages, including Python, JavaScript, or Java, and may target specific automation frameworks such as Selenium, Playwright, Cypress, Appium, REST Assured, or others, depending on the nature of the system under test. The actuator may utilize template-driven code generation systems or Al-assisted code synthesis engines to ensure that the generated scripts conform to project-specific coding standards and framework requirements. For instance, scenarios written in a Given-When-Then format may be automatically translated into Selenium WebDriver commands within a Python-based test suite.

In another embodiment, the actuator may include a pipeline integration module that facilitates the seamless injection of the generated test scripts into existing CI/CD pipelines. The actuator may communicate with pipeline orchestration systems such as Jenkins, GitHub Actions, GitLab CI, CircleCl, or Azure DevOps Pipelines through REST APIs, webhooks, or command-line interfaces. Once integrated, the actuator may automate the process of committing test scripts to source control repositories, initiating pull requests, and triggering pipeline jobs for test execution. The actuator may further interact with infrastructure-as-code tools, such as Terraform or Ansible, to prepare and configure the environments necessary for test execution, ensuring that environments are provisioned dynamically and consistently across testing workflows.

The actuator may also incorporate an execution and monitoring module responsible for orchestrating the automated execution of the generated tests and supervising their performance. Tests may be executed across distributed environments, such as a Selenium Grid cluster, cloud-based testing platforms like BrowserStack or Sauce Labs, or within containerized infrastructure, such as Kubernetes pods. During execution, the actuator may collect telemetry data, including system logs, screenshots, performance metrics, and API response data. This telemetry may be captured locally or forwarded to external monitoring platforms, such as the Elastic Stack (ELK), Datadog, or Prometheus and Grafana systems, providing teams with real-time visibility into test performance and system behavior.

To further enhance its capabilities, the actuator may include a reporting and notification module. This module may generate comprehensive reports that summarize test results, including pass and fail statuses, coverage metrics, execution times, and system logs. Reports may be formatted as HTML, PDF, or JSON files, and may be automatically distributed to relevant stakeholders via email, collaboration tools such as Slack or Microsoft Teams, or through integration with test management platforms like TestRail or Zephyr. This ensures that relevant personnel are informed of test outcomes and can act promptly on detected issues.

In an alternative embodiment, the actuator may include a dynamic test maintenance module that proactively manages the stability and longevity of generated automated tests. As the system under test evolves-for example, when user interfaces change or APIs are updated-the actuator may autonomously adapt test scripts to reduce test breakages. This may include automatically updating UI locators, adjusting wait times or retry logic based on detected latency, or modifying test steps to remain compatible with altered workflows. The actuator may also employ self-healing techniques, such as AI-powered visual recognition or pattern matching, to dynamically adjust test execution paths when encountering unexpected changes in the system.

The actuator may also be equipped with mechanisms to ensure security and compliance within enterprise environments. For example, it may encrypt sensitive data, such as login credentials or API tokens, using secure encryption algorithms. The actuator may also establish secure communications with third-party systems via HTTPS or other encryption protocols, and it may enforce role-based access control policies to limit system actions to authorized users and services.

In terms of deployment, the actuator may be implemented in either cloud-based or on-premises environments. In a cloud-based deployment, the actuator may operate as a set of containerized microservices hosted on platforms such as AWS Elastic Container Service (ECS), Azure Kubernetes Service (AKS), or Google Kubernetes Engine (GKE). In on-premises environments, the actuator may run as software services hosted on enterprise servers or virtual machines. In hybrid deployments, the actuator may reside in the cloud while securely interfacing with on-premises test environments via VPN connections or secure tunnels, thereby enabling the execution of automated tests across both public and private infrastructures.

In summary, the actuator is responsible for generating executable automated tests, integrating with CI/CD pipelines, executing tests across diverse environments, monitoring and reporting on test performance, and autonomously maintaining the stability and reliability of the generated tests over time. These combined functionalities allow the AI agent to fully automate the test execution lifecycle with minimal human intervention.

In one embodiment, the invention may be adapted to operate within a multi-agent system, where multiple Al agents collaborate to divide and execute the overall task of translating user stories into executable automated tests. Each Al agent within the system may be assigned a specialized role based on functional capabilities, resource availability, or project-specific requirements, enabling parallel processing and increased scalability.

In a distributed multi-agent configuration, individual agents may each be responsible for a distinct stage of the pipeline. For example, a first Al agent may operate as a dedicated data ingestion agent, equipped with specialized sensors to collect and normalize user stories and related documentation from disparate sources such as project management platforms, documentation repositories, or defect tracking systems. This agent may preprocess the data and forward structured inputs to downstream agents.

A second AI agent may serve as a reasoning agent responsible for performing in-depth natural language understanding (NLU), scenario extraction, and acceptance criteria normalization. This reasoning agent may also include advanced capabilities such as resolving ambiguous user stories, generating negative test scenarios, and performing classification tasks to organize user stories into functional categories.

A third Al agent may function as an actuation agent, specifically tasked with translating processed scenarios into executable test scripts, managing CI/CD pipeline integrations, executing automated tests across distributed environments, and collecting execution telemetry.

In an alternative embodiment, a multi-agent system may include redundant or load-balanced agents for each role, enabling dynamic task allocation based on workload demands or system availability. For instance, multiple reasoning agents may process separate batches of user stories in parallel to improve throughput and reduce processing latency. These agents may coordinate through an agent communication protocol implemented using message brokers, such as RabbitMQ, Apache Kafka, or cloud-native messaging systems like AWS SQS or Google Pub/Sub.

The multi-agent system may include a master coordination agent or a distributed orchestration layer responsible for assigning tasks to the appropriate agents and monitoring system performance. The coordination agent may dynamically adjust resource allocation and task scheduling based on system metrics, such as CPU or memory utilization, task queue lengths, or priority levels associated with specific user stories.

In some embodiments, agents within the multi-agent system may share intermediate results or context data via a shared knowledge base or distributed cache, such as Redis, Apache Ignite, or cloud-based data stores. This shared context may include user story metadata, entity recognition results, extracted scenarios, or previously generated test templates, enabling agents to collaboratively refine test generation processes.

Further, in an advanced implementation, each agent may operate with a degree of autonomy and employ local learning mechanisms, while also contributing to a global learning model that aggregates feedback from all agents in the system. For example, after test execution, telemetry data collected by multiple actuation agents may be aggregated and analyzed by the coordination agent or a dedicated analytics agent to continuously improve reasoning models and test generation policies across the system.

In yet another embodiment, agents within the multi-agent system may specialize by domain or application type. For example, one set of agents may focus exclusively on generating test cases for web applications using UI automation tools, while another set of agents may specialize in generating API-level tests or mobile application tests. This specialization enables tailored workflows and tooling for different testing domains, increasing overall efficiency and accuracy.

By leveraging a modular, multi-agent design, the invention can accommodate large-scale enterprise environments, enabling simultaneous processing of hundreds or thousands of user stories and reducing the time required to generate and execute comprehensive automated test suites. The multi-agent approach also provides fault tolerance, scalability, and flexibility, as agents may be independently deployed, upgraded, or replaced without disrupting the entire system.

In one embodiment, the invention may be adapted to include a replay capability, enabling the AI agent to automatically re-execute previously generated automated test cases under the same or modified conditions. The replay functionality allows the system to validate software behavior over time, identify regressions, and ensure consistent functionality as the underlying system evolves.

The replay feature may be integrated within the actuator module, which retains a historical record of generated test scripts, associated test execution environments, and relevant metadata, such as the originating user story, acceptance criteria, input parameters, and test configuration settings. This historical record may be stored in a test repository or a version-controlled archive, enabling test artifacts to be retrieved and executed on-demand.

In one adaptation, the Al agent may automatically trigger a replay in response to specific events, such as updates to user stories, changes in application code, or deployment of a new software release. For example, when a previously automated feature, such as a password reset flow, is modified in a subsequent sprint, the Al agent may detect changes to the associated user story or acceptance criteria and initiate a replay of all prior test cases linked to that feature.

During replay, the actuator may reconstruct the original execution environment based on captured environment metadata, such as browser versions, operating system configurations, API endpoints, or user roles used during the initial execution. In some embodiments, this may include restoring virtual machines, containerized environments, or cloud infrastructure using infrastructure-as-code scripts to ensure that the replay occurs under comparable conditions.

In another embodiment, the replay functionality may support selective replay, enabling testers or the Al agent to execute a subset of prior test cases based on configurable criteria, such as test priority, risk level, past failure history, or feature relevance. The selective replay capability may be driven by the reasoning engine, which may apply machine learning algorithms or rules-based systems to recommend which tests should be re-executed based on historical data, defect trends, or recent system changes.

The replay functionality may also integrate with telemetry and logging systems, capturing detailed information about each replayed test's execution, including performance metrics, pass/fail outcomes, and system behavior. This data may be compared against previous execution results to identify regressions, performance degradations, or unexpected behavioral deviations.

In further embodiments, the replay module may support configurable parameterization, allowing the Al agent to modify input data, user roles, or environmental variables prior to replay to assess system behavior under new or extended scenarios. For example, the agent may replay a user login flow test using both valid and invalid credentials or simulate different network conditions to validate system resilience.

Additionally, the replay functionality may be exposed via a user interface or API, allowing human testers, developers, or external systems to request manual or automated replays. This interface may include options to select specific test runs, environments, or parameters and may also present comparative analysis reports that highlight differences between original and replayed test executions.

In a cloud-based deployment, replay operations may be distributed across scalable cloud infrastructure to support high-volume test re-execution across multiple regions, platforms, or configurations. In on-premises or hybrid environments, the replay functionality may integrate with internal orchestration systems to efficiently allocate local resources for repeated test runs.

By supporting replay, aspects of the invention enhance its ability to deliver comprehensive regression testing, supports continuous validation in DevOps workflows, and helps ensure long-term software reliability in dynamic and frequently changing enterprise environments.

In one embodiment, the invention may be adapted to include an escalation mechanism that enables the AI agent to autonomously detect critical issues during automated test generation, execution, or analysis and initiate escalation workflows to appropriate stakeholders. The escalation functionality allows the system to address high-severity defects, persistent failures, or process bottlenecks in a timely and systematic manner.

The escalation mechanism may be integrated across multiple components of the Al agent, including the reasoning engine, the actuator, and any monitoring modules. During the test execution phase, the actuator may be configured to monitor for predefined escalation triggers, such as repeated test failures in critical user journeys, violations of key performance indicators (e.g., significant latency spikes or throughput degradation), or system-level incidents such as security vulnerabilities detected during automated testing.

In one embodiment, upon identifying an escalation condition, the actuator may automatically generate a detailed escalation report, which includes information such as the affected user story or requirement, specific acceptance criteria linked to the failure, root cause hypotheses, logs, test output, screenshots, and system telemetry. The report may also include historical context, such as previous occurrences of the issue, defect trends, or the impacted business processes.

Once generated, the escalation report may be automatically routed to appropriate personnel or systems, depending on organizational escalation policies. For instance, the report may be sent directly to project owners, product managers, or QA leads via integrated collaboration tools, such as Slack, Microsoft Teams, or email. In other embodiments, the escalation may trigger automated ticket creation within defect tracking platforms (e.g., Jira, ServiceNow), where the incident is prioritized according to severity, affected scope, or business impact.

In a further adaptation, the AI agent may include an escalation decision engine within the reasoning engine module. This decision engine may leverage machine learning models or rule-based systems to evaluate when escalation is warranted based on contextual data, such as the frequency and severity of test failures, system dependencies, and the criticality of the affected feature. For example, failures detected in high-priority user stories, such as payment processing or authentication workflows, may trigger immediate escalation, while failures in lower-risk areas may only generate warnings or require human review before escalating.

In some embodiments, the escalation process may also be tiered or hierarchical, enabling the Al agent to escalate progressively depending on how the issue evolves. For instance, a minor issue detected during a replay or regression test may initially trigger a notification to the test engineer, but if the issue persists over multiple builds or impacts downstream processes, the agent may escalate further to engineering managers or executive stakeholders.

In an advanced implementation, the Al agent may integrate with incident management platforms, such as PagerDuty, Opsgenie, or Splunk On-Call, to automate paging and incident routing workflows. This allows escalation events to trigger real-time alerts, service desk tickets, or even orchestrated responses such as rolling back a deployment or disabling a problematic feature toggle within a CI/CD pipeline.

Additionally, the Al agent may leverage its learning mechanisms to refine its escalation logic over time. For example, it may analyze post-incident reports, root cause analyses, or feedback from stakeholders to adjust its thresholds, escalation criteria, or severity classification models, ensuring that future escalations are both timely and appropriately prioritized.

The escalation mechanism may also be exposed via a user interface or API, enabling human users to configure escalation rules, thresholds, escalation paths, or override automated decisions when necessary. This allows teams to customize the escalation behavior based on organizational workflows, compliance requirements, or project-specific risk profiles.

By integrating escalation functionality, the invention enhances its role as not just an autonomous testing system, but also as a proactive risk management tool, helping organizations detect, triage, and resolve critical issues rapidly to minimize operational and business impact.

In one embodiment, the invention may be extended to a multi-agent system where escalation responsibilities are distributed among specialized agents to improve responsiveness, fault isolation, and workload distribution. In this configuration, escalation may be managed by a dedicated escalation agent or a set of escalation agents that operate autonomously and in collaboration with other functional agents in the system.

The dedicated escalation agent may serve as an independent monitoring and decision-making component, interfacing with execution agents (e.g., actuators) and reasoning agents to receive real-time alerts and telemetry about anomalies, test failures, or systemic risks detected during automated test generation and execution. The escalation agent may aggregate incident data from multiple agents operating in parallel and evaluate whether the conditions meet escalation thresholds defined by organizational rules or machine learning-based severity models.

In this distributed architecture, the escalation agent may interact with the master coordination agent to determine escalation pathways based on project configurations, feature criticality, and stakeholder hierarchies. For example, when multiple actuator agents detect recurring failures in critical test cases across separate components of a distributed system, the escalation agent may correlate these incidents and escalate them collectively to prevent fragmented reporting and reduce alert fatigue.

The escalation agent may also include domain-specific escalation modules, with each module focusing on a specific functional area, such as UI testing, API testing, or mobile testing. For instance, Ul-focused actuator agents responsible for web application testing may route Ul-related failures directly to a UI escalation module within the escalation agent, while API-related failures may be handled by a separate module trained to interpret backend service risks.

In an advanced embodiment, multiple escalation agents may be deployed in a federated or load-balanced model, where different escalation agents monitor separate subsystems, geographical regions, or product lines, and autonomously escalate incidents based on localized policies and escalation trees. This allows for more granular and context-aware escalation, reducing the burden on centralized resources and ensuring that relevant local teams are engaged promptly.

Additionally, escalation agents may collaborate with one another through interagent communication protocols, such as message queues or distributed messaging systems, to share incident data, synchronize escalation states, and maintain consistency across the system. This is particularly beneficial in large-scale enterprise deployments where multiple teams, products, or regions require independent yet coordinated escalation handling.

In a further embodiment, escalation agents may be tightly integrated with incident response platforms or service management systems, such as PagerDuty, Opsgenie, ServiceNow, or custom ticketing systems, to automate downstream actions. Upon detecting an incident, an escalation agent may autonomously open tickets, notify on-call engineers, trigger response playbooks, or execute mitigation workflows (e.g., disabling faulty pipelines or reverting infrastructure changes) based on the severity level and business impact.

The reasoning agents may also provide the escalation agents with contextual information derived from user stories, such as the business priority of affected features, previous defect trends, or regulatory compliance requirements. This contextual awareness enhances the ability of escalation agents to make intelligent, risk-aware decisions on when and how to escalate.

In addition, escalation agents may participate in the system's feedback loop, learning over time from past incident resolutions, false positives, or delayed escalations to refine escalation thresholds, improve severity classifications, and reduce unnecessary escalations. This may be achieved through reinforcement learning models or heuristic updates derived from post-incident reviews and stakeholder input.

By incorporating dedicated escalation agents into the multi-agent system, the invention enhances its ability to autonomously manage risk and ensure that critical issues are surfaced to the right stakeholders in a timely and efficient manner, without overburdening the core reasoning and actuator agents with escalation responsibilities.

In one embodiment, the system may be adapted to operate as an unattended agent, meaning that the Al agent-or a multi-agent configuration-can autonomously execute its full workflow without requiring active human supervision. This unattended mode is particularly suited for continuous testing, regression suites, or overnight execution cycles in enterprise DevOps pipelines.

The unattended agent configuration may include sensors, reasoning engine, and actuator components that are fully integrated with enterprise infrastructure, allowing the agent to autonomously perform end-to-end workflows. Upon detecting new or modified user stories, acceptance criteria, or related documentation through its sensors, the unattended agent may autonomously initiate the process of test generation, execution, validation, and reporting.

In unattended mode, the agent may operate based on predefined schedules or event triggers. For example, the agent may be configured to automatically process new user stories or acceptance criteria as they are created or updated within project management platforms (e.g., Jira) or source control systems (e.g., GitHub, GitLab). Alternatively, the unattended agent may be triggered on a scheduled basis (e.g., nightly builds) to process all recent changes and ensure that corresponding automated tests are generated and executed without human input.

The reasoning engine in unattended mode may operate with enhanced autonomy, using machine learning-based decision-making to resolve ambiguities, select optimal test generation strategies, and infer missing acceptance criteria. For example, if the unattended agent encounters vague or incomplete acceptance criteria, it may leverage historical patterns or pre-trained models to supplement the missing details and proceed with test generation confidently, rather than pausing for human intervention.

The actuator in an unattended agent configuration may autonomously handle the execution of generated test cases across distributed environments. It may manage environment provisioning (e.g., spinning up containers or cloud test environments), execute the tests, and collect telemetry without requiring manual oversight. After execution, the actuator may generate and distribute detailed reports to predefined recipients or systems, such as test dashboards, ticketing systems, or team communication tools.

To support autonomous decision-making, the unattended agent may be equipped with a configurable decision matrix or AI-based rules engine to define thresholds for escalating incidents, skipping unstable tests, retrying failed executions, or adjusting environmental variables dynamically. For instance, if the unattended agent detects transient network failures or flaky tests, it may automatically retry the tests under alternative conditions or schedule re-executions in the next unattended cycle.

In another embodiment, the unattended agent may integrate with CI/CD pipelines and infrastructure-as-code frameworks, allowing it to autonomously deploy and tear down environments, trigger downstream deployments, or promote builds to higher environments (e.g., from staging to production) based on successful test outcomes. The unattended agent may also integrate with release orchestration tools, enabling it to serve as a gatekeeper for automated release pipelines.

The unattended agent may be configured to comply with security policies and audit requirements by generating immutable logs of its actions and maintaining versioned artifacts of generated tests, execution results, and decision rationale. This ensures traceability and compliance, even when operating without direct human supervision.

In a multi-agent system, unattended agents may collaborate with other unattended agents, each specializing in different areas of the test pipeline (e.g., one agent dedicated to UI testing, another to API testing, another to infrastructure validation), with minimal or no intervention required during coordinated execution cycles.

Additionally, unattended agents may autonomously initiate escalation procedures when severe issues are detected. For example, if critical test failures are identified during overnight cycles, the unattended agent may escalate incidents via ticketing systems or alerting platforms before human teams arrive, allowing issues to be investigated as early as possible.

By supporting unattended operation, the aspects of the invention enable organizations to achieve continuous, lights-out testing and validation, accelerating release cycles and ensuring that automated test generation, execution, and reporting can proceed efficiently and reliably without requiring human intervention at every step.

In one embodiment, the system may be adapted to operate using semi-autonomous agents within a sandbox environment, enabling the agents to perform most of their tasks autonomously while providing a controlled and isolated environment where outputs can be reviewed, validated, or approved by human users before deployment into production systems.

The semi-autonomous agent may perform data ingestion, reasoning, and test generation autonomously, but its ability to execute certain actions-such as deploying test scripts to live CI/CD pipelines or updating production repositories-may be restricted within the sandbox. This ensures that the agent can run end-to-end workflows, such as generating automated test cases from user stories, without impacting live systems or production environments.

The sandbox environment may be implemented as a fully isolated virtual or containerized environment, simulating the target infrastructure where the Al agent operates under conditions that mimic real-world deployment scenarios. The sandbox may include staging versions of project management tools, test environments (e.g., cloned web applications, APIs, or databases), and mirrored CI/CD pipelines. The sandbox allows the agent to safely test its reasoning, generation, and execution capabilities without the risk of introducing errors or unintended changes to production systems.

In this adaptation, the semi-autonomous agent may autonomously retrieve user stories, acceptance criteria, and related project data via the sandboxed sensors, then process and interpret this data using the sandboxed reasoning engine. The agent may autonomously generate test scenarios and corresponding automation scripts and execute them within the sandboxed environment.

One key feature of this semi-autonomous approach is the agent's ability to flag or defer certain actions for human intervention. For example, while the agent may autonomously execute the generated tests within the sandbox, it may pause and present the test results, generated code, or recommended next steps to a human reviewer before triggering a deployment to production pipelines or submitting the tests to a production-level version control system. This interaction may be facilitated via a human-in-the-loop interface, where developers, QA engineers, or product owners can review the agent's output, provide feedback, approve recommended actions, or request adjustments.

Additionally, the sandbox may allow the agent to simulate "what-if" scenarios, such as testing how the system behaves when encountering edge cases, degraded infrastructure conditions, or incomplete user story data. The sandbox may be preconfigured with mock services or test doubles that simulate external dependencies (e.g., third-party APIs, legacy systems), allowing the agent to autonomously explore and validate scenarios that would be too risky or complex to execute in a production environment.

In some embodiments, the semi-autonomous agent may also include a learning loop within the sandbox. As it operates and receives feedback from human reviewers, the agent may record which types of test generation patterns or decision pathways are commonly accepted, rejected, or modified by humans. Over time, the agent may refine its models and heuristics to align more closely with organizational standards, reducing the need for human intervention in future sandbox cycles.

In an advanced implementation, the sandbox environment may be integrated into an approval workflow, where once a human reviewer approves the agent's actions within the sandbox, the semi-autonomous agent may autonomously promote the approved artifacts (e.g., automated test cases) to production systems via secure APIs or CI/CD integration points. The agent may also document all sandbox activities, review comments, and decisions to maintain full traceability and auditability of semi-autonomous operations.

The semi-autonomous mode may also be configured to apply graduated levels of autonomy. For lower-risk tasks, such as generating tests for non-critical user stories, the agent may proceed autonomously within the sandbox and automatically push validated outputs to production. For higher-risk or high-priority features, the agent may require explicit human approval before advancing beyond the sandbox.

By utilizing a sandbox in conjunction with semi-autonomous agents, the system offers organizations a safe testing and validation layer, ensuring that Al-generated outputs are thoroughly vetted before integration into critical production pipelines, while still reaping the productivity benefits of autonomous test generation and execution.

In one embodiment, the system may be adapted to operate using attended agents, which are AI agents designed to work under human supervision, providing real-time support, recommendations, and partial automation while leaving key decisions and actions to the human user. Attended agents may be deployed in scenarios where human expertise is critical for interpreting ambiguous data, ensuring regulatory compliance, or tailoring outputs to project-specific needs.

An attended agent may be integrated directly into a user's development, QA, or DevOps environment, such as a desktop application, integrated development environment (IDE), browser extension, or custom interface embedded within project management tools (e.g., Jira, Azure DevOps). Unlike unattended or fully autonomous agents, attended agents are designed to assist rather than fully automate workflows.

In this adaptation, the sensor module of the attended agent may be configured to ingest user stories, acceptance criteria, or relevant documentation in response to user-initiated actions. For example, a user may manually select a specific user story or project requirement and trigger the agent to begin processing. The sensors may retrieve contextual data from relevant sources (e.g., code repositories, documentation, historical test data) and present this information directly to the user within the attended agent's interface.

The reasoning engine of the attended agent may operate semi-autonomously, providing suggested test scenarios, acceptance criteria normalizations, and potential edge cases based on the ingested user story. These suggestions may be displayed to the user in real time, allowing the user to accept, reject, or modify each recommendation before proceeding to test generation. For instance, the agent may recommend a set of Given-When-Then scenarios and display them in the user interface, where a QA engineer or developer can adjust specific steps or conditions according to project-specific standards.

Additionally, the reasoning engine may assist human users in refining ambiguous or incomplete user stories by recommending clarifications or flagging inconsistencies. For example, if a user story lacks acceptance criteria related to error handling, the attended agent may prompt the user to specify expected behavior for invalid inputs or system exceptions.

Once human input has been incorporated, the actuator module may assist users in generating the corresponding automated test scripts. The attended agent may offer users the ability to select target frameworks (e.g., Selenium, Cypress, Appium) and customize configuration options such as programming language, coding style, or preferred libraries. Upon user confirmation, the actuator may generate the scripts and either deliver them to the user's local environment or initiate execution within a controlled environment.

In an alternative embodiment, the attended agent may provide an interactive dashboard where users can execute tests manually via a point-and-click interface, monitor test execution in real time, and inspect detailed logs, screenshots, or API traces as tests are running. The user retains control over when and how to execute tests, adjust test parameters, or re-run specific test cases based on observed outcomes.

The attended agent may also serve as a collaborative tool, allowing multiple stakeholders-such as QA engineers, developers, and product owners-to interact with the Al agent within shared project management or version control platforms. The agent may facilitate real-time collaboration by enabling multiple users to comment on, refine, or approve the Al-generated artifacts, such as test scenarios, prior to committing them to a shared codebase or CI/CD pipeline.

In a further adaptation, the attended agent may provide contextual assistance by integrating with code editors or browsers to recommend test generation actions based on a developer's current context. For example, while a developer is writing code for a new feature, the attended agent may proactively suggest related user stories and corresponding test cases that should be reviewed or implemented, based on detected code changes or commit messages.

Attended agents may be particularly useful in regulated industries (e.g., finance, healthcare) or safety-critical applications, where human oversight is mandated, and automation is only partially adopted. The attended mode ensures that human judgment and domain expertise are incorporated into the decision-making loop, while still leveraging the Al agent's ability to streamline repetitive and time-consuming tasks.

By supporting attended agents, the system provides a human-in-the-loop configuration that strikes a balance between automation and expert supervision, improving both productivity and the quality of outputs through collaborative workflows.

In one embodiment, the system may be configured to autonomously execute test scripts generated by the actuator module of the AI agent. Once the actuator generates executable automated test scripts, it may automatically deploy them into a designated execution environment without human intervention. This deployment is facilitated by a CI/CD pipeline integration module embedded within or connected to the actuator. The integration module interfaces with continuous integration and delivery platforms, such as Jenkins, GitHub Actions, GitLab CI/CD, or Azure DevOps Pipelines, using direct API calls or webhook-based triggers.

Following the generation of the test scripts, the actuator may commit them to a version-controlled repository, such as GitHub or GitLab, where they are automatically detected by the CI/CD pipeline. The pipeline, in turn, triggers the execution workflow. Prior to execution, the actuator autonomously provisions the required test environment, which may include spinning up containers, launching virtual machines, or configuring serverless infrastructure using tools such as Terraform, Helm, or Ansible.

The actuator selects the appropriate testing framework based on the type of generated test scripts and the system under test. For instance, UI-based test scripts may be executed using Selenium WebDriver, Playwright, or Cypress; API test scripts may be executed using frameworks such as REST Assured or Postman Newman; and mobile application test scripts may be executed using Appium within emulated or cloud-based device environments.

An orchestration engine may be included to schedule and coordinate the test execution process, considering factors such as the criticality of the test scenario, available compute resources, and dependencies between tests. The actuator executes the test scripts either in parallel or sequentially and dynamically adjusts the resource allocation to maximize efficiency.

During execution, the system captures telemetry data and logs, which may include pass/fail results, response times, system logs, screenshots, video recordings of UI interactions, and API call traces. The telemetry is streamed to an observability platform, such as Grafana, Kibana, or Elastic Stack (ELK), enabling real-time monitoring and post-execution analysis.

After execution, the system autonomously performs post-processing tasks. It may update project management systems, such as Jira, by appending the test results directly to the corresponding user stories or tasks. Depending on the outcomes, the system may autonomously promote builds through additional stages of the CI/CD pipeline or halt deployments if critical failures are detected. In the event of severe failures or system-level anomalies, the actuator may also autonomously initiate escalation workflows to notify stakeholders or trigger incident management procedures.

Additionally, the system may archive both the test artifacts and execution telemetry to support traceability, audit readiness, and future replay operations. This closed-loop execution flow allows the AI agent to autonomously manage test generation and execution in a production-grade continuous testing environment.

In one embodiment, the system may be adapted to operate as an attended agent within an Integrated Development Environment (IDE), enabling direct interaction with software developers during the code authoring process. In this configuration, the AI agent's components-namely the sensor, reasoning engine, and actuator-may be encapsulated within a plugin or extension specifically designed for integration with popular IDEs, including but not limited to Visual Studio Code, IntelliJ IDEA, Eclipse, or Visual Studio.

The sensor module may interface with the IDE's native APIs and plugin architecture to detect and ingest user stories, acceptance criteria, and associated project metadata directly from the developer's workspace. In certain embodiments, the sensors may be configured to monitor project management integrations within the IDE, such as embedded Jira boards or linked agile artifacts, to capture relevant user stories in real-time. Additionally, the sensors may retrieve user stories expressed as inline comments within source code files, standalone requirement documents (e.g., markdown, YAML, or JSON files), or embedded metadata contained within project configuration files (e.g., XML, TOML, or JSON formats).

The sensor may further employ file-watching capabilities within the IDE to detect when developers create, modify, or annotate user stories inside the project directory. Upon ingestion, the sensor may forward the data to the reasoning engine for processing.

The reasoning engine may execute natural language processing (NLP) algorithms and machine learning models, such as fine-tuned large language models (LLMs), to autonomously extract structured test scenarios from user stories detected within the IDE environment. The reasoning engine may apply entity recognition and intent extraction to identify system actors, user intents, acceptance criteria, and potential edge cases. The extracted information may then be formatted into a structured machine-readable representation, such as behavior-driven development (BDD) scenarios in Gherkin syntax (e.g., "Given-When-Then" format) or structured data schemas (e.g., JSON or YAML).

The reasoning engine may present the generated scenarios to the developer within an interactive IDE panel or dedicated sidebar. In this attended mode, the developer may review, accept, modify, or reject the AI-generated scenarios using native IDE controls, such as contextual menus, right-click actions, or integrated UI forms. In some configurations, the system may highlight ambiguities within user stories and recommend additional acceptance criteria based on historical data, domain-specific heuristics, or identified gaps.

Upon developer approval, the actuator module may autonomously generate executable test scripts corresponding to the accepted scenarios. The actuator may synthesize automation code in programming languages supported by the developer's environment, such as Python, JavaScript, or Java, and leverage automation frameworks compatible with the system under test (e.g., Selenium WebDriver for UI testing, Cypress for end-to-end testing, Playwright for cross-browser automation, or REST Assured for API testing).

The actuator may automatically insert the generated test scripts into the appropriate project directories within the IDE workspace, including scaffolding project-specific file structures, configuring test suites, and updating dependency management files, such as pom.xml for Maven-based Java projects or package.json for Node.js-based frameworks. In further embodiments, the actuator may also modify CI/CD pipeline configurations located within the project, such as updating YAML workflow files (e.g., .github/workflows for GitHub Actions or .gitlab-ci.yml for GitLab CI/CD) to register the new automated tests for execution in downstream pipelines.

The actuator may provide additional functionality within the IDE to allow the developer to initiate test execution locally or in connected remote environments. The actuator may integrate with terminal windows or task runners within the IDE to execute the tests on-demand, capturing real-time logs, test pass/fail statuses, screenshots, and telemetry, which may be presented in a developer-facing dashboard or log console.

In another embodiment, the attended agent may include a contextual assistance module, configured to provide proactive test-related recommendations as the developer writes application code. The contextual assistance module may monitor source code edits and suggest relevant user stories, recommended test scenarios, or reusable test components based on the developer's active file or code snippet. For example, when a developer implements a new API endpoint, the attended agent may automatically suggest corresponding API-level automated tests and highlight potential edge cases (e.g., input validation, error handling) for inclusion.

Additionally, the attended agent may maintain bidirectional communication with external project management or test management tools via secure APIs. For instance, once an Al-generated test case is finalized and committed within the IDE, the agent may automatically update the corresponding user story within a project management system (e.g., Jira) to indicate that an automated test has been created and linked, ensuring full traceability between user stories and associated test artifacts.

In some embodiments, the attended agent may include a feedback loop mechanism, wherein the developer's interactions-such as edits to Al-generated scenarios, manual test case additions, or rejection of suggestions-are logged and utilized to refine the reasoning engine's NLP and scenario generation models. The system may leverage reinforcement learning techniques or supervised learning updates to improve future AI recommendations based on observed user preferences and project-specific testing patterns.

By integrating directly into the IDE environment, the Al agent enhances developer productivity by reducing context switching, accelerating the conversion of user stories into automated test cases, and facilitating collaborative workflows between development and quality assurance teams. This attended agent embodiment further enables seamless adoption within agile development cycles and DevOps pipelines while preserving developer oversight and control over automated test generation and integration workflows.

In one embodiment, the AI-driven system may be adapted to autonomously detect and address situations where a user story and its associated acceptance criteria do not fully conform to the actual implementation of the application under test. In this configuration, the system may incorporate an implementation verification module integrated within the Al agent's reasoning engine and actuator components. This module is configured to perform a conformance analysis between the user story-derived test scenarios and the observed behavior of the application under test (AUT).

The process begins with the sensor module receiving the user story and acceptance criteria via one or more of the methods previously described, such as ingestion from inline code comments, project management integrations, or requirement documents within an IDE or external repository. The reasoning engine processes the input by applying natural language processing (NLP) pipelines, which may include syntactic parsing, named entity recognition, and intent extraction. This step generates one or more structured test scenarios in machine-readable formats, such as Gherkin syntax or JSON-formatted scenario files.

Before the actuator generates the corresponding executable test scripts, the reasoning engine initiates an implementation conformance analysis. This analysis may include querying the AUT directly by interacting with its APIs, user interfaces, or backend services using test drivers, browser automation frameworks (e.g., Selenium or Playwright), or API clients. In certain embodiments, the actuator may perform static analysis of the project's source code or application metadata, such as reviewing OpenAPI/Swagger documentation for APIs or inspecting UI component hierarchies via DOM analysis tools. The system may utilize automated scanning techniques to map application elements, extract API endpoint definitions, and review source code artifacts.

The reasoning engine compares the extracted application data with the user story-derived expectations using Al-driven diffing algorithms. These algorithms may include semantic comparison models, vector-based similarity scoring, or rule-based heuristics to identify mismatches between the defined user intents, system behaviors, and acceptance criteria against the actual structure and functionality of the AUT. Detected discrepancies may include missing UI elements (e.g., absence of a "Forgot Password" link described in the user story), modified API endpoints (e.g., /reset-password changed to /recover-password), differing parameter types, or omitted acceptance criteria such as missing input validation mechanisms.

Upon identifying a non-conformance, the Al agent may autonomously adjust the test scenarios to align with the implementation. For instance, the reasoning engine may modify locators, update API paths, or adjust acceptance criteria to reflect the actual system under test. In cases where the deviation surpasses a predefined risk threshold or falls outside confidence bounds derived from machine learning models, the system may escalate the issue. The escalation may involve generating a discrepancy report, which includes a structured side-by-side comparison of the expected user story requirements and the detected implementation behavior, accompanied by recommended remediation steps. The discrepancy report may be transmitted to stakeholders via project management tools (e.g., Jira or Azure Boards), integrated collaboration platforms (e.g., Slack, Microsoft Teams), or dedicated dashboards within the IDE interface.

In a further embodiment, the actuator may include a runtime validation layer that dynamically verifies test assumptions during execution. This layer may perform additional checks at runtime, such as validating the presence of expected UI components within the DOM tree or verifying that API responses conform to expected schemas derived from the user story. Where discrepancies are encountered during execution-such as missing fields in an API response or absence of an expected UI button-the actuator may log the anomalies, tag the affected tests, and automatically trigger follow-up actions, including reprocessing of the user story or reclassification of the detected issue for human-in-the-loop review.

Additionally, the system may implement a continuous feedback mechanism, whereby historical test execution data, incident reports, and human feedback are ingested to improve the conformance analysis models over time. This feedback may be used to retrain underlying machine learning models, enabling the system to better predict and resolve non-conformances in future iterations. In certain embodiments, the Al agent may employ reinforcement learning techniques, adjusting decision policies based on past performance, observed system behavior trends, or feedback from development and QA teams.

By incorporating an implementation verification module capable of autonomously detecting and resolving user story-to-implementation mismatches, this embodiment of the invention enhances the robustness of the automated test generation process. It ensures that the generated test artifacts remain aligned with the actual deployed system, reducing the risk of false positives or ineffective test coverage, and improving overall software quality in fast-paced development environments.

In one embodiment, the AI agent may be augmented with a memory module configured to store and utilize historical data relating to previously generated automated test scripts that have been validated by human users or through successful execution in continuous integration/continuous delivery (CI/CD) pipelines. The memory module may be integrated within the reasoning engine and actuator components and may be implemented as a persistent storage layer comprising a relational database, NoSQL datastore, or graph database designed to associate user stories with corresponding test artifacts and system behavior records.

As part of this embodiment, when the Al agent receives a user story and associated acceptance criteria via its sensor module, as described in prior embodiments, the reasoning engine may reference the memory module to retrieve historical records of similar user stories. The memory module may store data entries that include the original user story text, extracted test scenarios, the final generated automated test scripts, any manual edits performed by human users within the IDE interface, and outcome data from prior CI/CD pipeline executions, such as test pass/fail status, execution stability metrics, and feedback annotations supplied by development or QA personnel. The historical records may further include associated system data, such as specific UI elements or API endpoints detected in the corresponding system under test (SUT) at the time of the original test generation.

The reasoning engine may employ semantic similarity models to perform embedding-based matching between the current user story and the historical dataset. For example, the reasoning engine may utilize transformer-based sentence encoders to convert the user story text into dense vector representations and query the memory module to identify prior user stories with high contextual similarity scores. The reasoning engine may then extract patterns from the matched historical records to inform the generation of new test scenarios. For instance, if the memory module indicates that prior user stories relating to "password reset" features consistently included a token expiration validation step or email delivery verification, the reasoning engine may automatically propose similar steps for the new user story, even if the current user story lacks explicit mention of these steps.

In certain embodiments, the reasoning engine may be further configured with reinforcement learning (RL) or supervised learning models trained on the historical dataset to identify patterns associated with successful test outcomes. The RL agent may be rewarded based on positive reinforcement signals derived from historical test success metrics, such as consistent test pass rates, absence of test flakiness, or favorable human feedback. Over time, the Al agent incrementally improves its decision-making policy for test scenario extraction and test script generation by learning from this historical performance data.

The actuator module may also leverage the memory module during script generation, enabling it to apply project-specific coding conventions, preferred test frameworks, or reusable code components that have previously been validated. For example, the actuator may preferentially select Selenium with Python or Cypress with JavaScript based on historical usage patterns recorded in the memory module for a specific project or team.

The feedback loop may be closed by continuously updating the memory module with new data after each test generation and execution cycle. When newly generated test scripts are validated-either through successful CI/CD pipeline runs or positive user feedback collected via the IDE plugin-the system automatically logs the new user story, adjusted test scenarios, generated code artifacts, and test execution outcomes into the memory module. In the event of repeated issues, such as patterns of brittle tests or commonly rejected test suggestions, the system may flag these trends to refine its internal models and adapt future generations to avoid similar pitfalls.

In a further embodiment, the reasoning engine may integrate the memory module with the discrepancy resolution process. When discrepancies are detected between the user story and the SUT (e.g., a mismatch between a specified UI element and the actual implemented UI structure), the reasoning engine may leverage historical memory to propose adjustments aligned with past resolutions accepted by users. For example, if a similar discrepancy was previously addressed by renaming a step from "Forgot Password" to "Recover Password," and this adjustment was validated by the user or pipeline, the system may proactively suggest or apply a comparable modification.

This embodiment enables the AI agent to progressively "learn" from prior successful test generation activities, reducing the reliance on repetitive human interventions, improving the consistency of generated tests, and embedding project-specific or organizational knowledge directly into the test generation workflow. The technical result is an adaptive AI agent that delivers increasingly accurate, reliable, and context-aware automated test artifacts over time.

In one embodiment, the Al agent may be configured with an enhanced sensor module that incorporates an integrated web search tool to autonomously discover and retrieve external data and methodologies relevant to the generation of test scenarios and automated test scripts. This sensor module may include a web search engine interface, such as a RESTful API client configured to interact with commercial search engine services (e.g., Google Custom Search API, Bing Search API) and/or a custom-built web crawler configured to query and scrape domain-relevant information from predefined or dynamically discovered websites.

When the sensor module receives a user story and associated acceptance criteria from one or more data sources, such as project management tools, requirement documents, or inline code comments, the sensor may analyze the input using natural language understanding (NLU) techniques to extract key concepts, such as domain-specific terms, system actions, business logic, or target entities. The extracted information may be processed to automatically generate one or more search queries that are contextually relevant to the user story. For example, if the user story relates to "calculate mortgage repayment schedule," the sensor may construct queries such as "standard mortgage calculator test data," "mortgage calculation edge cases," or "regression testing methodologies for financial applications."

The sensor module may further augment the queries using project metadata or user-defined parameters. For instance, the sensor may append keywords related to regulatory compliance (e.g., "SOX," "GDPR") or application type (e.g., "mobile web app," "REST API") to tailor the search towards resources suited to the particular project domain.

Upon dispatching the queries, the sensor module receives search results that may include structured datasets (e.g., CSV, JSON, XML), technical documentation, published test case libraries, community-sourced knowledge (e.g., developer forums like Stack Overflow or QA-focused portals), and open-source code repositories (e.g., GitHub projects containing reusable test components or scripts). The sensor may apply ranking and filtering logic to prioritize trustworthy and high-relevance resources, utilizing metrics such as domain authority, keyword density, and content type (e.g., tutorials, scholarly articles, data samples).

The retrieved content is then passed to the reasoning engine, which processes the web-discovered data to extract useful artifacts for the test generation process. In some embodiments, the reasoning engine may parse data files (e.g., CSV test datasets) and map them to specific variables or input fields identified in the user story-derived test scenarios. In other cases, the reasoning engine may integrate externally discovered methodologies or recommended practices directly into the logic of the generated test scenarios. For example, if the web search identifies domain-specific testing guidance-such as boundary value analysis for financial inputs or OWASP security testing patterns-the reasoning engine may embed these techniques into the extracted "Given-When-Then" steps or as part of automated assertions.

Subsequently, the actuator module generates executable automated test scripts that incorporate the external data and methodologies identified via the web search. The actuator may load discovered datasets into the automation framework as fixture files or dynamically referenced input parameters. Additionally, the actuator may scaffold custom test functions or reusable test modules based on discovered code snippets or domain-specific templates.

To maintain compliance with security and data governance requirements, the sensor module may be configured with access control policies that restrict web searches to approved domains or repositories, and may tag external data sources with metadata for traceability. This metadata may include URLs, timestamps, and content hashes of the retrieved assets, which may be logged and attached to the generated test artifacts.

By incorporating a web search capability within the Al agent's sensor module, this embodiment allows the agent to autonomously augment its internal test generation processes with external knowledge, enabling the generation of highly relevant, domain-specific, and standards-compliant automated tests. This capability significantly enhances the Al agent's ability to create robust and comprehensive test scenarios, especially in situations where the user story alone does not provide sufficient detail for full coverage.

Referring now to FIG. 15, a method 1500 is illustrated for implementing a fully autonomous AI agent configured to generate and execute automated test scripts derived from user stories. At step 1502, the AI agent's sensor module retrieves a user story and its corresponding acceptance criteria from one or more data sources, which may include REST APIs connected to project management systems (e.g., Jira Cloud, Azure DevOps), document repositories (e.g., Confluence, SharePoint), or version-controlled requirement files (e.g., Markdown or YAML files stored in Git repositories). The sensor may also aggregate auxiliary data, such as business rules, historical defect logs, or prior test results to enrich its contextual understanding.

At step 1504, the Al agent's reasoning engine performs multi-layered natural language processing on the ingested user story and acceptance criteria. The reasoning engine may include a fine-tuned large language model (LLM), such as a domain-specific transformer model, configured to perform tasks such as entity recognition, intent extraction, and scenario decomposition. The engine analyzes narrative elements of the user story to extract system actors, actions, preconditions, and postconditions, automatically inferring missing acceptance criteria where appropriate. Additionally, the engine may apply a risk classification algorithm, tagging scenarios with priority levels based on historical failure rates or business criticality.

At step 1506, the reasoning engine generates one or more structured representations of the extracted test scenarios, formatting them in machine-readable formats compatible with industry-standard testing frameworks. In some embodiments, the representation may take the form of Gherkin-based Given-When-Then scenarios for behavior-driven development (BDD), or structured JSON schemas for input to automation tools like Selenium or Cypress. The structured output may include metadata such as feature tags, data-driven parameterization, and environment configurations (e.g., test environments, browsers, API endpoints).

At step 1508, the actuator module of the Al agent generates executable automated test scripts based on the structured test scenarios provided by the reasoning engine. In some instances, this generation process includes translating abstract test steps, such as user interface (UI) actions described in the test scenarios, into fully executable artifacts aligned with a specific automation framework. The actuator may be configured to autonomously resolve the underlying technical details required to operationalize these UI actions. In such embodiments, the agent is provided with access to an instance of the target application through one or more mechanisms: (i) direct access to a machine or virtual machine hosting the deployed application, (ii) access to a pre-configured sandbox environment simulating the production system, or (iii) access to infrastructure-as-code (laC) resources, such as Terraform templates or Ansible playbooks, which allow the Al agent to autonomously provision a dedicated sandboxed environment on-demand within a cloud or virtualized infrastructure.

Once the target environment is accessible, the actuator autonomously executes a UI exploration process. This process is performed using browser automation tools or headless browsers, such as Selenium WebDriver, Playwright, or Puppeteer, configured to interact programmatically with the application's graphical user interface (GUI). The actuator iteratively navigates through the UI components relevant to the test scenario, performing exploratory interactions including, but not limited to, clicking buttons, submitting forms, entering text into input fields, navigating multi-step workflows, and validating dynamic elements rendered by client-side scripts.

During this autonomous UI traversal, the actuator captures technical details necessary for code synthesis. Specifically, the actuator extracts element locators, including identifiers such as DOM element IDs, CSS selectors, XPath expressions, data attributes, or ARIA labels, for each UI element involved in the test flow. These locators are mapped to their corresponding steps within the test scenario extracted by the reasoning engine. For example, if a test scenario specifies "When the user clicks the 'Forgot Password' link," the actuator will identify the corresponding clickable element in the application interface (e.g., a.forgot-password or #reset-password-btn) and generate the appropriate automation code (e.g., driver.find_element_by_css_selector('a.forgot-password').click();).

Following the completion of this mapping process, the actuator generates a fully executable automated test script in accordance with the project's preferred programming language and test framework. For instance, the actuator may generate Python-based Selenium tests, JavaScript-based Cypress tests, or Java-based REST Assured API tests. The generated code may include standard test structure elements such as setup and teardown routines, assertions, error-handling logic, and the integration of captured UI selectors into page object models or reusable functions.

In certain embodiments, the actuator may further modify or augment project configuration files and CI/CD pipeline scripts to ensure that the generated tests are automatically registered and executable within the pipeline. For example, the actuator may update Jenkinsfiles, .gitlab-ci.yml, or GitHub Actions workflow files to add execution steps and environment-specific variables.

This embodiment enables the AI agent to autonomously resolve the implementation-level details required to transform high-level test scenarios into robust, system-specific automation code, thereby reducing manual intervention, accelerating test development cycles, and ensuring that the generated scripts accurately interact with the actual deployed user interface of the system under test. At step 1508, the actuator autonomously provisions a test environment, which may include launching containers or virtual machines using infrastructure-as-code templates (e.g., Terraform or Kubernetes Helm charts). The actuator then executes the automated test scripts in parallel or sequential execution modes, depending on resource availability and test dependencies. Execution telemetry, such as logs, screenshots, and API response payloads, may be captured and streamed to a centralized observability platform, such as Grafana or Elastic Stack (ELK), for real-time monitoring and post-run analysis.

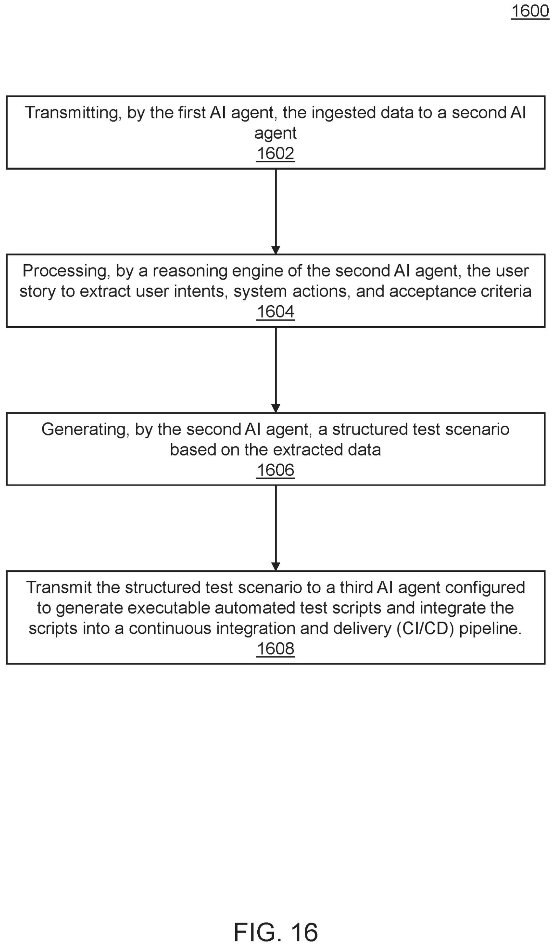

Turning now to FIG. 16, a method 1600 is depicted in which a distributed multi-agent system autonomously collaborates to process user stories and generate automated tests. At step 1602, a first AI agent, referred to as the ingestion agent, retrieves a user story and related project artifacts from an upstream system such as a project management tool, a shared knowledge base, or a defect tracking system. The ingestion agent preprocesses the data, performing lightweight normalization (e.g., text cleaning, metadata enrichment), and transmits the structured payload to a downstream agent.

At step 1604, the first agent transmits the enriched data payload to a second AI agent, referred to as the reasoning agent. The reasoning agent is equipped with a more advanced reasoning engine, including deep-learning-based NLU models, task-specific heuristics, and domain-specific rule sets. The reasoning agent processes the payload to extract actionable information, such as user intents (e.g., "reset password"), system behaviors (e.g., "send reset email"), and acceptance criteria (e.g., "reset link must expire after 24 hours"). The reasoning agent may also generate a logical test matrix identifying positive, negative, and edge case scenarios based on the extracted data.

At step 1606, the reasoning agent outputs a structured test scenario, encapsulating all extracted details in a standardized format, such as a YAML manifest or BDD scenario file. This structured artifact may include priority indicators, dependencies between test steps, and environmental variables.

At step 1608, the structured scenario is transmitted to a third Al agent, referred to as the actuation agent. The actuation agent dynamically generates executable test scripts based on the structured scenario, selecting appropriate automation frameworks according to project preferences or system characteristics. For instance, the agent may generate Selenium-based UI tests for web interfaces or REST Assured tests for API endpoints. The actuation agent may also autonomously commit the generated scripts to a version control system (e.g., GitHub or GitLab) and trigger jobs within a CI/CD pipeline (e.g., Jenkins, GitHub Actions, or GitLab CI/CD) to execute the newly generated tests as part of the continuous testing process.

At step 1610, the actuation agent integrates the tests into the broader DevOps workflow, ensuring seamless orchestration of test execution, reporting, and downstream automation tasks. The multi-agent configuration of FIG. 16 allows for specialized task delegation, fault isolation, and scalable parallel processing, enabling the system to efficiently handle large volumes of user stories and deliver continuous, intelligent automation of the software testing lifecycle.

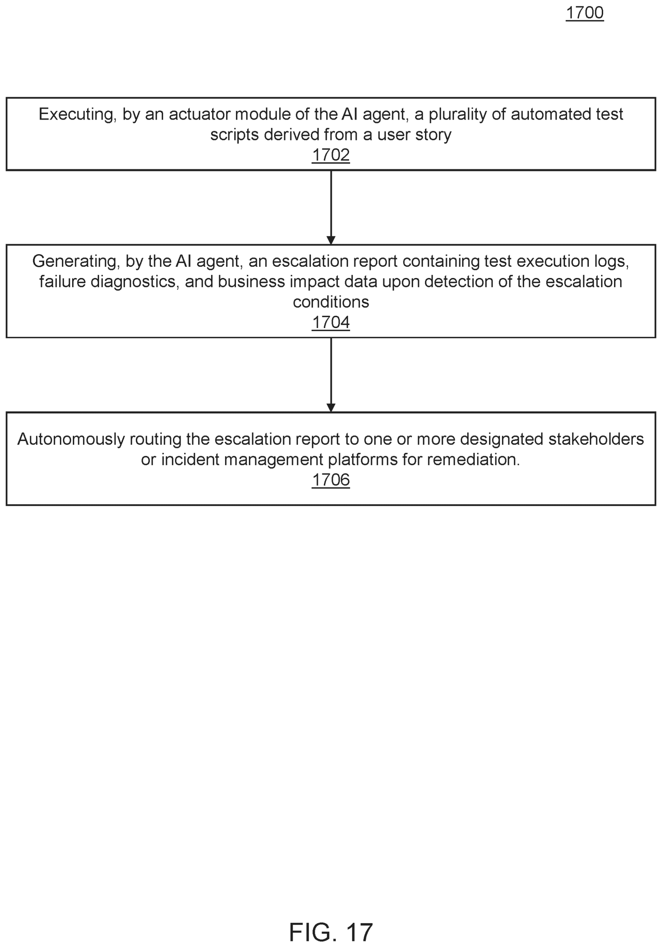

FIG. 17 illustrates a method 1700 for implementing an autonomous escalation mechanism within an AI agent-based test automation system. At step 1702, the actuator module of the AI agent executes a plurality of automated test scripts derived from one or more user stories using integrated automation frameworks, such as Selenium for UI testing, REST Assured for API testing, or Cypress for full-stack testing. During execution, the actuator streams telemetry data-including system logs, HTTP traces, and resource consumption metrics-to a centralized observability platform.

At step 1704, the reasoning engine monitors the execution results for escalation conditions using a severity classification engine. This engine may be configured with rule-based thresholds or machine learning models trained to detect anomalies, including but not limited to, sustained critical test failures, performance regressions exceeding service-level objectives (SLOs), or failures affecting high-priority user journeys (e.g., payment workflows or authentication modules). Upon detecting an escalation condition, at step 1706, the Al agent generates a structured escalation report, which may include enriched diagnostic data, such as stack traces, historical failure patterns, failed step details, environmental configurations (e.g., browser versions, API endpoints), and computed business impact scores derived from risk models.

At step 1708, the Al agent autonomously routes the escalation report to designated escalation channels. This may include automatically generating high-priority tickets within service management systems (e.g., ServiceNow, Jira Service Management), triggering incident workflows via integrations with platforms such as PagerDuty or Opsgenie, and notifying specific stakeholders (e.g., QA leads, DevOps engineers, or product owners) via email or team collaboration tools (e.g., Slack or Microsoft Teams). The escalation mechanism may also trigger automated mitigation actions, such as halting deployments or quarantining unstable releases in a CI/CD pipeline.

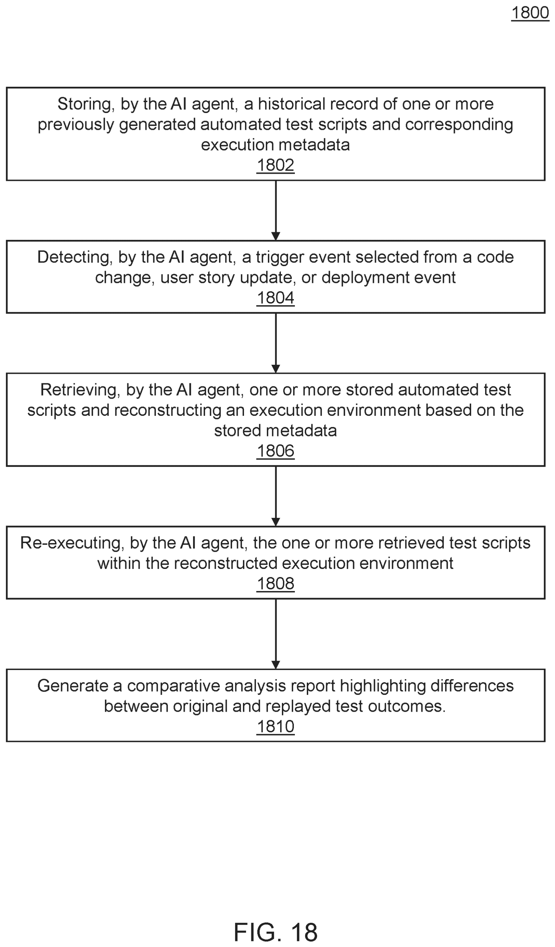

FIG. 18 depicts a method 1800 for enabling autonomous replay of test cases by the Al agent. At step 1802, the Al agent stores a historical record of previously generated automated test scripts and their corresponding execution metadata. This metadata may include contextual information such as environment configurations (e.g., operating system versions, API base URLs, container images), previous execution results, and dynamic runtime variables.

At step 1804, the Al agent continuously monitors for trigger events, such as source code commits, user story updates in project management tools (e.g., changes in Jira issues), or the deployment of new builds in a CI/CD pipeline. Upon detecting such an event, at step 1806, the AI agent retrieves one or more historical test scripts linked to the affected user story or application component.

At step 1808, the Al agent reconstructs the original execution environment using infrastructure-as-code templates (e.g., Terraform, Ansible, or Kubernetes Helm charts), ensuring that the replay occurs under the same or comparable conditions as the initial execution. The agent re-executes the retrieved test scripts, performing both functional and non-functional validations, such as load testing, regression testing, or security checks.

At step 1810, the AI agent generates a comprehensive comparative analysis report. This report may include side-by-side comparisons of key metrics-such as response times, error rates, pass/fail status, and resource utilization-between the original and replayed executions. The agent may apply diffing algorithms to highlight behavioral deviations or anomalies and provide actionable recommendations to stakeholders.

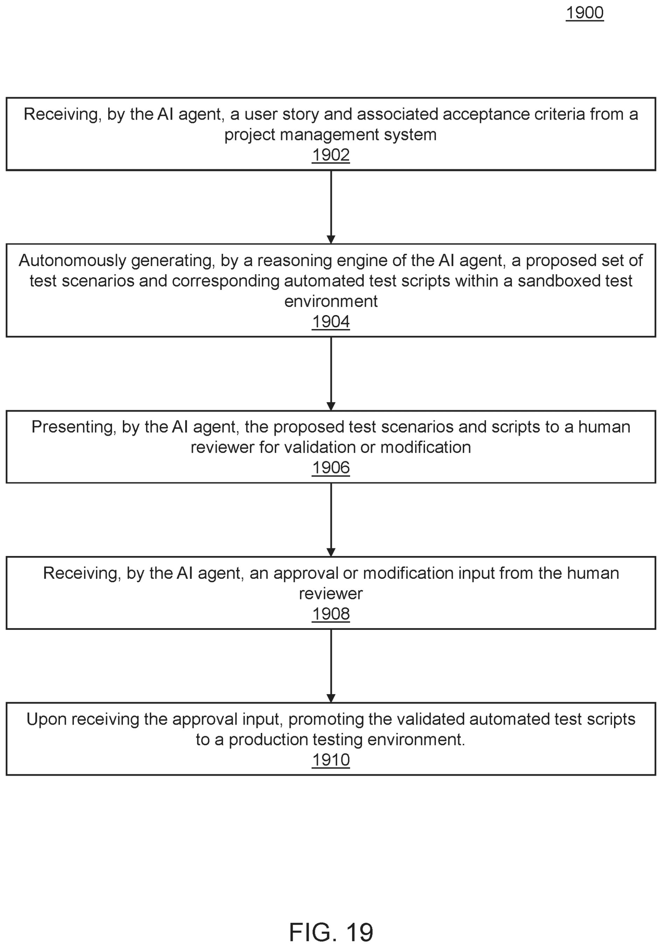

FIG. 19 illustrates a method 1900 for deploying a semi-autonomous AI agent within a sandboxed environment. At step 1902, the Al agent receives a user story and its associated acceptance criteria from a project management system (e.g., Jira, Azure Boards). At step 1904, the reasoning engine autonomously generates a proposed set of test scenarios and corresponding automated test scripts within an isolated, sandboxed test environment. The sandbox may be implemented as a virtualized or containerized replica of the production system, with controlled network configurations and restricted access to external services.

At step 1906, the agent presents the proposed test scenarios and test scripts to a human reviewer via an interactive dashboard. The dashboard may provide visualizations of extracted user intents, generated Given-When-Then scenarios, and the corresponding automation code in languages such as Python or JavaScript. The reviewer may inspect the generated assets, review metadata such as test coverage metrics and identified edge cases, and provide comments or corrections.

At step 1908, the Al agent receives reviewer input, which may include acceptance, rejection, or modification instructions for the generated test scripts. Following approval, at step 1910, the agent promotes the validated test scripts from the sandbox to a production environment, committing them to a version-controlled repository (e.g., GitHub, GitLab) and integrating them into live CI/CD pipelines for subsequent execution. The sandboxed workflow enables a safe and auditable review process, minimizing risks associated with fully autonomous deployment while still benefiting from the efficiency of AI-driven automation.

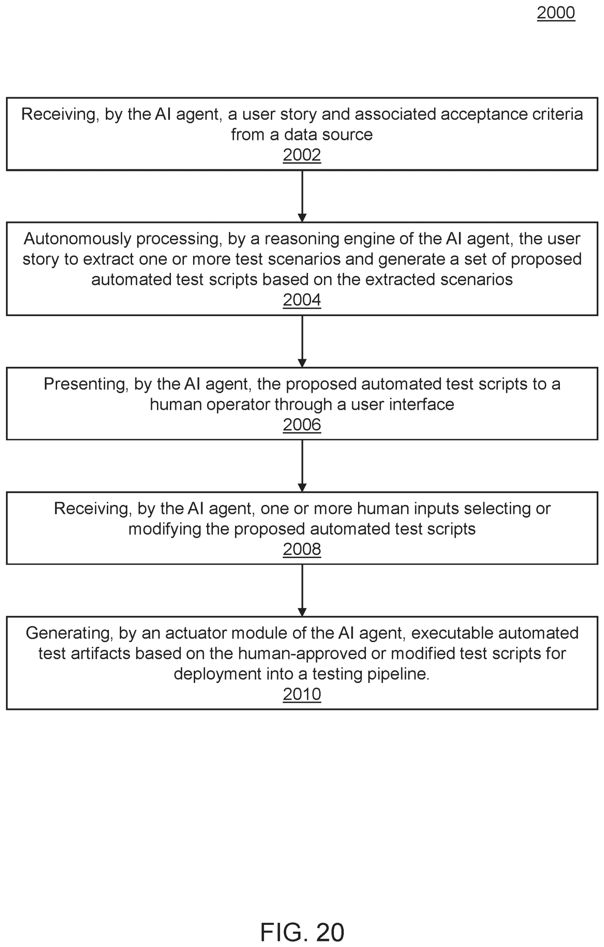

FIG. 20 depicts a method 2000 for operating an attended AI agent in a human-in-the-loop configuration. At step 2002, the agent receives a user story and its associated acceptance criteria from a data source, which may be a project management tool or requirements database. At step 2004, the reasoning engine autonomously processes the user story to extract one or more test scenarios, utilizing techniques such as semantic parsing, entity extraction, and scenario synthesis based on historical project patterns.

At step 2006, the agent presents the generated automated test scripts to a human operator through an integrated user interface. This user interface may be embedded directly within development environments (e.g., VS Code, IntelliJ IDEA), project management systems, or custom web dashboards. The interface may allow the human operator to view, edit, and augment the proposed test scripts before confirming or rejecting the agent's output.

At step 2008, the agent receives operator input selecting specific test scenarios, modifying test logic, or introducing additional acceptance criteria to improve test quality. Finally, at step 2010, the actuator module generates fully executable test artifacts based on the human-approved or modified scripts and deploys them into a testing pipeline. This attended workflow ensures that human oversight is incorporated into the automated test generation process, particularly for high-risk or complex user stories, while still benefiting from Al-driven efficiency.

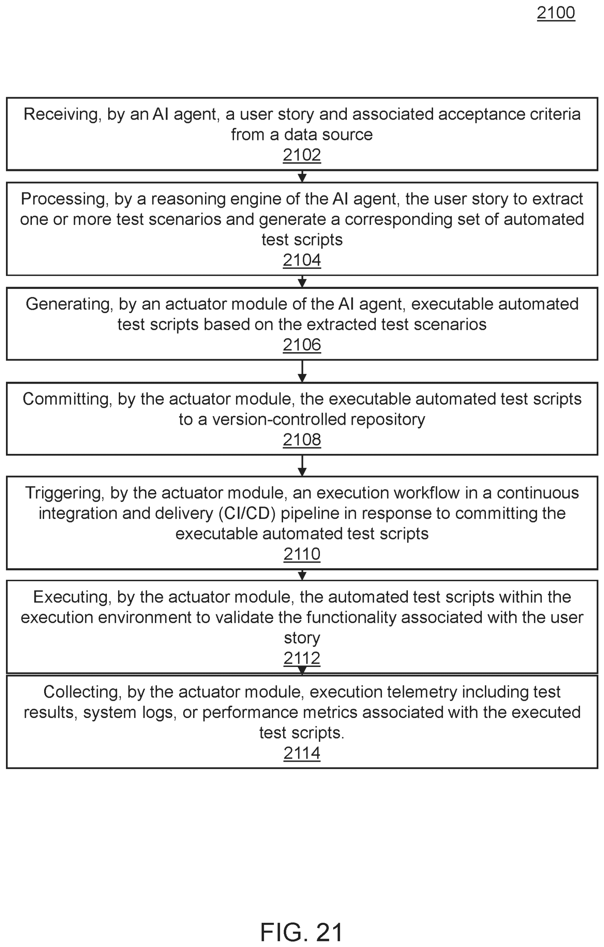

Referring now to FIG. 21, a method 2100 is illustrated for autonomously generating and executing automated test scripts using an Al agent. At step 2102, the AI agent receives a user story and associated acceptance criteria from a data source, such as a project management platform, requirements repository, or other structured or unstructured data source. The received input provides the foundation for downstream test generation and automation.

At step 2104, the reasoning engine of the AI agent processes the user story to extract one or more test scenarios and generate a corresponding set of automated test scripts. The reasoning engine may leverage natural language processing techniques and domain-specific models to identify user intents, system actions, and acceptance criteria, which are subsequently transformed into structured test scripts.

At step 2106, the actuator module of the Al agent generates executable automated test scripts based on the extracted test scenarios. The generated scripts may be formatted in a manner compatible with automation frameworks, such as Selenium, Playwright, or REST Assured.

At step 2108, the actuator module commits the executable automated test scripts to a version-controlled repository, such as a Git-based system (e.g., GitHub or GitLab). This commit operation triggers downstream automation workflows.

At step 2110, the actuator module triggers an execution workflow in a continuous integration and delivery (CI/CD) pipeline in response to committing the test scripts. The triggered pipeline may provision or identify an available execution environment configured to run the test scripts.

At step 2112, the actuator executes the automated test scripts within the execution environment to validate the functionality associated with the user story. The execution environment may be a containerized, virtualized, or cloud-hosted system configured to mirror production or staging conditions.

At step 2114, the actuator module collects execution telemetry, which may include test results (e.g., pass/fail status), system logs, performance metrics, and other diagnostic information associated with the executed test scripts. The telemetry may be used for reporting, monitoring, and subsequent decision-making processes, such as escalation or replay workflows.

The process flow illustrated in FIG. 21 represents a fully autonomous workflow from test generation through execution and telemetry collection, supporting continuous testing in an enterprise software development environment.

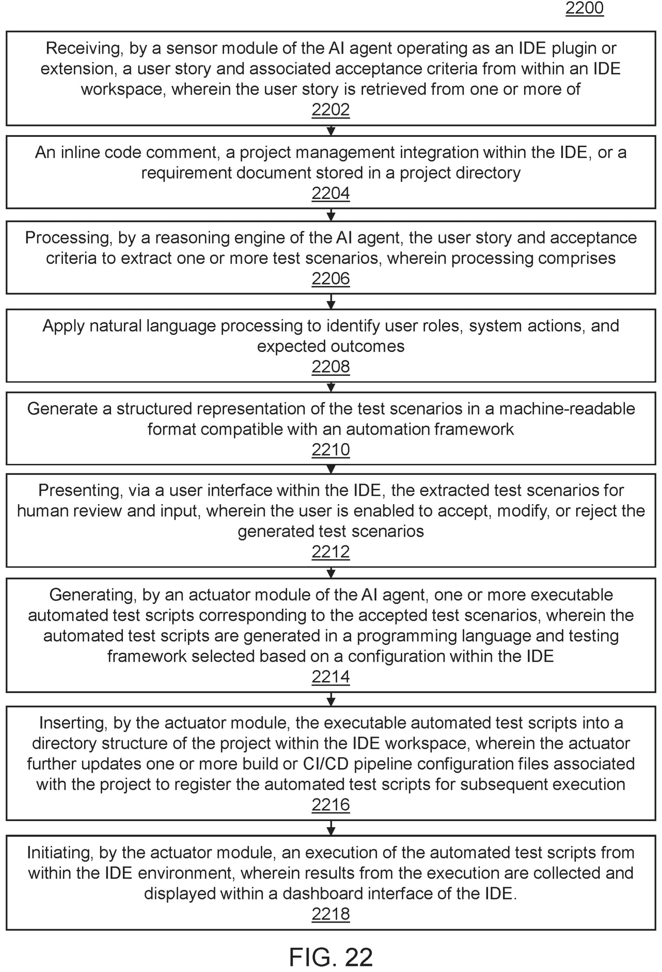

FIG. 22 illustrates a method 2200 performed by an Al agent integrated within an Integrated Development Environment (IDE) for autonomously and semi-autonomously generating and executing automated test scripts from user stories and acceptance criteria.

In step 2202, the sensor module of the AI agent operates as an IDE-native plugin or extension configured to retrieve user stories and acceptance criteria from multiple sources within the IDE workspace. The sensor may leverage the IDE's API to parse inline code comments embedded in source code files (e.g., comments tagged with identifiers such as @UserStory or @AcceptanceCriteria), or listen for updates in IDE-integrated project management boards such as Jira or Azure DevOps Panels accessible via embedded APIs. Additionally, the sensor may be equipped with file-watching functionality capable of detecting and reading requirement documents, such as markdown (.md), YAML (.yml), or JSON (.json) files located within predefined directories of the project's root folder or subdirectories. In some embodiments, the sensor may also leverage natural language ingestion pipelines combined with tokenization and named entity recognition (NER) to preprocess unstructured or semi-structured documents found in the workspace.

In step 2204, the ingested user story data is transmitted to the reasoning engine of the Al agent. At this stage, the reasoning engine applies multi-stage natural language processing (NLP) techniques, including dependency parsing, semantic role labeling, and transformer-based models (e.g., fine-tuned BERT or domain-specific GPT models). Specifically, at 2206, the NLP pipeline analyzes the text to identify key elements such as user roles (e.g., "registered customer"), system actions (e.g., "reset password"), and expected outcomes (e.g., "receive reset link via email"). The reasoning engine further resolves coreferences and disambiguates terms using contextual embeddings derived from the surrounding text and project-specific ontologies.

Following semantic extraction, at step 2208, the reasoning engine converts the extracted elements into a machine-readable representation. This representation may be implemented as a structured "Given-When-Then" scenario in Gherkin syntax or as a structured data object (e.g., JSON or XML) that includes fields for preconditions, actions, expected results, and metadata such as priority, tags, or environmental variables. The reasoning engine may also enrich the scenario with inferred edge cases, negative conditions, or additional acceptance criteria, using machine learning models trained on historical project data or domain-specific corpora.

At step 2210, the AI agent renders the extracted scenarios within an interactive panel or sidebar embedded directly into the IDE interface. The user interface may be implemented using the IDE's extension APIs, leveraging frameworks such as Electron or React for dynamic rendering. The panel allows human users to interact with the AI-generated scenarios via dropdown menus, editable text fields, or contextual action buttons. Developers and testers may accept scenarios as-is, modify scenario steps or parameters, or reject and request regeneration, all within the familiar context of the IDE.

Upon receiving user approval of one or more scenarios, the actuator module proceeds to step 2212, where it autonomously generates executable automated test scripts. The actuator selects the appropriate test framework based on project-level settings retrieved from IDE configuration files (e.g., .vscode/settings.json or project.xml for Maven-based projects). In one embodiment, the actuator may employ template-driven code generation or AI-assisted code synthesis to produce automation scripts compatible with frameworks such as Selenium WebDriver, Cypress, Playwright, or REST Assured. The actuator generates test code in the target programming language (e.g., Python, JavaScript, Java) following project-specific style guides and best practices, such as test annotations, reusable page objects, or API client libraries.

In step 2214 (corresponding to FIG. 22), the actuator inserts the generated test scripts directly into the appropriate directory structure within the IDE workspace. This insertion may include creating or updating test suite files (e.g., test_login.py, reset_password.spec.js), establishing directory hierarchies (e.g., /tests/ui/ or /tests/api/), and appending the new scripts to testing framework configuration files, such as pytest.ini or cypress.json. The actuator may further modify or generate CI/CD pipeline configurations stored locally within the project repository, such as .gitlab-ci.yml, Jenkinsfile, or GitHub Actions workflow files (.github/workflows/test.yml), to ensure that the new tests are registered for automated execution during subsequent pipeline runs.

In step 2216 (depicted in FIG. 22), the actuator triggers test execution directly from within the IDE environment. This may involve launching a local test runner through the IDE's integrated terminal, triggering a Dockerized execution environment (e.g., using Docker Compose), or invoking remote CI/CD pipelines via API calls (e.g., GitHub Actions REST API). During execution, the actuator collects telemetry data, including pass/fail status, logs, screenshots of UI interactions (for Ul-based tests), HTTP response traces (for API tests), and performance metrics.

Finally, at step 2218, the actuator displays the collected results within an integrated dashboard embedded in the IDE. The dashboard may include interactive charts, detailed logs, test step visualizations, and links to associated defect tickets or user stories. In some embodiments, the dashboard may be built using web technologies such as HTML, CSS, and JavaScript, rendered within a webview provided by the IDE plugin framework. The developer or tester can review results, rerun failed tests, or initiate debugging workflows without leaving the IDE interface.

This IDE-integrated embodiment facilitates real-time collaboration between AI agents and human developers, offering seamless automation support within the developer's primary workspace and enabling efficient end-to-end test generation, execution, and validation workflows.

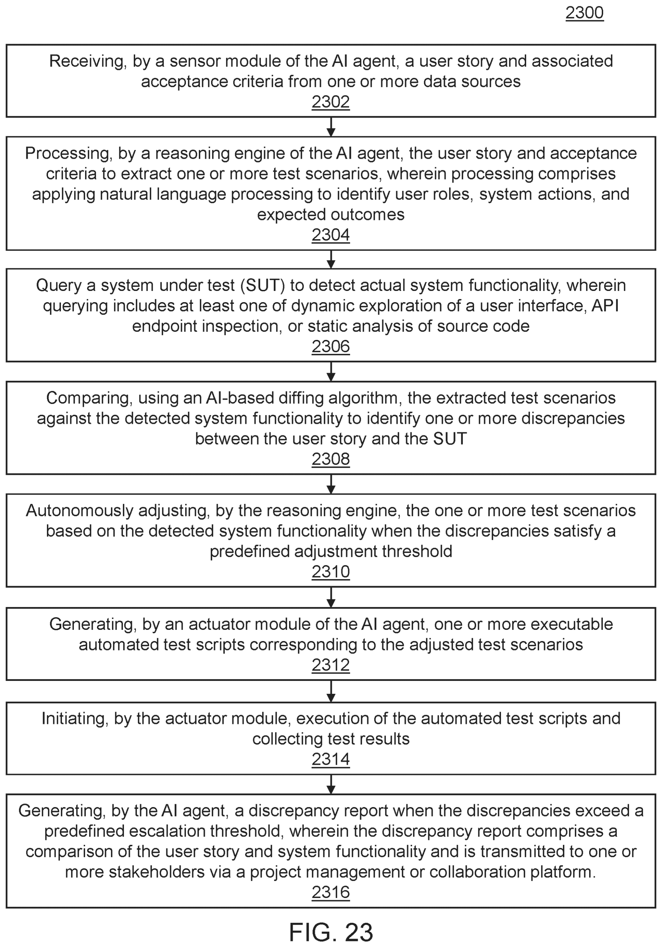

FIG. 23 illustrates a method 2300 for autonomously detecting and handling discrepancies between user stories and actual system implementations by an Al agent. This method enables the AI agent to ensure alignment between business-level requirements and the system under test (SUT) through dynamic system interrogation and Al-powered scenario adjustments.

At step 2302, the Al agent's sensor module receives a user story and associated acceptance criteria from one or more data sources. The sensor may operate as a set of ingestion pipelines configured to pull user stories from project management tools (e.g., Jira, Azure Boards), requirement documentation repositories (e.g., Confluence, SharePoint), or directly from files stored in a version control system (e.g., markdown, JSON, YAML files within Git repositories). The sensor may also include APIs and webhooks to capture live updates or modifications to user stories, ensuring that the most recent data is processed.

At step 2304, the reasoning engine processes the ingested user story and acceptance criteria to extract one or more test scenarios. This step is implemented using advanced natural language processing (NLP) models, such as transformer-based language models fine-tuned for the software testing domain. The reasoning engine performs entity recognition to extract user roles (e.g., "administrator," "registered user"), actions (e.g., "reset password," "submit form"), and expected system outcomes (e.g., "receive confirmation email"). These extracted components are then assembled into a structured representation, such as a behavior-driven development (BDD) scenario in Gherkin syntax or a custom JSON schema that outlines preconditions, test steps, and expected results.

At step 2306, the AI agent queries the system under test (SUT) to detect the actual system functionality. This querying process may involve multiple sub-modules:

A UI exploration module that uses browser automation tools (e.g., Selenium WebDriver, Playwright) to navigate through the application's graphical user interface (GUI), identifying visible UI components, navigational paths, and interactive elements such as buttons or forms.

An API inspection module that parses API specifications (e.g., OpenAPI/Swagger definitions) or sends exploratory API requests to validate available endpoints, required parameters, and response schemas.

A static analysis module that performs source code inspection, for example using abstract syntax tree (AST) analysis or static analyzers, to detect implemented features, code structures, or method signatures related to the user story.

The collected system data is forwarded to the reasoning engine for comparison.

At step 2308, the reasoning engine executes an Al-based diffing algorithm to compare the extracted test scenarios from the user story against the detected system functionality. The diffing algorithm may leverage vector embeddings to semantically match user story entities to system components, or rule-based heuristics to detect structural mismatches, such as missing UI elements or discrepancies in API endpoint naming conventions. For instance, if the user story specifies a "Forgot Password" link and the UI exploration module fails to locate such an element on the login page, the reasoning engine flags this as a discrepancy.

At step 2310, when the discrepancy satisfies a predefined adjustment threshold-such as minor deviations that do not alter the intent of the user story-the reasoning engine autonomously adjusts the extracted test scenarios to conform to the actual implementation. Adjustments may include renaming test steps to match real-world UI element selectors, updating API paths, or modifying preconditions to reflect system behaviors identified during the querying process. For example, if the SUT implements a button labeled "Recover Password" instead of "Forgot Password," the reasoning engine updates the test scenario accordingly.

At step 2312 (shown in FIG. 23), the actuator module generates one or more executable automated test scripts based on the adjusted scenarios. The actuator may generate test scripts in programming languages (e.g., Python, JavaScript, Java) aligned with project conventions, using automation frameworks such as Selenium, Cypress, or REST Assured. The actuator inserts these scripts into project repositories, configures framework dependencies, and ensures that generated scripts are CI/CD pipeline-ready by updating build configurations (e.g., Jenkinsfiles, GitHub Actions workflows).

At step 2314, the actuator module initiates execution of the generated automated test scripts, either locally or via integrated CI/CD pipelines. During execution, the system collects telemetry data including logs, test pass/fail results, screenshots, and performance metrics. This data is used both to validate the test outcomes and to further refine the conformance models within the AI agent.

At step 2316 (shown in FIG. 23), when the discrepancies identified at step 2308 exceed a predefined escalation threshold-such as critical misalignments that suggest missing functionality or broken acceptance criteria-the Al agent generates a discrepancy report. The report includes a structured comparison between the expected behaviors outlined in the user story and the actual system behaviors detected via querying. The report may include a detailed analysis of missing or modified functionality, annotated screenshots, test failure logs, and recommendations for resolution. This report is automatically routed to relevant stakeholders via project management or collaboration platforms, such as creating tickets in Jira, posting alerts in Slack or Microsoft Teams, or generating entries in integrated defect tracking systems.

This method allows the Al agent to autonomously resolve minor discrepancies while escalating major inconsistencies for human review, thereby improving test coverage, reducing false positives, and enhancing the alignment of automated tests with real-world system behaviors.

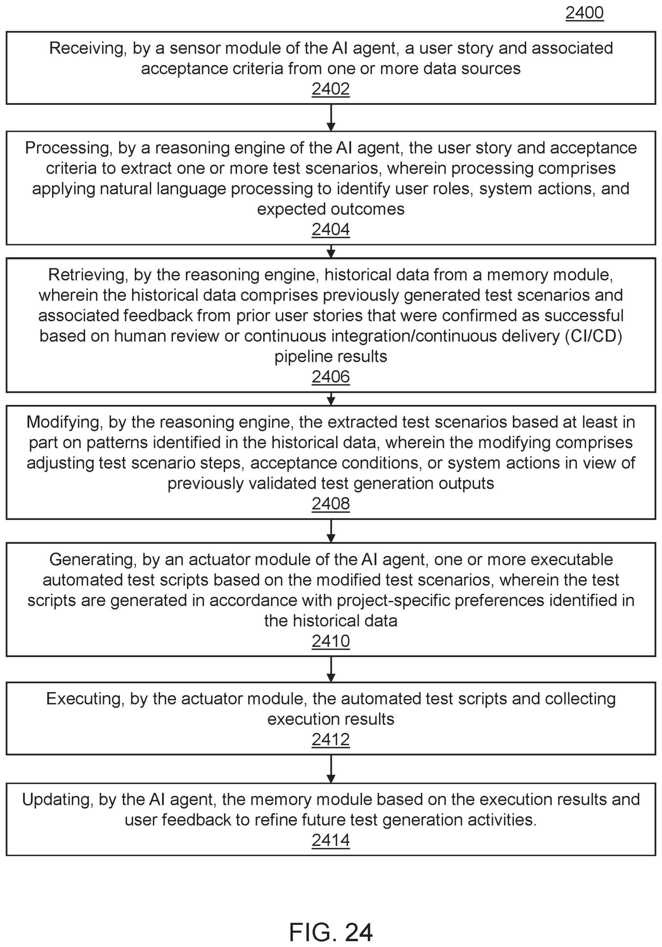

FIG. 24 illustrates a method 2400 performed by an Al agent configured with a memory-driven continuous learning module to enhance the generation and execution of automated test scripts based on historical data and real-time user feedback.

At step 2402, a sensor module of the AI agent receives a user story and associated acceptance criteria from one or more data sources. The sensor may be implemented as a combination of APIs, webhook listeners, and file system monitors configured to detect user stories and requirement artifacts from integrated project management systems (e.g., Jira, Trello), documentation platforms (e.g., Confluence), or version-controlled repositories (e.g., Git). The sensor module parses structured files (e.g., JSON, YAML, or markdown) or unstructured natural language input and transmits the extracted data to the reasoning engine.

At step 2404, the reasoning engine processes the ingested user story and acceptance criteria to extract one or more candidate test scenarios. This is achieved by applying a natural language processing (NLP) pipeline comprising syntactic parsing, entity recognition, and semantic role labeling to identify user roles, system actions, and expected outcomes described in the user story. The NLP engine may leverage pre-trained transformer models (e.g., BERT, RoBERTa) fine-tuned on software testing corpora. The output is a set of structured test scenarios formatted as Gherkin-style "Given-When-Then" statements or as structured JSON representations capturing test conditions, steps, and expected results.

At step 2406, the reasoning engine retrieves historical data from a memory module, which may be implemented as a persistent data store such as a graph database or document-based NoSQL database. The historical data includes metadata on previously generated test scenarios, associated test scripts, and feedback from prior user stories confirmed as successful based on manual review or CI/CD pipeline execution results. This data may also capture project-specific preferences such as commonly used test frameworks, coding conventions, and reusable test components.

At step 2408, the reasoning engine modifies the newly extracted test scenarios based on patterns identified in the historical data retrieved from the memory module. This modification step may involve leveraging similarity detection algorithms, such as embedding-based nearest neighbor search, to identify related past user stories and corresponding test generation patterns. The reasoning engine may automatically adjust scenario steps, acceptance criteria, or parameters to reflect practices observed in previously validated tests. For example, if prior similar user stories resulted in tests that included additional edge-case validations, such as handling of invalid user inputs or timeouts, the reasoning engine may inject similar validation steps into the current test scenarios.

At step 2410 (depicted in FIG. 24), the actuator module generates one or more executable automated test scripts based on the modified test scenarios. The actuator selects an appropriate programming language and test framework-such as Selenium with Python, Cypress with JavaScript, or REST Assured with Java-based on preferences recorded in the historical data. The actuator may also implement scaffolding logic to automatically generate boilerplate code, reusable page objects, or API client classes according to project-specific guidelines. The generated scripts are then inserted into the project repository and configured for automated execution within the associated CI/CD pipeline.

At step 2412, the actuator module initiates execution of the generated automated test scripts within the CI/CD pipeline or through a local test runner in the IDE environment. During execution, the actuator collects runtime telemetry including test pass/fail results, execution logs, error messages, screenshots (for UI-based tests), and performance metrics. These results may be aggregated in a structured format and logged for subsequent analysis.

At step 2414 (depicted in FIG. 24), the Al agent updates the memory module based on the collected execution results and any user feedback provided via the IDE interface or integrated collaboration platforms (e.g., comments left on pull requests or feedback submitted in project management tickets). The updated memory records include annotations such as success indicators, user-approved modifications, and detected defects. The system may also apply reinforcement learning or supervised learning updates to the reasoning engine's models based on the new data, enabling the Al agent to refine its future test generation processes.

This continuous learning and memory-driven adaptation ensures that the AI agent progressively improves its ability to generate high-quality automated tests aligned with project standards, user preferences, and system-specific behaviors.

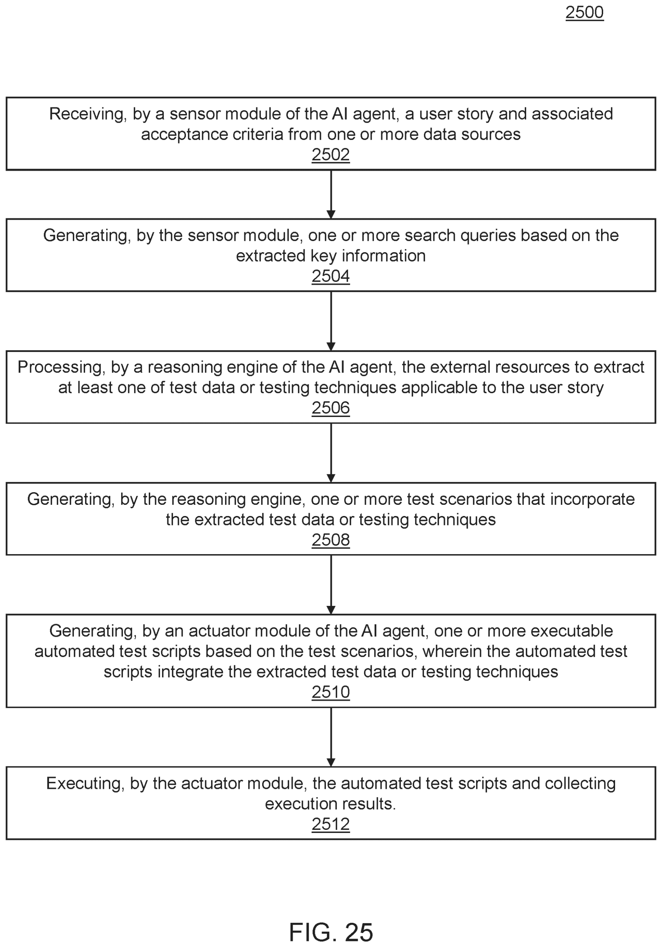

FIG. 25 illustrates a method 2500 performed by an Al agent configured with a web-augmented sensor module for enhancing automated test generation using external data sources and testing methodologies.

At step 2502, the Al agent's sensor module receives a user story and associated acceptance criteria from one or more data sources. The sensor module may integrate with various platforms such as project management systems (e.g., Jira, Trello), shared documentation repositories (e.g., Confluence, Google Docs), or source code repositories (e.g., GitHub, GitLab) to extract structured or unstructured requirement artifacts. The sensor parses the received user story using natural language processing (NLP) techniques, such as tokenization and named entity recognition, to identify key concepts, such as system actions, business logic, user roles, and target system components.

At step 2504, based on the extracted key information, the sensor module autonomously generates one or more search queries to perform a web search. The queries may be formulated by combining the extracted terms with contextually relevant keywords, such as domain-specific testing terminology, regulatory standards (e.g., PCI DSS, HIPAA), or functional testing patterns (e.g., "boundary value analysis"). For example, if the user story describes an "online payment processing feature," the sensor module may generate queries such as "payment gateway API test data," "e-commerce transaction edge cases," or "PCI DSS compliance testing strategies."

The search queries are submitted via an integrated web search component, which may include commercial search engine APIs (e.g., Google Custom Search, Bing Search API) and/or custom-built web scrapers configured to access predefined knowledge bases, open-source repositories (e.g., GitHub, Bitbucket), or QA and developer community platforms (e.g., Stack Overflow).

At step 2506, the reasoning engine processes the search results to extract external resources relevant to the user story. The external resources may include publicly available datasets, such as CSV or JSON files containing domain-specific input data (e.g., sample credit card numbers, loan amortization tables), as well as recommended testing techniques, such as regression testing patterns or API fuzzing strategies published in technical articles, tutorials, or academic papers. The reasoning engine may parse and categorize the retrieved information using NLP classifiers and entity linking algorithms, mapping the external resources to relevant parts of the user story or system actions.

At step 2508, the reasoning engine generates one or more test scenarios that incorporate the extracted test data or testing techniques. This may involve enhancing initial "Given-When-Then" scenarios derived from the user story with additional conditions, edge cases, or datasets sourced from the web search. For example, the agent may enrich a basic API test scenario by appending security tests (e.g., SQL injection payloads, malformed JSON inputs) or by integrating real-world datasets retrieved from the web into input parameter fields.

At step 2510, the actuator module generates one or more executable automated test scripts based on the enriched test scenarios. The actuator may implement test code in a project-specific programming language (e.g., Python, JavaScript, Java) using frameworks such as Selenium, Cypress, Playwright, or REST Assured. The actuator may further embed external datasets into the test scripts as fixtures or dynamically referenced data files and implement custom test logic that incorporates the testing methodologies discovered during the web search. For instance, if the reasoning engine retrieves a boundary value testing technique for a financial input field, the actuator may generate multiple test cases covering minimum, maximum, and invalid boundary conditions.

At step 2512, the actuator initiates execution of the generated automated test scripts. The execution may occur locally within an integrated development environment (IDE) or remotely within a continuous integration/continuous delivery (CI/CD) pipeline. The actuator collects execution results, including logs, pass/fail statuses, screenshots, and performance metrics, and may also annotate the tests with metadata indicating which components or data sources were retrieved externally.

This embodiment enables the Al agent to autonomously expand its test generation capabilities by leveraging external knowledge, thereby improving the coverage, robustness, and domain specificity of the generated test artifacts.

In one embodiment, a system is provided for implementing any one or more of methods 1500, 1600, 1700, 1800, 1900, 2000, 2100, 2200, 2300, 2400, or 2500 as described in FIGS. 15 through 25. The system may comprise a modular architecture including one or more Al agents, each having a sensor module, a reasoning engine, and an actuator module. The system may be deployed across various infrastructures, including cloud-native environments, on-premises data centers, and hybrid cloud deployments.

In a cloud-native deployment, the system may be hosted on public or private cloud platforms, such as Amazon Web Services (AWS), Microsoft Azure, or Google Cloud Platform (GCP). The AI agents and supporting modules may be implemented as containerized microservices orchestrated by Kubernetes (e.g., AWS Elastic Kubernetes Service (EKS), Azure Kubernetes Service (AKS), or GCP GKE). Each microservice may encapsulate a distinct functional module, such as the sensor module, reasoning engine, actuator module, escalation module, or replay module. These services may be deployed in a distributed cluster, enabling load balancing, horizontal scaling, and fault tolerance.

The cloud deployment may leverage managed services for specific components. For example, sensor modules may utilize cloud-native messaging services (e.g., AWS SQS, Google Pub/Sub) to receive and queue user story data from upstream systems. The reasoning engine may integrate with cloud-hosted Al/ML platforms (e.g., AWS SageMaker, Azure Machine Learning, or Google Al Platform) to perform model training, inference, and fine-tuning of language models or classification engines. The actuator module may integrate with cloud CI/CD pipelines, such as AWS CodePipeline or Azure DevOps Pipelines, to deploy and execute test scripts across cloud-hosted staging and production environments.

In an on-premises deployment, the system may be installed within a corporate data center, operating on physical or virtualized hardware. The Al agent modules may be deployed on application servers, each equipped with multi-core CPUs, high-capacity memory (e.g., 64 GB RAM or greater), and NVMe-based solid-state drives (SSDs) to support high-speed data ingestion and processing. In certain configurations, GPU-enabled servers may be employed to accelerate deep learning workloads within the reasoning engine. The system may operate on a virtualized platform (e.g., VMware vSphere, OpenStack) or as containerized services running on-premises Kubernetes clusters.

The on-premises deployment may include a local data bus for inter-agent communication, implemented via a message broker such as Apache Kafka or RabbitMQ. The actuator module may interface with internal CI/CD pipelines (e.g., Jenkins servers) and existing enterprise tools (e.g., ServiceNow, internal ticketing systems) for automation and escalation.

In a hybrid deployment, certain components of the system may be distributed between cloud and on-premises environments. For instance, the sensor and reasoning engine modules may operate within the on-premises infrastructure to comply with data residency or security policies, while the actuator module and CI/CD integration layer may be deployed in the cloud to leverage elastic compute resources and distributed testing infrastructure. The hybrid deployment may utilize secure communication tunnels (e.g., VPNs, AWS Direct Connect, Azure ExpressRoute) to enable secure, low-latency communication between cloud-hosted and on-premises components.

In addition, the system may include a distributed storage layer for storing test artifacts, execution logs, and telemetry. In cloud deployments, this may be implemented using object storage services (e.g., Amazon S3, Azure Blob Storage, Google Cloud Storage), while on-premises configurations may utilize network-attached storage (NAS) or distributed file systems (e.g., Ceph, GlusterFS).

The system may further include an observability stack deployed alongside AI agents to monitor system health, resource utilization, and test automation performance. This stack may consist of log shippers (e.g., Fluentd, Logstash), time-series databases (e.g., Prometheus, InfluxDB), and visualization tools (e.g., Grafana, Kibana) configured to capture and display system metrics, incident data, and test results in real time.

For enhanced security, the system may implement enterprise-grade security protocols, including zero-trust networking, role-based access controls (RBAC), API gateways for managing inter-service traffic, and encryption of sensitive data at rest and in transit using AES-256 or TLS 1.3 standards.

In summary, the system may be flexibly deployed across various enterprise environments, enabling autonomous or semi-autonomous operation of Al agents responsible for processing user stories, generating test cases, executing automated tests, handling escalations, replaying test cases, and interacting with human operators in attended or semi-attended configurations.

In one embodiment, each Al agent described herein may be implemented using a variety of physical hardware components configured to support data ingestion, processing, and automated test execution at scale.

The Al agent may be hosted on one or more computing nodes, each comprising a central processing unit (CPU), volatile memory (RAM), non-volatile storage, network interface hardware, and optional hardware accelerators. The computing nodes may be configured as bare-metal servers, rack-mounted servers, or blade servers operating within a data center or co-located environment.

The central processing unit (CPU) may include one or more multi-core processors, such as Intel Xeon or AMD EPYC processors, with support for advanced instruction sets (e.g., AVX-512) to enable parallel execution of data preprocessing, natural language processing (NLP), and orchestration tasks performed by the Al agent's sensor and actuator modules.

The volatile memory may include at least 32 GB to 512 GB or more of DDR4 or DDR5 RAM, providing sufficient capacity to handle real-time data ingestion, in-memory caching, and execution of Al inference tasks. In embodiments where multiple agents operate in a distributed environment, additional memory may be allocated for message queue buffers, execution telemetry storage, and temporary data aggregation.

The non-volatile storage subsystem may include high-throughput solid-state drives (SSDs) or NVMe-based storage arrays with capacities ranging from 1 TB to multiple petabytes, depending on system requirements. The storage may be configured to host pre-trained Al models, historical user stories, test artifacts, telemetry data, and infrastructure-as-code templates for automated test environment provisioning.

In some embodiments, the hardware may include hardware accelerators, such as NVIDIA A100 or V100 Tensor Core GPUs, AMD Instinct MI series accelerators, or Google TPUs, configured to accelerate machine learning inference workloads performed by the reasoning engine. These accelerators may be particularly beneficial for large language model (LLM) inference, deep learning-based NLU tasks, or computer vision tasks (e.g., UI element detection in self-healing test automation).

The Al agent hardware may also include network interface controllers (NICs) supporting multi-gigabit Ethernet (e.g., 10GbE, 25GbE, or 40GbE) or optical fiber connections (e.g., QSFP28 interfaces), enabling high-bandwidth communication with upstream systems (e.g., project management tools, data repositories) and downstream systems (e.g., CI/CD pipelines, cloud orchestration platforms). Redundant NIC configurations may be deployed to ensure fault tolerance and high availability.

In some embodiments, the Al agent may be implemented on hyperconverged infrastructure (HCI) platforms, such as Nutanix, Dell VxRail, or Cisco HyperFlex, where compute, storage, and networking are integrated into a unified appliance to simplify deployment and scaling.

Alternatively, the AI agent may operate on edge computing devices for localized deployment scenarios, such as lightweight industrial PCs or embedded systems (e.g., NVIDIA Jetson series, Intel NUCs) for smaller-scale, remote operations where proximity to the source system is advantageous (e.g., near-site validation environments).

Each physical hardware instance hosting the Al agent may also include redundant power supplies, hardware-based security modules (e.g., TPM chips for secure key storage), and out-of-band management interfaces (e.g., iDRAC, iLO) for remote hardware-level monitoring and maintenance.

For distributed deployments, multiple agent nodes may be organized into clusters, interconnected via a high-speed data bus, such as InfiniBand or high-performance Ethernet fabrics, and managed via Kubernetes or other orchestration platforms, enabling scalable and fault-tolerant operations.

The hardware platform may also be integrated with dedicated load balancers, firewalls, and hardware security appliances, enabling the Al agent to comply with enterprise-grade security policies and to facilitate high-availability (HA) configurations with active-active or active-passive failover support.

In some embodiments, the methods described herein, including but not limited to those illustrated in FIGS. 15 through 25, may be implemented as computer-executable instructions stored on a non-transitory computer-readable storage medium. The storage medium may include, for example, a magnetic disk, an optical disk, a flash memory device, a solid-state drive, or other tangible media capable of storing program code and data. When executed by one or more processors, the computer-executable instructions may cause a computing system or an Al agent, as described herein, to perform any of the steps associated with the autonomous or semi-autonomous generation, execution, escalation, or replay of automated test scripts, as well as any multi-agent workflows described in this disclosure. The non-transitory computer-readable storage medium may further store machine learning models, configuration files, test artifacts, and other data necessary to implement the methods and systems described in this specification.

Although various embodiments of the present invention have been described in detail with reference to certain exemplary configurations, it should be understood that the invention is not limited to the precise embodiments disclosed herein. Rather, it will be apparent to persons skilled in the art that various changes, modifications, or improvements may be made to the described embodiments without departing from the spirit and scope of the invention as defined by the appended claims.

For example, while specific examples of AI agents, automation frameworks, deployment architectures, and testing workflows have been described, other variations, such as different programming languages, machine learning models, or orchestration tools, may be substituted without departing from the inventive concept.

In addition, individual components, modules, or steps described in connection with one embodiment may be combined, separated, or substituted with elements from other embodiments where appropriate, depending on system requirements and implementation preferences. The system, methods, and modules described herein may also be implemented using combinations of hardware, software, firmware, or cloud-based services, unless explicitly stated otherwise.

Accordingly, the invention is intended to be limited only by the scope of the claims, and all equivalents thereof.

The computer program can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

## Claims

1. A computer-implemented method for autonomous replay of automated test cases by an AI agent, the method comprising:
storing, by the Al agent, a historical record of one or more previously generated automated test scripts and corresponding execution metadata;
detecting, by the AI agent, a trigger event selected from a code change, user story update, or deployment event;
retrieving, by the Al agent, one or more stored automated test scripts and reconstructing an execution environment based on the stored metadata;
re-executing, by the AI agent, the one or more retrieved test scripts within the reconstructed execution environment; and
generating a comparative analysis report highlighting differences between original and replayed test outcomes.

2. A computer-implemented method for semi-autonomous generation of automated tests using an AI agent operating within a sandbox environment, the method comprising:
receiving, by the AI agent, a user story and associated acceptance criteria from a project management system;
autonomously generating, by a reasoning engine of the Al agent, a proposed set of test scenarios and corresponding automated test scripts within a sandboxed test environment;
presenting, by the Al agent, the proposed test scenarios and scripts to a human reviewer for validation or modification;
receiving, by the AI agent, an approval or modification input from the human reviewer; and
upon receiving the approval input, promoting the validated automated test scripts to a production testing environment.

3. A computer-implemented method for generating automated test cases using a semi-attended AI agent, the method comprising:
receiving, by the AI agent, a user story and associated acceptance criteria from a data source;
autonomously processing, by a reasoning engine of the Al agent, the user story to extract one or more test scenarios and generate a set of proposed automated test scripts based on the extracted scenarios;
presenting, by the AI agent, the proposed automated test scripts to a human operator through a user interface;
receiving, by the Al agent, one or more human inputs selecting or modifying the proposed automated test scripts; and
generating, by an actuator module of the Al agent, executable automated test artifacts based on the human-approved or modified test scripts for deployment into a testing pipeline.

4. The method of claim 1, wherein the AI agent comprises distinct sensor, reasoning, and actuator modules operating within a distributed software architecture.

5. The method of claim 1, wherein the execution metadata includes at least one of: software version identifiers, environment variables, or dependency configurations.

6. The method of claim 1, wherein the trigger event comprises a notification received from a version control system upon a committed code change.

7. The method of claim 1, wherein reconstructing the execution environment comprises instantiating a containerized environment configured to match the original runtime conditions.

8. The method of claim 1, further comprising prioritizing the retrieved test scripts based on a failure rate metric derived from prior executions.

9. The method of claim 1, wherein generating the comparative analysis report comprises identifying discrepancies in final state variables between the original and replayed test executions.

10. The method of claim 2, wherein the sandboxed test environment is provisioned within a virtualized infrastructure that is isolated from production systems.

11. The method of claim 2, wherein generating the proposed test scenarios comprises applying natural language processing to extract user intents and expected outcomes from the user story.

12. The method of claim 2, wherein presenting the proposed test scenarios comprises displaying a preview of each test scenario within a graphical user interface.

13. The method of claim 2, wherein receiving the approval or modification input comprises capturing annotations or comments applied to individual test steps.

14. The method of claim 2, wherein promoting the validated automated test scripts comprises storing the scripts in a version control repository associated with a continuous integration pipeline.

15. The method of claim 2, wherein the Al agent is configured to operate in a selectable mode including a fully autonomous mode and a semi-autonomous mode requiring human validation.
